# EUROPEAN PATENT APPLICATION

(11) **EP 4 803 403 A1**
(43) Date of publication of application: **09.09.2026**
(21) Application number: 24884860.8
(22) Date of filing: 30.10.2024
(51) Int. Cl.: B62D 21/02, B62D 25/00, B60K 1/04

(54) **VEHICLE**

(30) Priority: 30.10.2023 CN 202311432555
(71) Applicant: BYD Company Limited, Shenzhen, Guangdong 518118 (CN)
(72) Inventor: LIANG, Darong, Shenzhen, Guangdong 518118 (CN); ZHANG, Jianqiang, Shenzhen, Guangdong 518118 (CN); TIAN, Hongsheng, Shenzhen, Guangdong 518118 (CN); LIU, Tengyong, Shenzhen, Guangdong 518118 (CN); YAN, Junfei, Shenzhen, Guangdong 518118 (CN)
(74) Representative: Mathys & Squire
(86) International application number: PCT/CN2024/128674
(87) International publication number: WO 2025/092860

(57) **Abstract**

A vehicle is provided, including a sill beam and a battery pack mounting member. The battery pack mounting member is connected to at least one end portion of the sill beam in a front-rear direction, the battery pack mounting member is formed with a battery pack mounting surface, and the battery pack mounting member is an integral member.

## Description

### CROSS-REFERENCE TO RELATED APPLICATIONS

This application claims priority to Chinese Patent Application No. 202311432555.9, filed with the China National Intellectual Property Administration on October 30, 2023 and entitled "VEHICLE", which is incorporated herein by reference in its entirety.

### TECHNICAL FIELD

The present disclosure relates to the field of vehicle technologies, and specifically, to a vehicle.

### BACKGROUND

In a front-rear direction of a vehicle, a front longitudinal beam, a sill beam, and a rear longitudinal beam are usually connected successively in the front-rear direction. The front longitudinal beam, the sill beam, and the rear longitudinal beam form a force transfer path in the front-rear direction of the vehicle. However, in related technologies, parts of a front end of the front longitudinal beam that are connected to the sill beam are connected together through splicing by using a plurality of sheet metal parts (which are usually more than ten to more than twenty sheet metal parts). Consequently, not only a lapping edge redundancy structure exists between a plurality of sheet metal parts, but also strength of a connection region is distributed in a stepped pattern, which affects connection rigidity between the front longitudinal beam and the sill beam, thereby affecting transfer of a collision force in the front-rear direction of the vehicle during a rear collision of the vehicle.

### SUMMARY

The present disclosure provides a vehicle, to at least partially resolve a problem in the related technologies.

The present disclosure provides a vehicle, including a sill beam and a battery pack mounting member. The battery pack mounting member is connected to at least one end portion of the sill beam in a front-rear direction, the battery pack mounting member is formed with a battery pack mounting surface, and the battery pack mounting member is an integral member.

Optionally, the battery pack mounting member is of an integrally formed structure.

Optionally, the battery pack mounting member is connected to a front-side end portion of the sill beam in the front-rear direction.

Optionally, a front longitudinal beam is further included. In the front-rear direction of the vehicle, the battery pack mounting member is disposed in rear of the front longitudinal beam, and the front longitudinal beam is connected to the battery pack mounting member.

Optionally, the front longitudinal beam, the battery pack mounting member, and the sill beam form a force transfer path from the front of the vehicle to the rear of the vehicle.

Optionally, at least one of the front longitudinal beam and the sill beam is detachably connected to the battery pack mounting member.

Optionally, the front longitudinal beam is detachably connected to the battery pack mounting member.

Optionally, an A-pillar is further included. The battery pack mounting member is connected to the A-pillar.

Optionally, a projection of the battery pack mounting member in a width direction of the vehicle at least partially overlaps a projection of the A-pillar in the width direction of the vehicle.

Optionally, a front wall plate is further included. The battery pack mounting member is connected to the front wall plate, the A-pillar, and the sill beam.

Optionally, a first end of the battery pack mounting member is connected to the front longitudinal beam of the vehicle, and a second end of the battery pack mounting member is connected to the sill beam.

Optionally, a cross-sectional area of the battery pack mounting member on one side close to the sill beam is greater than a cross-sectional area of the battery pack mounting member on one side close to the front longitudinal beam.

Optionally, a battery pack is included. The battery pack is directly connected to at least one of the battery pack mounting member and the sill beam.

Optionally, a battery pack is further included. A projection of a corner of the battery pack in a height direction of the vehicle is located in a projection of the battery pack mounting member in the height direction of the vehicle.

Optionally, the battery pack is provided with a battery pack mounting member mounting point, the battery pack is connected to the battery pack mounting member through the battery pack mounting member mounting point, and a minimum distance between the battery pack mounting member mounting point and the corner is less than a preset distance.

Optionally, the preset distance is 1/4 of a distance from the corner to an adjacent corner in the width direction of the vehicle.

Optionally, the preset distance is 1/4 of a maximum distance from a left-side edge to a right-side edge of the battery pack.

Optionally, two battery pack mounting members are spaced in the width direction of the vehicle, the vehicle further includes a front wall lower cross beam, and two ends of the front wall lower cross beam are respectively connected to the two battery pack mounting members.

Optionally, the front wall lower cross beam is connected to the battery pack of the vehicle.

Optionally, the front wall lower cross beam is directly connected to the battery pack.

Optionally, the front wall lower cross beam is of an integrally formed structure.

Optionally, a cross beam mounting surface is disposed on a bottom surface of the front wall lower cross beam, a battery pack mounting member mounting surface is disposed on the battery pack mounting member, and the cross beam mounting surface and the battery pack mounting member mounting surface form a battery pack mounting surface.

Optionally, the cross beam mounting surface and the battery pack mounting member mounting surface are located on a same horizontal plane.

Optionally, a projection of at least one of the front wall lower cross beam and the battery pack mounting member in the height direction of the vehicle at least partially overlaps a projection of a battery cell of the battery pack in the height direction of the vehicle.

Optionally, at least a partial bottom surface of the sill beam forms the battery pack mounting surface.

Optionally, a projection of the sill beam in the height direction of the vehicle at least partially overlaps the projection of the battery cell of the battery pack of the vehicle in the height direction of the vehicle.

Optionally, the cross beam mounting surface, the battery pack mounting member mounting surface, and at least the partial bottom surface of the sill beam form the battery pack mounting surface.

Optionally, the cross beam mounting surface, the battery pack mounting member mounting surface, and at least the partial bottom surface of the sill beam are located on a same horizontal plane.

Optionally, the battery pack mounting member is hermetically connected to the front wall lower cross beam.

Optionally, the battery pack mounting member is provided with a front wall lower cross beam connection portion, the front wall lower cross beam is provided with a second connection member connection portion, and the front wall lower cross beam connection portion is connected to the second connection member connection portion; and the second connection member connection portion is located on an upper side of the front wall lower cross beam connection portion in the height direction of the vehicle.

Optionally, the front wall lower cross beam is connected to a rear side of the battery pack mounting member.

Optionally, a first cross beam connected between the two battery pack mounting members is further included.

Optionally, the first cross beam is hermetically connected to the battery pack mounting member.

Optionally, the first cross beam is located on an upper side of the front wall lower cross beam in the height direction of the vehicle.

Optionally, the first cross beam is located on a front side of the front wall lower cross beam in the front-rear direction of the vehicle.

Optionally, the battery pack mounting member is provided with a first cross beam connection portion, the first cross beam is provided with a first connection member connection portion, and the first cross beam connection portion is connected to the first connection member connection portion; and the first connection member connection portion is located on an upper side of the first cross beam connection portion in the height direction of the vehicle.

Optionally, the first cross beam is connected to the rear side of the battery pack mounting member.

Optionally, a center tunnel is further included. The center tunnel is connected to the first cross beam.

Optionally, a projection of the first cross beam in the front-rear direction of the vehicle at least partially overlaps a projection of the center tunnel in the front-rear direction of the vehicle.

Optionally, a cross section of the first cross beam is constructed to be in a " 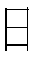 " shape, and a third intermediate rib of the first cross beam is flush with an upper surface of the center tunnel.

Optionally, the center tunnel is connected to the front wall lower cross beam.

Optionally, a projection of the front wall lower cross beam in the front-rear direction of the vehicle at least partially overlaps the projection of the center tunnel in the front-rear direction of the vehicle.

Optionally, a front subframe mounting point is formed on the battery pack mounting member, and the front subframe mounting point is suitable for being connected to a front subframe assembly of the vehicle.

Optionally, the battery pack mounting member includes a first mounting portion, the first mounting portion is directly connected to the A-pillar of the vehicle, and at least a part of the first mounting portion is located on a front side of the A-pillar.

Optionally, the battery pack mounting member further includes a second mounting portion, and the second mounting portion is connected to a side of the A-pillar that faces a passenger compartment of the vehicle.

Optionally, the second mounting portion is connected to the sill beam.

Optionally, the sill beam includes a body beam and a sill reinforcement beam located inside the body beam, the second mounting portion is connected to the sill reinforcement beam, and the second mounting portion is located on a side of the sill reinforcement beam that faces the passenger compartment.

Optionally, the sill beam further includes: a sill inner plate and a sill outer plate, wherein the sill inner plate and the sill outer plate enclose and form the body beam; and a first insert block. The second mounting portion is successively connected to the sill inner plate, the first insert block, and the sill reinforcement beam.

Optionally, a projection of the sill reinforcement beam in the width direction of the vehicle at least partially overlaps a projection of the second mounting portion in the width direction of the vehicle.

Optionally, a bottom surface of the second mounting portion and a mounting surface of the sill beam are located on a same horizontal plane.

Optionally, a battery pack is further included. At least a part of a top surface of the battery pack is formed a vehicle floor.

Optionally, the battery pack of the vehicle is hermetically connected to the cross beam mounting surface, the battery pack mounting member mounting surface, and at least a partial bottom surface of the sill beam.

Optionally, a sealing member is further included. The battery pack is hermetically connected to the cross beam mounting surface, the battery pack mounting member mounting surface, and at least the partial bottom surface of the sill beam through the sealing member.

Optionally, the battery pack mounting member is provided with a third reinforcement rib, and the third reinforcement rib extends from the front longitudinal beam of the vehicle to the A-pillar.

According to the foregoing technical solutions, this design can improve a degree of integration of the battery pack mounting member, simplify an assembly process, and facilitate lightweighting of the vehicle. In addition, strength of a battery pack mounting point can be better improved.

Other features and advantages of the present disclosure will be described in detail in the subsequent description of embodiments.

### BRIEF DESCRIPTION OF DRAWINGS

The accompanying drawings are intended to provide a further understanding of the present disclosure and constitute a part of the specification, and are used together with the following specific implementations to explain the present disclosure, but do not constitute a limitation on the present disclosure. In the accompanying drawings:
FIG. 1 is a schematic diagram of a vehicle side view of a vehicle according to an implementation of the present disclosure;
FIG. 2 is an exploded schematic diagram of a vehicle side view of a vehicle according to an implementation of the present disclosure;
FIG. 3 is a schematic diagram of a vehicle bottom-view three-dimensional structure of a vehicle according to an implementation of the present disclosure;
FIG. 4 is a schematic cross-sectional view along N-N in FIG. 1;
FIG. 5 is a schematic cross-sectional diagram along N-N in FIG. 1;
FIG. 6 is an enlarged schematic diagram of a part A in FIG. 4;
FIG. 7 is an enlarged schematic diagram of a part B in FIG. 4;
FIG. 8 is a schematic diagram of a rear-side three-dimensional structure of a vehicle according to an implementation of the present disclosure;
FIG. 9 is a schematic diagram of a longitudinal cross section of a partial structure of a vehicle according to an implementation of the present disclosure;
FIG. 10 is a schematic bottom-view diagram of a vehicle according to an implementation of the present disclosure, where a ring structure is shown by using a dashed line, and a battery packet is not shown;
FIG. 11 is a schematic bottom-view diagram of a vehicle according to an implementation of the present disclosure, where a ring structure is shown by using a dashed line, and a battery packet is shown;
FIG. 12 is a schematic diagram of a three-dimensional structure of a vehicle according to an implementation of the present disclosure, where a ring structure is shown by using a dashed line;
FIG. 13 is a schematic diagram of a three-dimensional structure of a partial structure of a vehicle according to an implementation of the present disclosure, where a first ring structure is shown by using a dashed line;
FIG. 14 is a schematic diagram of a three-dimensional structure of a vehicle in FIG. 10 from an E-E perspective, where a first ring structure is shown by using a dashed line;
FIG. 15 is a schematic diagram of a three-dimensional structure of a partial structure of a vehicle according to an implementation of the present disclosure (F-F perspective);
FIG. 16 is a schematic diagram of a three-dimensional structure of a partial structure of a vehicle according to an implementation of the present disclosure (a front-side perspective);
FIG. 17 is a schematic diagram of a three-dimensional structure of a partial structure of a vehicle according to an implementation of the present disclosure (a rear-side perspective), where a third ring structure is shown by using a dashed line;
FIG. 18 is a schematic diagram of a three-dimensional structure of a rear portion structure of a vehicle according to an implementation of the present disclosure;
FIG. 19 is a schematic diagram of a partial side view of a vehicle according to an implementation of the present disclosure;
FIG. 20 is a schematic diagram of a G-G interface in FIG. 17;
FIG. 21 is a schematic diagram of a three-dimensional structure of a partial structure of a vehicle according to an implementation of the present disclosure (H-H perspective);
FIG. 22 is a schematic diagram of a side view in which a front subframe and a battery pack that are of a vehicle are connected according to an implementation of the present disclosure;
FIG. 23 is a schematic diagram of a side view in which a rear subframe and a battery pack that are of a vehicle are connected according to an implementation of the present disclosure;
FIG. 24 is a schematic diagram of a three-dimensional structure in which a battery pack and a front compartment battery pack mounting member that are of a vehicle are connected according to an implementation of the present disclosure;
FIG. 25 is a schematic diagram of a three-dimensional structure in which a battery pack and a rear compartment battery pack mounting member that are of a vehicle are connected according to an implementation of the present disclosure;
FIG. 26 is a schematic diagram of a front view of a side collision force transfer structure of a vehicle according to an implementation of the present disclosure;
FIG. 27 is a schematic diagram of a three-dimensional structure of a battery pack of a vehicle according to an implementation of the present disclosure;
FIG. 28 is a schematic diagram in which a battery pack and a seat cross beam that are of a vehicle are assembled according to an implementation of the present disclosure;
FIG. 29 to FIG. 31 are partial schematic diagrams of a position of a battery pack mounting member of a vehicle according to an implementation of the present disclosure;
FIG. 32 is a partial exploded schematic diagram of a vehicle according to an implementation of the present disclosure;
FIG. 33 is a partial schematic diagram of a position of a battery pack mounting member of a vehicle according to an implementation of the present disclosure;
FIG. 34 is a schematic diagram of a section Z1 in FIG. 33;
FIG. 35 is a schematic diagram of a section X1 in FIG. 33;
FIG. 36 is a schematic diagram of a section Y1 in FIG. 33;
FIG. 37 to FIG. 39 are partial schematic diagrams of a position of a battery pack mounting member of a vehicle according to an implementation of the present disclosure;
FIG. 40 and FIG. 41 are partial exploded schematic diagrams of a vehicle according to an implementation of the present disclosure;
FIG. 42 to FIG. 45 are partial schematic diagrams of a position of a battery pack mounting member of a vehicle according to an implementation of the present disclosure;
FIG. 46 is a partial exploded schematic diagram of a vehicle according to an implementation of the present disclosure;
FIG. 47 to FIG. 54 are partial schematic diagrams of a position of a battery pack mounting member of a vehicle according to an implementation of the present disclosure;
FIG. 55 is an exploded schematic diagram of a vehicle side view of a vehicle according to an implementation of the present disclosure;
FIG. 56 is a side cross-sectional view of a position of a floor rear cross beam of a vehicle according to an implementation of the present disclosure;
FIG. 57 and FIG. 58 are partial schematic diagrams of a sill position of a vehicle according to an implementation of the present disclosure;
FIG. 59 is a schematic diagram in which a center tunnel and a seat cross beam that are of a vehicle are connected according to an implementation of the present disclosure;
FIG. 60 to FIG. 64 are partial schematic diagrams of a position of a battery pack of a vehicle according to an implementation of the present disclosure;
FIG. 65 to FIG. 76 are partial schematic diagrams of a position of a battery pack mounting member of a vehicle according to an implementation of the present disclosure;
FIG. 77 is a schematic diagram of a relative position between a rear floor cross beam and a C-pillar front reinforcement plate that are of a vehicle according to an implementation of the present disclosure;
FIG. 78 is a schematic diagram along D-D in FIG. 77;
FIG. 79 is a schematic diagram along E-E in FIG. 77; and
FIG. 80 to FIG. 83 are partial schematic diagrams of a vehicle according to an implementation of the present disclosure.

### DESCRIPTION OF EMBODIMENTS

The particular implementations of the present disclosure will be described in detail below in combination with the accompanying drawings. It will be understood that the particular implementations described herein are merely intended to describe and explain the present disclosure and are not intended to limit the present disclosure.

In the descriptions of the present disclosure, it will be understood that orientations or position relationships indicated by the terms "up" and "down" are defined based on plane directions shown in the accompanying drawings, and are merely intended to facilitate description of the present disclosure and description simplification, rather than indicating or implying that the indicated apparatuses or elements need to have a particular orientation or be constructed and operated in a particular orientation, and therefore will not be understood as a limitation on the present disclosure. The terms "inner" and "outer" refer to inner and outer parts of corresponding structural contours. In addition, the terms "first", "second", and the like are merely intended to distinguish one element from another element, and do not have an order or importance.

In the present disclosure, unless otherwise specified, orientations or position relationships indicated by used orientation terms "up, down, left, right, front, and rear" are defined based on plane directions shown in the accompanying drawings, and are merely used for ease of describing the present disclosure and simplifying the descriptions, rather than indicating or implying that a described apparatus or element needs to have a specific orientation or needs to be constructed and operated in a specific orientation, and therefore will not be understood as a limitation on the present disclosure. For example, "up, down, left, right, front, and rear" may be defined based on an up-down direction, a left-right direction, and a front-rear direction of a vehicle in a normal driving state. Specifically, in the accompanying drawings, an X direction is the front-rear direction of the vehicle, where one side to which an arrow points is "front" and a side from which the arrow faces away is "rear"; a Y direction is the left-right direction of the vehicle, where a side to which an arrow points is "right" and a side from which the arrow faces away is "left"; a Z direction is the up-down direction of the vehicle, where a side to which an arrow points is "up" and a side from which the arrow faces away is "down". The terms "inner" and "outer" refer to inner and outer parts of corresponding structural contours.

In addition, it will be noted that, the used terms "first", "second", and the like are intended to distinguish one element from another element, and do not have an order or importance. In addition, in the descriptions with reference to the accompanying drawings, a same reference numeral in different accompanying drawings represent a same element.

In the descriptions of the present disclosure, it will be further noted that, unless otherwise specified and limited, the terms "disposing", "connecting", "connection", and "mounting" will be understood in a broad sense, for example, may be a fixed connection, may be a detachable connection, or may be an integrated connection; or may be a direct connection, or may be an indirect connection through an intermediate medium. A person of ordinary skill in the art will understand specific meanings of the foregoing terms in the present disclosure based on a specific case.

In addition, in the present disclosure, "cross beam" may be a beam that extends in the left-right direction of the vehicle, and "longitudinal beam" may be a beam that extends in the front-rear direction of the vehicle. "Front longitudinal beam" is a longitudinal beam that extends backward from a front bumper cross beam of the vehicle. "Rear longitudinal beam" is a longitudinal beam that extends forward from a rear bumper cross beam of the vehicle. There are usually two longitudinal beams that are symmetrically disposed with respect to a front-rear center line of the vehicle. For example, "front longitudinal beam" usually includes "left front longitudinal beam" and "right front longitudinal beam" that are spaced in the left-right direction.

In addition, unless otherwise explained, meanings of the terms "seat cross beam", "rear floor middle cross beam", "rear floor cross beam", "front wall plate", "rear wall plate", "side wall plate", "A-pillar", "C-pillar", "sill beam", and "rear wheel cover" in the embodiments of the present disclosure are well known in the art.

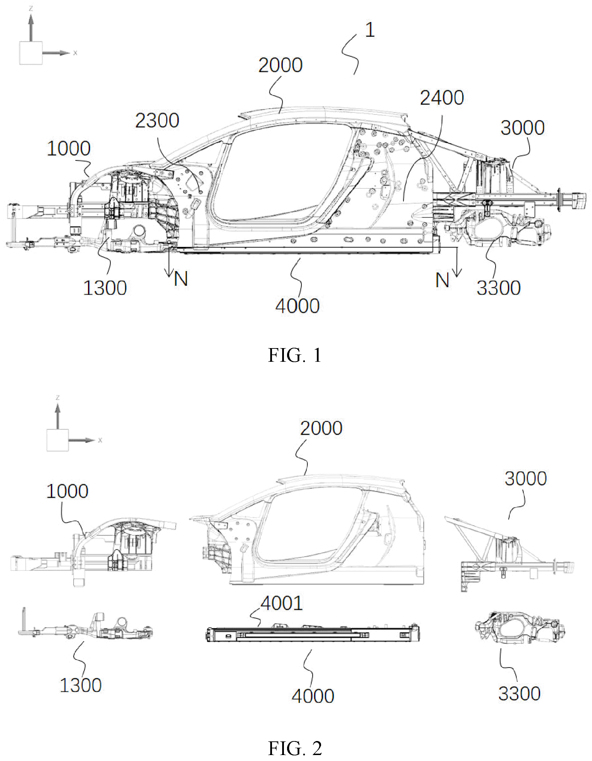

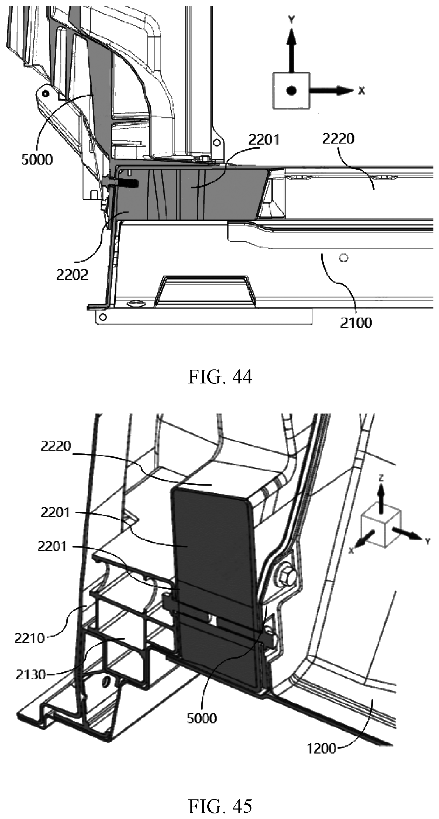

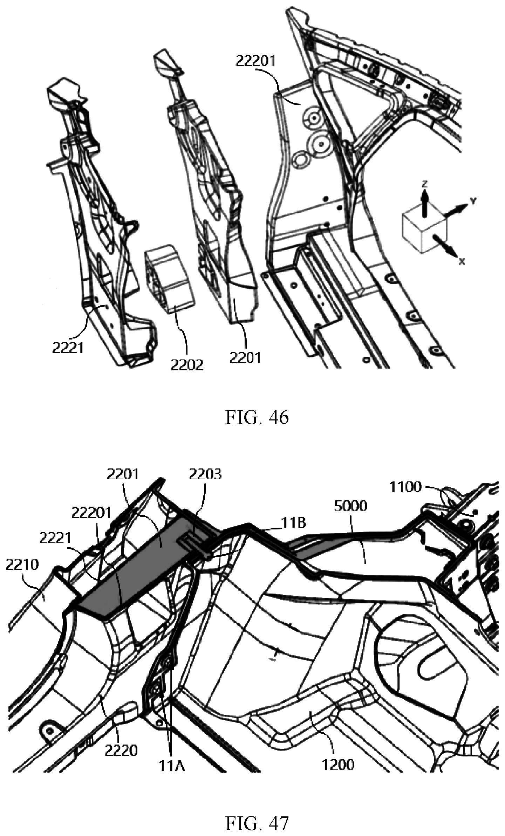

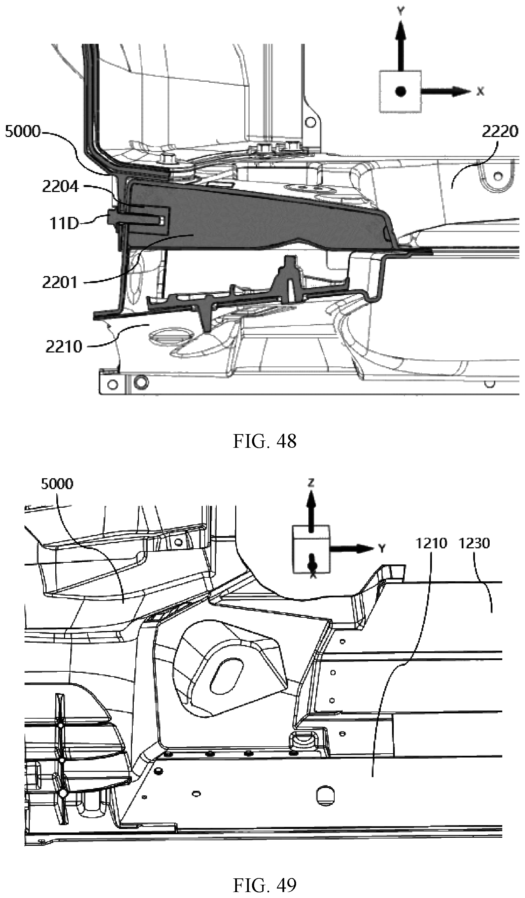

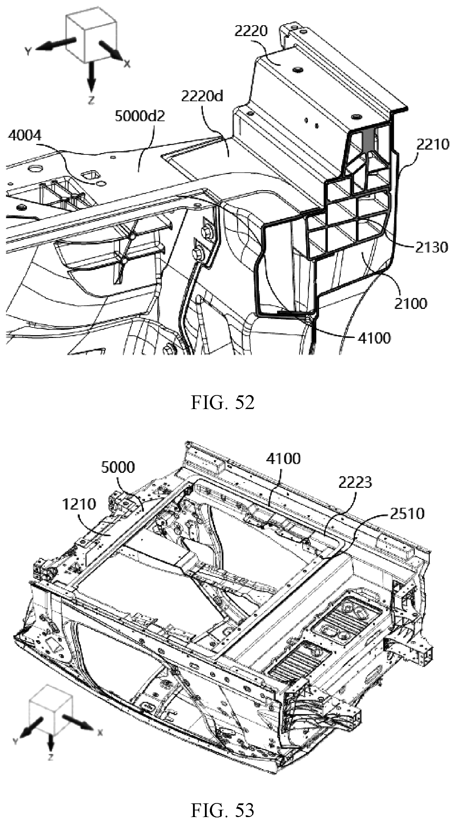

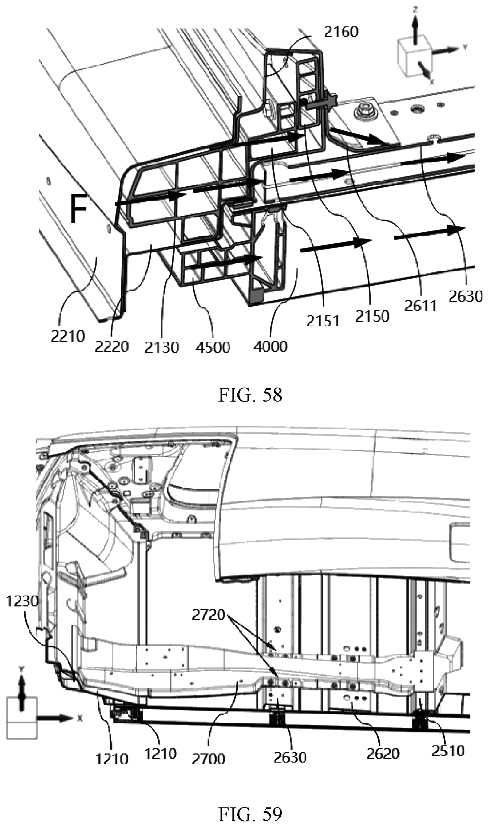

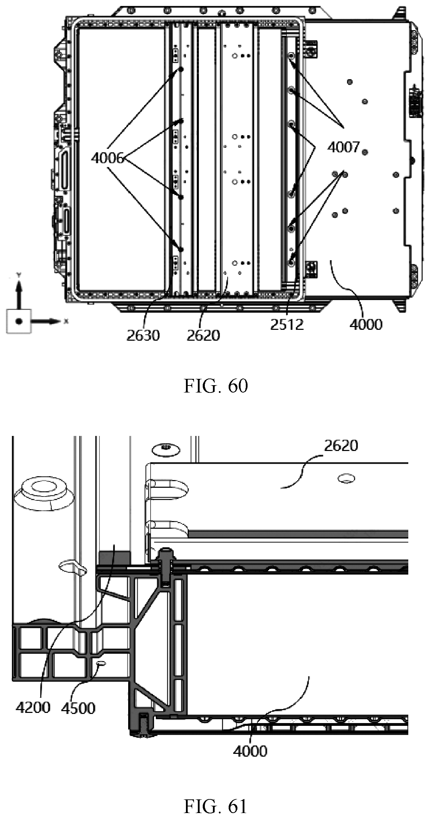

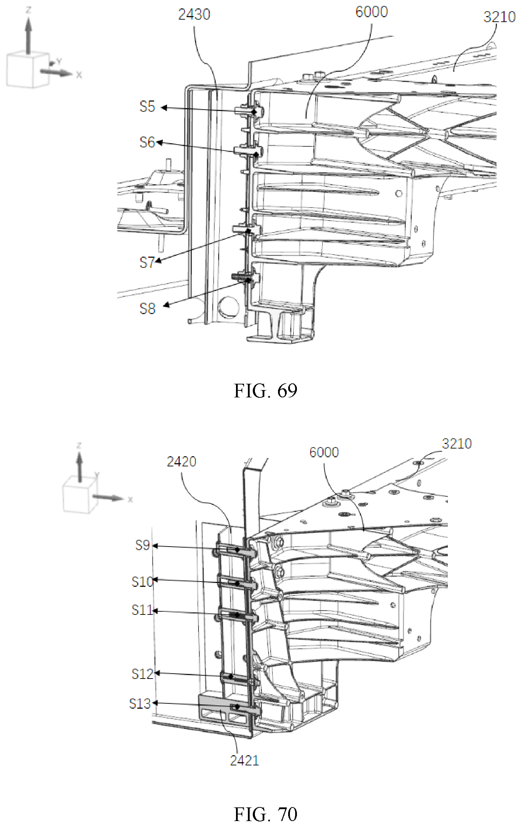

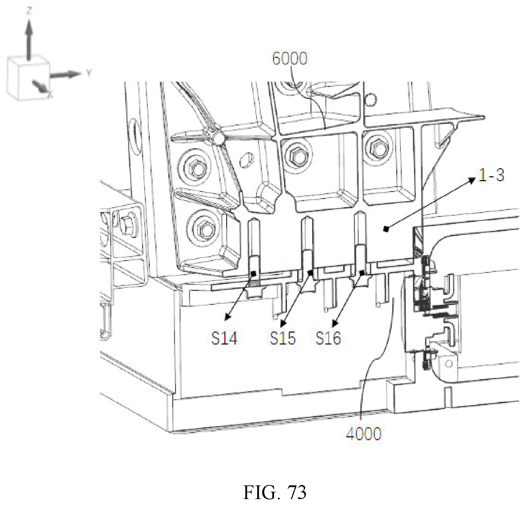

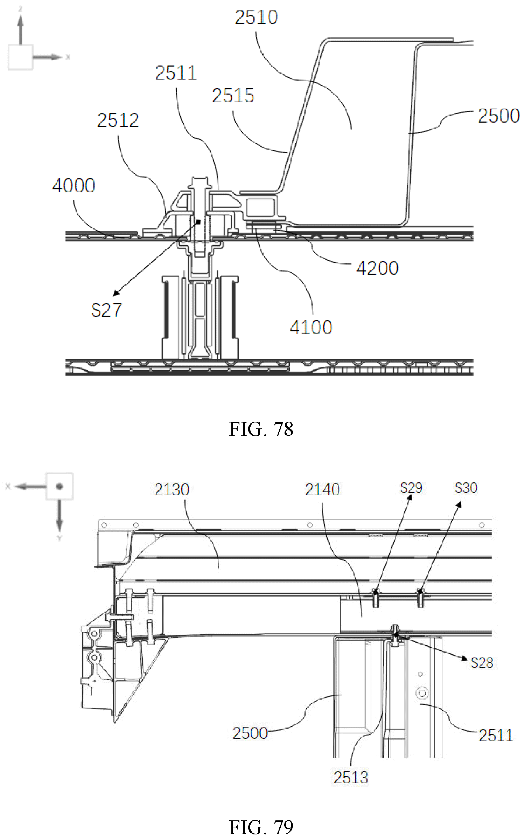

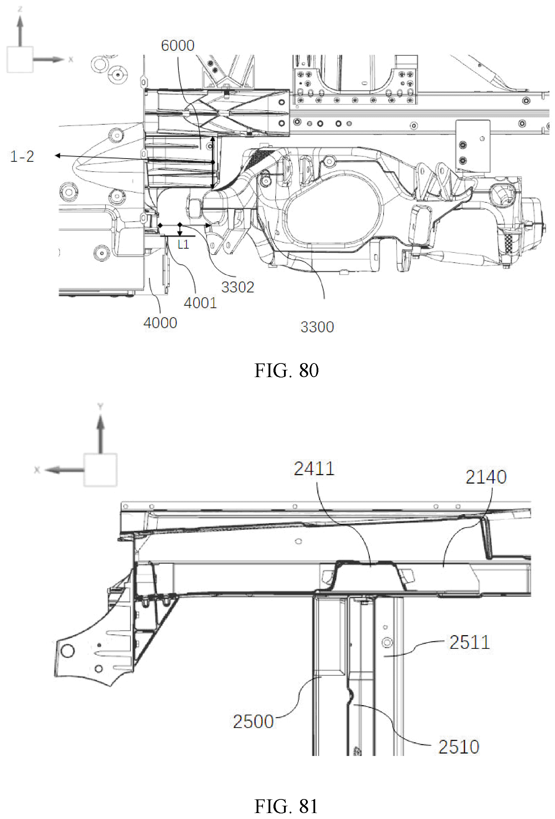

As shown in FIG. 1 to FIG. 83, the present disclosure provides a vehicle 1. The vehicle 1 may include a vehicle body and a battery pack 4000 arranged at a bottom of the vehicle body.

As shown in FIG. 1 and FIG. 2, the vehicle body may include a front compartment, a passenger compartment, and a rear compartment from front to rear. The front compartment may include a front compartment frame 1000 and a front subframe (which may also be referred to as a front frame assembly 1300) mounted below the front compartment frame 1000. The rear compartment may include a rear compartment frame and a rear subframe (which may also be referred to as a rear subframe assembly 3300) mounted below the rear compartment frame 3000. The battery pack 4000 may be mounted below the passenger compartment, and is located between the front subframe and the rear subframe in a length direction of the vehicle.

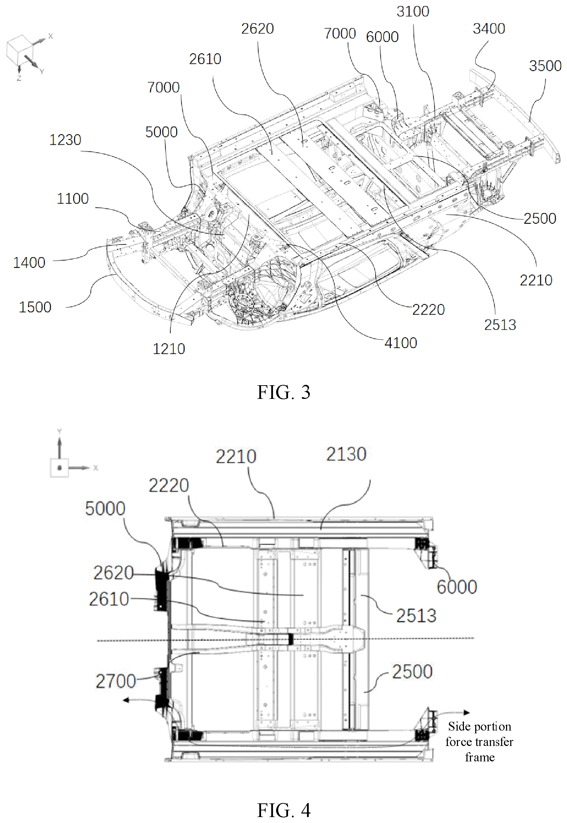

As shown in FIG. 3, the front compartment frame 1000 may include two front longitudinal beams 1100 spaced in a width direction of the vehicle, the passenger compartment may include two sill beams 2100 spaced in the width direction of the vehicle, and the rear compartment frame 3000 may include two rear longitudinal beams 3100 spaced in the width direction of the vehicle.

A rear end of the front longitudinal beam 1100 may be connected to a front end of a corresponding sill beam 2100, and a front end of the rear longitudinal beam 3100 may be connected to a rear end of a corresponding sill beam 2100. To be specific, a front longitudinal beam 1100 on a left side of the vehicle is connected to a sill beam 2100 on the left side of the vehicle, and a front longitudinal beam 1100 on a right side of the vehicle is connected to a sill beam 2100 on the right side of the vehicle; and a rear longitudinal beam 3100 on the left side of the vehicle is connected to a sill beam 2100 on the left side of the vehicle, and a rear longitudinal beam 3100 on the right side of the vehicle is connected to a sill beam 2100 on the right side of the vehicle.

As shown in FIG. 3, the rear end of the front longitudinal beam 1100 may be connected to the front end of the sill beam 2100 through the following front compartment battery pack mounting member 5000, and the front end of the rear longitudinal beam 3100 may be connected to the rear end of the sill beam 2100 through the following rear compartment battery pack mounting member 6000 (also referred to as a connection integrated member 6000 below). For detailed descriptions, reference is made to the following descriptions.

As shown in FIG. 3, the front compartment frame 1000 may further include a front bumper beam 1500 arranged along the width direction of the vehicle, and a left end and a right end of the front bumper beam 1500 are respectively connected to front ends of corresponding front longitudinal beams 1100 in a pair of front longitudinal beams 1100 through a front crash box 1400. The rear compartment frame 3000 may further include a rear bumper beam 3500 arranged along the width direction of the vehicle, and a left end and a right end of the rear bumper beam 3500 are respectively connected to front ends of corresponding rear longitudinal beams 3100 in a pair of front longitudinal beams 1100 through a rear crash box 3400.

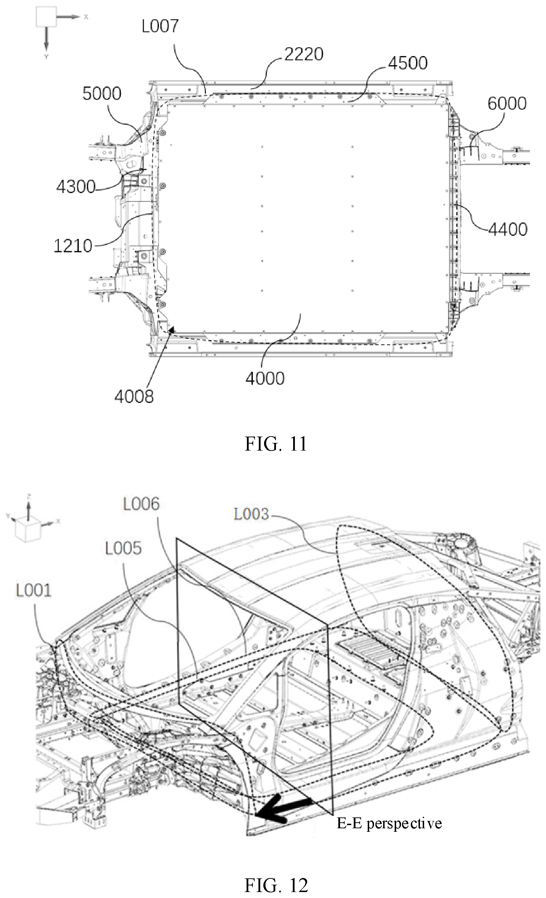

As shown in FIG. 11, the battery pack 4000 may include a battery tray. The battery tray includes a tray bottom plate, and a battery pack front cross beam 4300, a battery pack rear cross beam 4400, and two battery pack longitudinal beams 4500 (a battery pack left longitudinal beam and a battery pack right longitudinal beam) that are all disposed on the tray bottom plate. The battery pack front cross beam 4300, the battery pack rear cross beam 4400, and the two battery pack longitudinal beams 4500 are connected to form a ring structure (namely, a seventh ring structure L007).

As mentioned above, in the related technologies, structures of the front longitudinal beam 1100 or the rear longitudinal beam 3100 that are connected to the front end of the sill beam 2100 are connected together through splicing by using a plurality of sheet metal parts. In this way, assembly is troublesome and connection rigidity is relatively low, which is inconducive to the transfer of a collision force.

In view of this, as shown in FIG. 1 to FIG. 28, the vehicle provided in the present disclosure further includes a plurality of battery pack mounting members 5000 and 6000. The battery pack mounting members 5000 and 6000 are connected to at least one end portion of the sill beam 2100 in a front-rear direction. Two battery pack mounting members 5000 and 6000 (for example, the following front compartment battery pack mounting member 5000 and the following rear compartment battery pack mounting member 6000) are spaced in the width direction of the vehicle. Two sill beams 2100 are spaced in the width direction of the vehicle. In the width direction of the vehicle, a minimum distance between the two battery pack mounting members 5000 and 6000 is less than a minimum distance between the two sill beams 2100. The battery pack mounting members 5000 and 6000 each are formed with a battery pack mounting portion 7000 (or may be referred to as a first battery pack mounting portion). The battery pack mounting portion 7000 is suitable for being connected to the battery pack 4000. The battery pack mounting members 5000 and 6000 are integral members.

In the present disclosure, because the battery pack mounting members 5000 and 6000 are integral members, rigidity of the battery pack mounting members 5000 and 6000 is relatively good. Compared with a solution in the conventional technologies in which connection members connected between the front longitudinal beam 1100 or the rear longitudinal beam 3100 and the sill beam 2100 are spliced through a plurality of sheet metal parts, the solution in the present disclosure can improve a degree of integration of the battery pack mounting members 5000 and 6000, simplify an assembly process, and facilitate lightweighting of the vehicle. In addition, because the rigidity of the battery pack mounting members 5000 and 6000 is relatively good, strength of a mounting point of the battery pack 4000 can be better improved. The battery pack mounting members 5000 and 6000 are integrally connected to the battery pack 4000, so that rigidity of the vehicle body can be further enhanced.

In addition, because the battery pack mounting members 5000 and 6000 are integral members and are integrally connected to the battery pack 4000, a vehicle body-battery integration effect of the vehicle 1 is improved. When the vehicle 1 is subject to a collision, actions of the battery pack mounting members 5000 and 6000, the battery pack 4000, and the sill beam 2100 help form a path with a relatively good front-rear force transfer effect, and help transfer and disperse a collision force in the front-rear direction. In this design, a force transfer effect and a rigidity enhancement effect of the vehicle are relatively good, and crashworthiness performance of the vehicle 1 can be improved.

Because the minimum distance between the two battery pack mounting members 5000 and 6000 is less than a minimum distance between two sills (namely, the sill beams 2100), the battery pack mounting members 5000 and 6000 are located on an inner side of the sill beam 2100. Therefore, the sill can be used for crush energy absorption, and then the battery pack mounting members 5000 and 6000 can be used to assist in resistance.

It will be understood that, that the battery pack mounting members 5000 and 6000 are integral members means that the battery pack mounting member is a separate part, and may be a part obtained through integral forming, or may be a part that is obtained by separately processing and then integrally connecting a plurality of parts. This is not limited in the present disclosure.

Optionally, in an implementation of the present disclosure, the battery pack mounting members 5000 and 6000 may be integrally formed structures to simplify processing and assembly processes. In addition, the battery pack mounting member may have relatively good rigidity, to further improve an effect of integrating the battery pack mounting members 5000 and 6000 with the vehicle body and the battery pack 4000.

For example, in the present disclosure, the battery pack mounting members 5000 and 6000 may be castings, and specifically, may be castings manufactured by using an aluminum alloy die casting process. It will be understood that, in addition to an aluminum alloy, the battery pack mounting member may be made of another material, for example, steel.

In the present disclosure, a quantity and relative positions of battery pack mounting members 5000 and 6000 are not limited. As shown in FIG. 1 to FIG. 3, there may be two, three, or four battery pack mounting members 5000 and 6000, or the like. During an arrangement, two battery pack mounting members 5000 may be respectively connected to front end portions of corresponding sill beams 2100, or two battery pack mounting members 6000 may be respectively connected to rear end portions of corresponding sill beams 2100, or one of two battery pack mounting members 5000 and 6000 may be arranged to be connected to a front end portion of a sill beam 2100, and the other one of the two battery pack mounting members 5000 and 6000 may be arranged to be connected to a rear end portion of a corresponding sill beam 2100 (or a sill beam 2100 on the other side of the vehicle).

As shown in FIG. 3, in an implementation of the present disclosure, the plurality of battery pack mounting members 5000 and 6000 may include at least two battery pack mounting members 5000 (namely, two front compartment battery pack mounting members 5000) respectively connected to front-side end portions of corresponding sill beams 2100 and two battery pack mounting members 6000 (namely, two rear compartment battery pack mounting members 6000) respectively connected to rear-side end portions of corresponding sill beams 2100. In the present disclosure, a front compartment battery pack mounting member 5000 and a rear compartment battery pack mounting member 6000 that are located on the left side of the vehicle may be respectively connected to two end portions of the sill beam 2100 located on the left side of the vehicle body, and a front compartment battery pack mounting member 5000 and a rear compartment battery pack mounting member 6000 that are located on the right side of the vehicle may be respectively connected to two end portions of the sill beam 2100 located on the right side of the vehicle body.

Therefore, disposing at least four battery pack mounting members to mount the battery pack 4000 can enhance mounting strength and rigidity of the battery pack 4000, thereby effectively improving reliability of mounting the battery pack 4000.

In addition, the front compartment battery pack mounting member 5000 and the rear compartment battery pack mounting member 6000 correspond to each other in the front-rear direction of the vehicle. The front compartment battery pack mounting member 5000 and the rear compartment battery pack mounting member 6000 are respectively connected to a front-side end portion and a rear-side end portion of a sill beam 2100. A side portion force transfer frame from the front compartment battery pack mounting member 5000 to the sill beam 2100 and finally to the rear compartment battery pack mounting member 6000 can better transfer and disperse a collision force.

After the battery pack 4000 is mounted, a relatively large force-bearing surface may be formed. The front compartment battery pack mounting member 5000 and the rear compartment battery pack mounting member 6000 may form a frame with the sill beam 2100, to enhance rigidity of the vehicle body, enhance torsional rigidity, resist vehicle deformation, and improve riding experience.

Optionally, the two front compartment battery pack mounting members 5000 may be respectively located at positions at a left corner and a right corner on a front side of the battery pack 4000, and the two rear compartment battery pack mounting members 6000 may be respectively located at positions at a left corner and a right corner on a rear side of the battery pack 4000, to further improve reliability of mounting the battery pack 4000.

As shown in FIG. 3, in the length direction of the vehicle, a maximum distance between a battery pack mounting member 5000 (namely, the front compartment battery pack mounting member 5000) connected to a front-side end portion of a sill beam 2100 and a battery pack mounting member 6000 (namely, the rear compartment battery pack mounting member 6000) connected to a rear-side end portion of a sill beam 2100 is greater than a length of the sill beam 2100.

In this design, the battery pack mounting members 5000 and 6000 are separate parts relative to the sill beam 2100. In addition, during a force transfer, a collision force may be transferred through a battery pack mounting member with relatively large rigidity (a collision force first passes through the front compartment battery pack mounting member 5000 during a front collision, and a collision force first passes through the rear compartment battery pack mounting member 6000 during a rear collision), and then transferred through the sill beam 2100. In this way, crashworthiness performance of the vehicle can be improved.

Optionally, in the present disclosure, projections of the battery pack mounting members 5000 and 6000 in the front-rear direction of the vehicle (namely, the length direction of the vehicle) at least partially overlap a projection of a corresponding sill beam 2100 in the front-rear direction of the vehicle. To be specific, projections of the battery pack mounting members 5000 and 6000 on the left side of the vehicle in the front-rear direction of the vehicle may at least partially overlap a projection of the sill beam 2100 located on the left side of the vehicle in the front-rear direction of the vehicle, and projections of the battery pack mounting members 5000 and 6000 on the right side of the vehicle in the front-rear direction of the vehicle may at least partially overlap a projection of the sill beam 2100 located on the right side of the vehicle in the front-rear direction of the vehicle. In this design, the battery pack mounting member is connected to the sill beam 2100, to form a reliable force transfer path, thereby achieving a better and more effective force transfer effect.

Optionally, in the present disclosure, projections of the battery pack mounting members 5000 and 6000 in a left-right direction of the vehicle (namely, the width direction of the vehicle) at least partially overlap a projection of a corresponding sill beam 2100 in the left-right direction of the vehicle. To be specific, projections of the battery pack mounting members 5000 and 6000 on the left side of the vehicle in the left-right direction of the vehicle may at least partially overlap a projection of the sill beam 2100 located on the left side of the vehicle in the left-right direction of the vehicle, and projections of the battery pack mounting members 5000 and 6000 on the right side of the vehicle in the left-right direction of the vehicle may at least partially overlap a projection of the sill beam 2100 located on the right side of the vehicle in the left-right direction of the vehicle. In this design, the battery pack mounting members 5000 and 6000 and the corresponding sill beam 2100 form a force transfer path that extends in the front-rear direction of the vehicle, so that a force transfer in the left-right direction of the vehicle is better. In addition, the battery pack mounting members 5000 and 6000 and the sill beam 2100 may limit a position in the front-rear direction and the left-right direction, so that a connection is more stable, and rigidity can be better enhanced.

Optionally, in the present disclosure, projections, in the front-rear direction of the vehicle, of battery pack mounting members 5000 and 6000 that are located on a same side in the width direction of the vehicle at least partially overlap. For example, projections, in the front-rear direction of the vehicle, of a front compartment battery pack mounting member 5000 and a rear compartment battery pack mounting member 6000 that are on the left side in the width direction of the vehicle at least partially overlap, and projections, in the front-rear direction of the vehicle, of a front compartment battery pack mounting member 5000 and a rear compartment battery pack mounting member 6000 that are on the right side in the width direction of the vehicle at least partially overlap. In this design, the front compartment battery pack mounting member 5000 and the rear compartment battery pack mounting member 6000 are directly opposite in a front-rear force transfer, and transfer a force more smoothly, deflection torque is prevented, the collision force is transferred and dispersed in the front-rear direction, and crashworthiness performance of the vehicle can also be improved.

In the present disclosure, as shown in FIG. 3, FIG. 11, FIG. 24, and FIG. 25, in an implementation of the present disclosure, battery pack mounting surfaces 7300 (or may be referred to as first battery pack mounting surfaces) of four battery pack mounting members 5000 and 6000 are located on a same horizontal plane. To be specific, respective battery pack mounting surfaces 7300 of two front compartment battery pack mounting members 5000 and two rear compartment battery pack mounting members 6000 are located at a same height in a height direction of the vehicle 1.

In this design, the four battery pack mounting members 5000 and 6000 can be connected to the battery pack 4000 more closely, and the battery pack 4000 and the vehicle body are better sealed. In addition, the collision force is transferred more smoothly between the front compartment battery pack mounting member 5000, the battery pack 4000, and the rear compartment battery pack mounting member 6000. There is no deflection torque, no additional burden is imposed on the battery pack 4000, and the battery pack 4000 is not damaged due to the deflection torque. In addition, a clearance between the battery pack 4000 and each component may be reduced, so that the battery pack 4000 and the vehicle body are better integrated. In other words, a degree of integration between the battery pack 4000 and the vehicle body is better.

It will be understood that, in another implementation of the present disclosure, any two, three, or four of battery pack mounting surfaces 7300 of the four battery pack mounting members 5000 and 6000 may be located on a same horizontal plane.

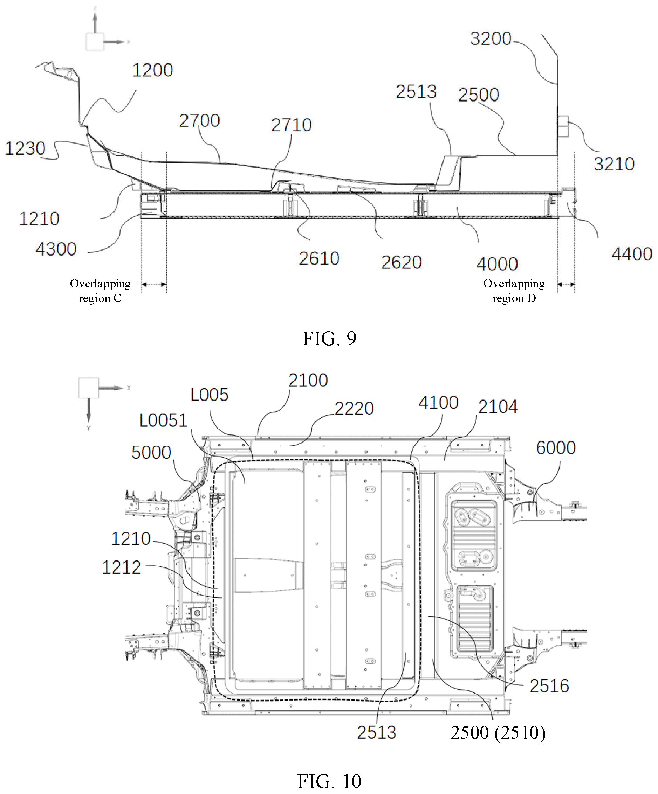

In the present disclosure, as shown in FIG. 10, the sill beam 2100 is formed with a sill beam battery pack mounting surface 2104, and the sill beam battery pack mounting surface 2104 is suitable for being connected to the battery pack 4000. To be specific, in the present disclosure, a battery pack mounting point is disposed on the battery pack mounting members 5000 and 6000, and further, a mounting point (namely, the sill beam battery pack mounting surface 2104) may be disposed on the sill beam 2100 to mount the battery pack 4000. In this way, reliability of mounting the battery pack 4000 can be further improved, an integration effect of the battery pack 4000, the battery pack mounting members 5000 and 6000, and the sill beam 2100 is improved, rigidity of the sill beam 2100 can be enhanced, and rigidity and a force transfer effect of the vehicle body are further enhanced.

In addition, rigidity of the sill beam 2100 may form an integral force transfer plane with a large area with the four battery pack mounting members 5000 and 6000. The battery pack 4000 is formed an integral structure with the battery pack mounting members 5000 and 6000 and the sill beam 2100. During a force transfer, a force transfer effect is better, and deflection torque in a vertical direction when a force is applied in the front-rear direction can be effectively suppressed.

Optionally, the sill beam battery pack mounting surface 2104 may be located on a same horizontal plane as the battery pack mounting surface 7300 on the battery pack mounting portion 7000. In this design, the sill beam 2100 can be connected to the battery pack 4000 more closely, and the battery pack 4000 and the vehicle body are better sealed. In addition, the collision force is transferred more smoothly between the front compartment battery pack mounting member 5000, the battery pack 4000, and the rear compartment battery pack mounting member 6000. There is no deflection torque, no additional burden is imposed on the battery pack 4000, and the battery pack 4000 is not damaged due to the deflection torque. In addition, a clearance between the battery pack 4000 and each component may be reduced, so that the battery pack 4000 and the vehicle body are better integrated. In other words, a degree of integration between the battery pack 4000 and the vehicle body is better.

In the present disclosure, as shown in FIG. 3, the vehicle 1 may further include a front wall lower cross beam 1210, and two ends of the front wall lower cross beam 1210 (which may also be referred to as a second cross beam and a No. 2 cross beam) are respectively connected to two front compartment battery pack mounting members 5000. The front wall lower cross beam 1210 is a cross beam on the vehicle that is connected to a lower end of a front wall plate 1200. The front wall lower cross beam 1210 is integrally connected to the two front compartment battery pack mounting members 5000, so that the two front compartment battery pack mounting members 5000 and the front wall lower cross beam 1210 can form a force transfer path that extends in the left-right direction of the vehicle body, to increase a force transfer area, and transfer a collision force during a side collision of the vehicle; and reliability of mounting the battery pack 4000 and rigidity of the overall vehicle body can be enhanced, which also helps transfer and disperse a collision force in the front-rear direction. Enhancing rigidity on a front side of the force transfer plane effectively resists forward impact, and can improve crashworthiness performance of the vehicle.

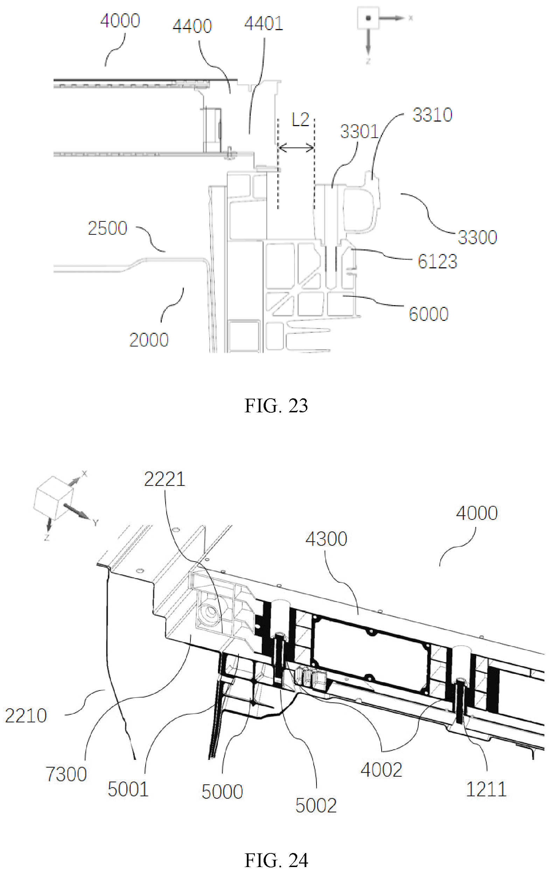

As shown in FIG. 3, FIG. 10, and FIG. 24, the front wall lower cross beam 1210 is provided with a lower cross beam battery pack mounting surface 1212 (namely, a cross beam mounting surface 1212), and the lower cross beam battery pack mounting surface 1212 is suitable for being connected to the battery pack 4000. To be specific, in the present disclosure, a mounting point of the battery pack 4000 is disposed on the battery pack mounting members 5000 and 6000 and/or the sill beam 2100, and further, a mounting point (namely, a front wall lower cross beam battery pack mounting point 211 shown in FIG. 24) may be disposed on a lower cross beam (namely, the front wall lower cross beam 1210) to mount the battery pack 4000. In this way, reliability of mounting the battery pack 4000 can be further improved, an integration effect of the battery pack 4000, the battery pack mounting members 5000 and 6000, the sill beam 2100, and the front wall lower cross beam 1210 is improved, and rigidity and a force transfer effect of the vehicle body can be further improved.

In addition, in this design, the front wall lower cross beam 1210 may be connected to the battery pack 4000 more closely, and a force applied on a front side of the vehicle may be transferred to the battery pack 4000 through the front wall lower cross beam 1210, thereby adding a force transfer path.

Optionally, the lower cross beam battery pack mounting surface 1212 may be located on a same horizontal plane as the battery pack mounting surface 7300 on the battery pack mounting portion 7000. As shown in FIG. 3 to FIG. 28, both the lower cross beam battery pack mounting surface 1212 and the battery pack mounting surface 7300 may be located on a same horizontal plane.

In this design, the lower cross beam (front wall lower cross beam 1210) can be connected to the battery pack 4000 more closely, and the battery pack 4000 and the vehicle body are better sealed. In addition, the collision force is transferred more smoothly between the front compartment battery pack mounting member 5000, the battery pack 4000, and the rear compartment battery pack mounting member 6000. There is no deflection torque, no additional burden is imposed on the battery pack 4000, and the battery pack 4000 is not damaged due to the deflection torque. In addition, a clearance between the battery pack 4000 and each component may be reduced, so that the battery pack 4000 and the vehicle body are better integrated. In other words, a degree of integration between the battery pack 4000 and the vehicle body is better.

In the present disclosure, as shown in FIG. 1 to FIG. 3, the vehicle 1 includes two A-pillars 2300 spaced in the width direction of the vehicle, and the front compartment battery pack mounting member 5000 is connected to a corresponding A-pillar 2300. To be specific, the front compartment battery pack mounting member 5000 located on the left side of the vehicle may be connected to an A-pillar 2300 located on the left side of the vehicle, and the front compartment battery pack mounting member 5000 located on the right side of the vehicle may be connected to an A-pillar 2300 located on the right side of the vehicle. Connecting the A-pillar 2300 may add a force transfer path of the vehicle, and the battery pack 4000, the A-pillar 2300, the sill beam 2100, and the front compartment battery pack mounting member 5000 can be better integrated together, to improve reliability of mounting the battery pack 4000 and rigidity of the overall vehicle.

When the front compartment battery pack mounting member 5000 is directly connected to the sill beam 2100, the front longitudinal beam 1100, the A-pillar 2300, and the battery pack 4000 separately, and the front compartment battery pack mounting member 5000 is an integral member, force transfers of the foregoing members can be better connected, strength of a connection point is also strong, integrity of the battery pack 4000, the A-pillar 2300, the sill beam 2100, and the front compartment battery pack mounting member 5000 is better, and rigidity is better.

In addition, the battery pack 4000 is a component with a relatively large size, and is distributed below the vehicle body. The parts such as the A-pillar 2300 and the sill beam 2100 are on two sides of the front portion of the vehicle. In this connection form, the entire battery pack 4000 can be used to strengthen rigidity of this structure. The front side of the vehicle can be connected to form a whole, which can enhance rigidity of the front side of the vehicle, suppress deformation of the vehicle in a driving process, improve driving and riding experience, and improve safety of the vehicle.

In addition, in a case of a collision, components such as the battery pack 4000, the A-pillar 2300, the sill beam 2100, and the front compartment battery pack mounting member 5000 are connected together to form a ring in the vertical direction, so that while torsional rigidity of the vehicle body is enhanced, a torsional moment between the front longitudinal beam 1100 and the battery pack 4000 in the vertical direction due to the front collision can be suppressed by using the vertical ring (deflection torque in the vertical direction is generated because the front longitudinal beam 1100 is spaced from the battery pack 4000 in the vertical direction). Therefore, flipping torque of the front longitudinal beam 1100 in the vertical direction in a collision process can be effectively suppressed, the passenger compartment is prevented from being damaged, and the battery pack 4000 is also prevented from being damaged after the component is flipped.

A projection of the battery pack mounting member 5000 in the width direction of the vehicle at least partially overlaps a projection of the A-pillar 2300 in the width direction of the vehicle, thereby increasing reliability of connecting the front compartment battery pack mounting member 5000 and the A-pillar 2300 and reliability of transferring a collision force.

The front compartment battery pack mounting member 5000 may be directly connected or may be indirectly connected to the corresponding A-pillar 2300. This is not limited in the present disclosure.

In the present disclosure, the front wall lower cross beam 1210 may be integrally formed. In this way, both the battery pack mounting member and the front wall lower cross beam 1210 are integrally formed members, so that connection clearances can be reduced, a connection point can be prevented from being broken when a force is applied, and the integrally formed members and the battery pack 4000 are connected to better enhance rigidity.

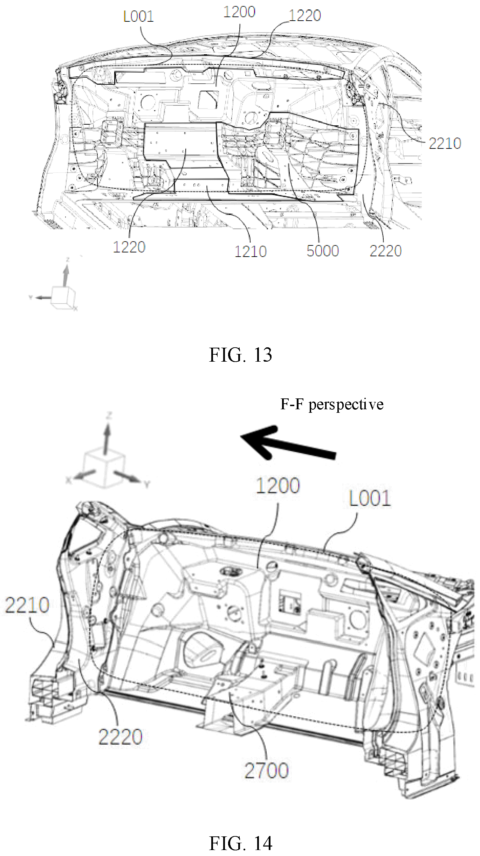

In the present disclosure, as shown in FIG. 1 and FIG. 13, the vehicle 1 further includes a front wall upper cross beam 1220 (namely, a first cross beam 1220). Two ends of the front wall upper cross beam 1220 are connected to the two A-pillars 2300. To be specific, a left end of the front wall upper cross beam 1220 is connected to the A-pillar 2300 located on the left side of the vehicle, and a right end of the front wall upper cross beam 1220 is connected to the A-pillar 2300 located on the right side of the vehicle. The front wall upper cross beam 1220 is disposed to integrally connect the two A-pillars 2300, to enhance rigidity of the front side of the vehicle body, and in particular, enhance rigidity of an upper portion of the front side of the vehicle body. In addition, this also helps suppress the torsional moment between the front longitudinal beam 1100 and the battery pack 4000 in the vertical direction due to the front collision.

As shown in FIG. 1 and FIG. 12 to FIG. 15, in the present disclosure, in the height direction of the vehicle, the front wall upper cross beam 1220 and a front wall lower cross beam 1210 are spaced, and the two front compartment battery pack mounting members 5000, the front wall lower cross beam 1210, the front wall upper cross beam 1220, and the two A-pillars 2300 are connected to form a first ring structure L001. In this way, forming the first ring structure L001 can effectively enhance rigidity of the front side of the vehicle, and in particular, can suppress deformation of the front side of the vehicle body of the vehicle in the height direction. The vertical ring structure can also suppress the torsional moment between the front longitudinal beam 1100 and the battery pack 4000 in the vertical direction due to the front collision.

As shown in FIG. 1, FIG. 13, and FIG. 14, the vehicle 1 further includes the front wall plate 1200. Two ends of the front wall plate 1200 may be connected to the two A-pillars 2300. To be specific, a left end and a right end of the front wall plate 1200 may be respectively connected to corresponding A-pillars 2300, and an upper end and a lower end of the front wall plate 1200 may be respectively connected to an upper cross beam of the front wall plate 1200 and a lower cross beam of the front wall plate 1200. In other words, the front wall plate 1200 may be disposed in space (namely, a hollow region of the first ring structure) limited by the first ring structure L001. The front wall plate 1200 and the first ring structure are fitted to form a surface, which can greatly enhance rigidity of the vehicle body.

In the present disclosure, the front wall plate 1200 may be of an integrally formed structure, to simplify processing and enhance rigidity.

In the present disclosure, the front wall plate 1200 and the front wall upper cross beam 1220 may be of an integrally formed structure, thereby facilitating processing and simplifying assembly. In addition, the integrally formed structure can better enhance rigidity.

Optionally, a cavity may be formed at a connection portion between the front wall plate 1200 and the front wall upper cross beam 1220, and a left end and a right end of the cavity each may communicate with space between a side wall inner plate 2220 and a side wall outer plate 2210 of the vehicle.

In the present disclosure, as shown in FIG. 1, FIG. 4, FIG. 9, FIG. 14, and FIG. 15, the vehicle 1 may further include a center tunnel 2700, the center tunnel 2700 extends in the front-rear direction of the vehicle, and the center tunnel 2700 is connected to the front wall lower cross beam 1210. Connecting the center tunnel 2700 and the front wall lower cross beam 1210 may add a front-rear force transfer path of the vehicle, and also help enhance rigidity of the vehicle body. In addition, disposing the center tunnel 2700 may suppress deflection of the front wall lower cross beam 1210 in the vertical direction. This effect can be achieved because the center tunnel 2700 is long in the front-rear direction.

In the present disclosure, as shown in FIG. 12, FIG. 17, and FIG. 18, the vehicle 1 further includes a rear wall lower cross beam 3210 (namely, a rear wall cross beam 3210), and two ends of the rear wall lower cross beam 3210 are respectively connected to corresponding rear compartment battery pack mounting members 6000. In this design, the front wall lower cross beam 1210, the two front compartment battery pack mounting members 5000, the two sill beams 2100, the two rear compartment battery pack mounting members 6000, and the rear wall lower cross beam 3210 are connected to form a ring structure, namely, a bottom ring structure (which may be referred to as a sixth ring structure L006, as shown in FIG. 12).

The rear wall lower cross beam 3210 is a cross beam on the vehicle that is connected to a lower end of the rear wall plate 3200. The rear wall lower cross beam 3210 is integrally connected to the two rear compartment battery pack mounting members 6000, so that a force transfer path can be added, the two rear compartment battery pack mounting members 6000 and the rear wall lower cross beam 3210 can form a force transfer path that extends along the left-right direction of the vehicle body, to transfer a collision force during a side collision of the vehicle; and reliability of mounting the battery pack 4000 and rigidity of the overall vehicle body can be improved.

In addition, the bottom ring structure is formed, so that after the battery pack 4000 is mounted, rigidity of the vehicle can be effectively enhanced, and in particular, rigidity of a rear side of the vehicle body can be enhanced, to suppress deformation of the vehicle body on the rear side of the vehicle body in the height direction.

Optionally, the rear wall lower cross beam 3210 may be integrally formed, and has relatively good rigidity, which helps enhance rigidity of the overall vehicle body. When parts on the ring are basically integrally formed, an effect of enhancing rigidity of the vehicle is clearer.

In the present disclosure, in the height direction of the vehicle, the rear wall lower cross beam 3210 may be spaced from the battery pack 4000. Therefore, the two rear compartment battery pack mounting members 6000, the battery pack 4000, the rear wall upper cross beam 3220, and the rear wall lower cross beam 3210 may form a ring structure in the vertical direction, which can enhance rigidity of the vehicle and suppress deformation of the vehicle.

Last three of four members of battery pack 4000, the rear compartment battery pack mounting member 6000, the rear wall upper cross beam 3220, and the rear wall lower cross beam 3210 that form the ring structure may be all integrally formed members, so that both strength and rigidity of the ring structure are high, and an effect of enhancing rigidity of the vehicle is clear.

As shown in FIG. 4, FIG. 5, FIG. 9, and FIG. 10, in the present disclosure, the vehicle 1 may further include a rear floor cross beam 2510 (which may also be referred to as a rear floor 2500 and a second connection plate 2500), the rear floor cross beam 2510 is formed with a rear floor battery pack mounting surface 2516, and the rear floor battery pack mounting surface 2516 is located on a same horizontal plane as the sill beam battery pack mounting surface 2104 on the sill beam 2100. The rear floor cross beam 2510 is connected to the battery pack 4000, to add a mounting point of the battery pack 4000, improve reliability of mounting the battery pack 4000, and enhance rigidity of the overall vehicle.

In this design, the rear floor cross beam 2510 can be connected to the battery pack 4000 more closely, and the battery pack 4000 and the vehicle body are better sealed. In addition, the collision force is transferred more smoothly between the front compartment battery pack mounting member 5000, the battery pack 4000, and the rear compartment battery pack mounting member 6000. There is no deflection torque, no additional burden is imposed on the battery pack 4000, and the battery pack 4000 is not damaged due to the deflection torque. In addition, a clearance between the battery pack 4000 and each component may be reduced, so that the battery pack 4000 and the vehicle body are better integrated. In other words, a degree of integration between the battery pack 4000 and the vehicle body is better.

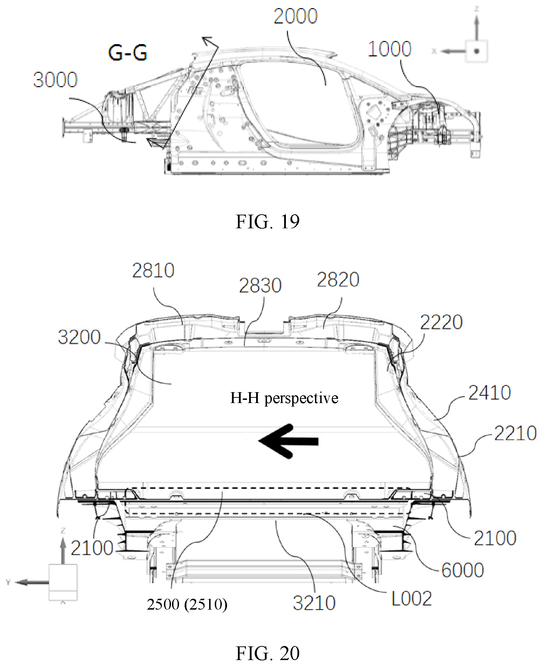

In the present disclosure, as shown in FIG. 20, two ends of the rear floor cross beam 2510 are respectively connected to corresponding sill beams 2100, and the rear floor cross beam 2510, the two sill beams 2100, and the rear wall lower cross beam 3210 are connected to form a second ring structure L002. To be specific, a left end of the rear floor cross beam 2510 may be connected to the sill beam 2100 located on the left side of the vehicle, and a right end of the rear floor cross beam 2510 may be connected to the sill beam 2100 located on the right side of the vehicle. Forming the second ring structure L002 may effectively enhance rigidity of a bottom of the vehicle, and in particular, may suppress deformation of the bottom of the vehicle body, thereby protecting the battery pack 4000, to improve reliability and safety of mounting the battery pack 4000.

As shown in FIG. 10 and FIG. 20, in the present disclosure, the vehicle 1 may further include a rear floor middle cross beam 2513, and two ends of the rear floor middle cross beam 2513 are respectively connected to corresponding sill beams 2100. Disposing a middle cross beam to connect the sill beam 2100 may add a lateral force transfer path, enhance rigidity of the vehicle, and in particular, enhance rigidity of the bottom of the vehicle.

In the present disclosure, as shown in FIG. 2 and FIG. 11, the rear floor middle cross beam 2513 may be connected to the battery pack 4000, to add a mounting point of the battery pack 4000. Connecting the battery pack 4000 and the rear floor middle cross beam 2513 may further enhance rigidity of the vehicle.

Optionally, the rear floor middle cross beam 2513 is disposed between the front wall lower cross beam 1210 and the rear wall lower cross beam 3210 of the vehicle in the front-rear direction of the vehicle. Between the front wall lower cross beam 1210 and the rear wall lower cross beam 3210, the rear floor middle cross beam 2513 may further reinforce a ring structure between the front wall lower cross beam 1210 and the rear wall lower cross beam 3210.

In the present disclosure, the rear floor middle cross beam 2513 and the rear floor cross beam 2510 are connected in the front-rear direction of the vehicle. The two cross beams reinforce each other. When the rear floor cross beam 2510 and the battery pack 4000 are sealed, the battery pack 4000 is connected to the rear floor middle cross beam 2513. The two cross beams are closer to each other, so that the two cross beams can be connected more closely.

As shown in FIG. 1, FIG. 7, FIG. 17, FIG. 18, and FIG. 20, in the present disclosure, the vehicle 1 further includes two C-pillars 2400 that are spaced in the width direction of the vehicle, and the two C-pillars 2400 are respectively connected to corresponding rear compartment battery pack mounting members 6000. To be specific, the rear compartment battery pack mounting member 6000 located on the left side of the vehicle may be connected to the C-pillar 2400 located on the left side of the vehicle, and the rear compartment battery pack mounting member 6000 located on the right side of the vehicle may be connected to the C-pillar 2400 located on the right side of the vehicle. Connecting the C-pillar 2400 may add a force transfer path of the vehicle, and the C-pillar 2400, the sill beam 2100, and the rear compartment battery pack mounting member 6000 can be better integrated together, to improve reliability of mounting the battery pack 4000 and rigidity of the overall vehicle, and in particular, enhance rigidity of the rear side of the vehicle.

When the rear compartment battery pack mounting member 6000 is directly connected to the sill beam 2100, the rear longitudinal beam 3100, the C-pillar 2400, and the battery pack 4000 separately, and the rear compartment battery pack mounting member 6000 is an integral member, force transfers of the foregoing members can be better connected, strength of a connection point is also strong, integrity of the battery pack 4000, the C-pillar 2400, the sill beam 2100, and the rear compartment battery pack mounting member 6000 is better, and rigidity is better.

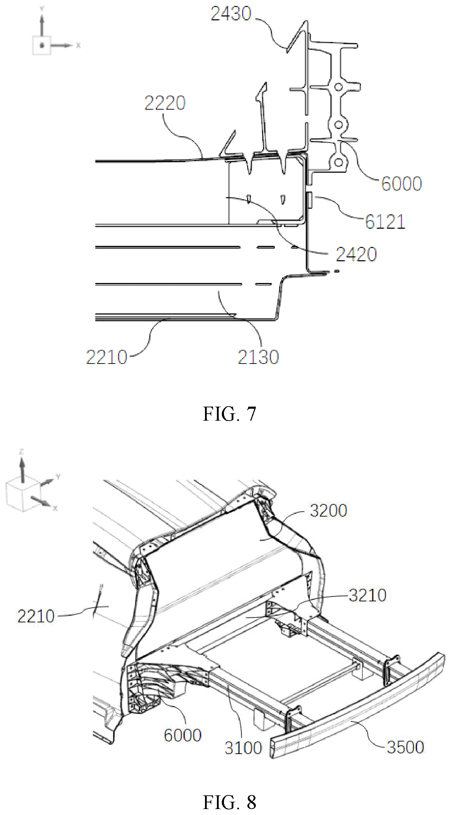

As shown in FIG. 7, a projection of a C-pillar 2400 in the front-rear direction of the vehicle at least partially overlaps a projection of a corresponding rear compartment battery pack mounting member 6000 in the front-rear direction of the vehicle, thereby helping transfer and disperse a collision force in the front-rear direction of the vehicle. In this way, a force transfer is smoother.

The rear compartment battery pack mounting member 6000 may be directly connected or may be indirectly connected to the corresponding C-pillar 2400. This is not limited in the present disclosure.

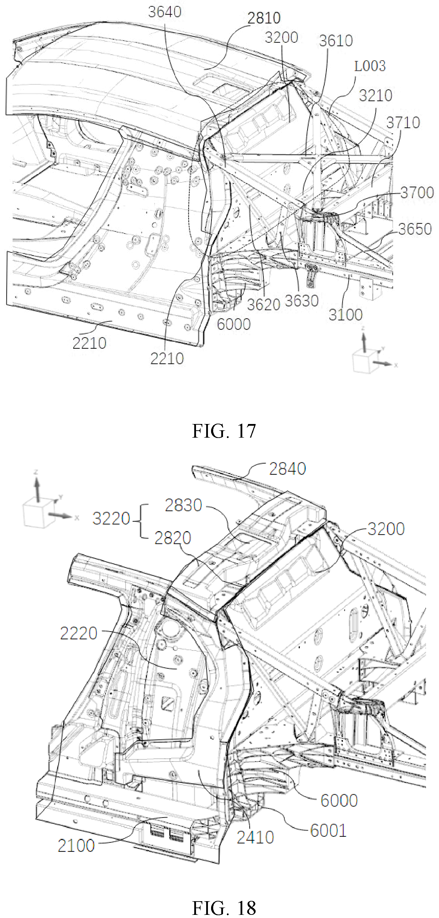

As shown in FIG. 17 and FIG. 18, the vehicle 1 further includes the rear wall upper cross beam 3220, two ends of the rear wall upper cross beam 3220 are respectively connected to corresponding C-pillars 2400, and the rear wall upper cross beam 3220, the two C-pillars 2400, the rear wall lower cross beam 3210, and the two rear compartment battery pack mounting members 6000 are connected to form a third ring structure L003. To be specific, a left end of the rear wall upper cross beam 3220 is connected to the C-pillar 2400 located on the left side of the vehicle, and a right end of the rear wall upper cross beam 3220 is connected to the C-pillar 2400 located on the right side of the vehicle. The rear wall upper cross beam 3220 is disposed to integrally connect the two C-pillars 2400, to enhance rigidity of the rear side of the vehicle, and in particular, enhance rigidity of an upper portion of the rear side of the vehicle.

In addition, forming the third ring structure L003 may effectively enhance rigidity of the rear side of the vehicle, and in particular, may suppress deformation of the rear side of the vehicle body of the vehicle in the height direction.

In the present disclosure, as shown in FIG. 12, in the vertical direction, the vehicle body has two ring structures spaced in the front-rear direction of the vehicle, namely, a first ring structure L001 and a third ring structure L003. For the first ring structure and the third ring structure, upper sides may be connected by using a top cover 2810 of the vehicle body, and lower sides may be connected by using the battery pack 4000 and the sill beam 2100 (the bottom of the vehicle body further has a bottom ring structure), to form a very strong frame, which may greatly enhance rigidity of the vehicle.

In addition, the top cover is further provided with a top cover longitudinal beam. The top cover may be integrally formed, and overall structural strength is very high. Therefore, strength of a component on the upper side of the vehicle body is high, and strength of the battery pack 4000 is also high. When the rear wall lower cross beam 3210, the front wall lower cross beam 1210, the front wall plate 1200, and the battery pack mounting members 5000 and 6000 are all integrally formed, strength of the overall vehicle is very high, strength after the frame is formed is also high, and rigidity may meet a requirement.

In addition, in the present disclosure, two ends of the rear wall plate 3200 are connected to side walls, and are connected to the C-pillars 2400. In this way, a ring between the rear wall lower cross beam 3210, the C-pillar 2400, and the rear wall upper cross beam 3220 is filled by the rear wall plate 3200, to form a surface structure. In this case, rigidity is relatively good.

In the present disclosure, there may be a cavity between the rear wall lower cross beam 3210 and the battery pack 4000, and the cavity may be configured to ventilate and dissipate an on-board charger.

In the present disclosure, in an optional implementation, the battery pack 4000 may be directly connected to the plurality of battery pack mounting members 5000 and 6000 (namely, the front compartment battery pack mounting member 5000 and the rear compartment battery pack mounting member 6000), to ensure mounting strength and reliability of mounting the battery pack 4000. Direct connection helps improve connection strength of a connection point and improve an effect of assembling the battery pack 4000 and the battery pack mounting members 5000 and 6000. In addition, parts can be reduced, and a structure can be simplified.

As shown in FIG. 3, in an implementation in which a front end of the battery pack 4000 is separately connected to the two front compartment battery pack mounting members 5000 arranged in the width direction of the vehicle, and a rear end of the battery pack 4000 is separately connected to the two rear compartment battery pack mounting members 6000 arranged in the width direction of the vehicle, the front end of the battery pack 4000 may be directly connected to the two front compartment battery pack mounting members 5000 separately, and the rear end of the battery pack 4000 may be directly connected to the two rear compartment battery pack mounting members 6000 separately.

Similarly, the battery pack 4000 may be directly connected to the front wall lower cross beam 1210, the sill beam 2100, and the rear floor middle cross beam 2513 of the vehicle separately, to improve connection strength of a connection point between the battery pack 4000 and the foregoing three parts, and improve an effect after the battery pack 4000 is assembled with the foregoing parts.

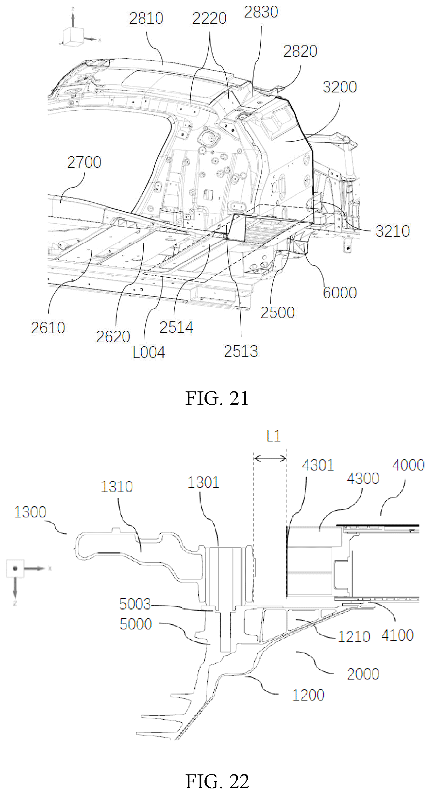

As shown in FIG. 21, in the present disclosure, the rear floor middle cross beam 2513 is connected to the two sill beams 2100 and the rear wall lower cross beam 3210 to form a fourth ring structure L004. Forming a ring structure through connection helps improve strength of the vehicle, and in particular, improve structural strength of the bottom of the vehicle body.

As shown in FIG. 4, FIG. 5, and FIG. 21, in the present disclosure, the rear floor middle cross beam 2513 is located on a front side of the rear compartment battery pack mounting member 6000. In this way, in the front-rear direction of the vehicle, the rear floor middle cross beam 2513 and the rear compartment battery pack mounting member 6000 can provide a mounting point for the battery pack 4000 in the front-rear direction of the vehicle, thereby improving reliability of mounting the battery pack 4000.

As mentioned above, as shown in FIG. 10, at the bottom of the vehicle, the battery pack 4000, the two sill beams 2100, the rear floor middle cross beam 2513, and the two rear compartment battery pack mounting members 6000 may be limited to a ring structure.

In the present disclosure, as shown in FIG. 2, at least a part of an upper surface 4001 of the battery pack 4000 (for example, a part of an upper surface of an upper cover of the battery pack 4000, which may also be the upper surface 4001 of the battery pack) is formed a vehicle floor. In this design, Z-direction space at the bottom of the vehicle is saved, and accommodating space of the battery pack 4000 at the bottom of the vehicle is increased, thereby helping increase a capacity of the battery pack 4000, and increasing endurance of the vehicle. In addition, a structure of the vehicle body is simplified, and lightweighting of the vehicle is facilitated.

To implement hermetic mounting of the battery pack 4000 on the vehicle, especially when a part of the upper surface of the battery pack 4000 is formed the vehicle floor, as shown in FIG. 10, the vehicle further includes a sealing member 4100. The battery pack 4000 is hermetically connected to the battery pack mounting surfaces 7300, 2104, 1212, and 2516 on the vehicle through the sealing member 4100. The battery pack mounting surface on the vehicle herein may include any one or more of the battery pack mounting surface 7300 on the battery pack mounting member 5000 or 6000, the sill beam battery pack mounting surface 2104 on the sill beam 2100, the lower cross beam battery pack mounting surface 1212 on the front wall lower cross beam 1210, and the rear floor battery pack mounting surface 2516 on the rear floor cross beam 2510. In this way, the sealing member 4100 can prevent substances such as air or water outside the vehicle from entering the vehicle (passenger compartment).

As shown in FIG. 10, in the present disclosure, the vehicle 1 further includes the rear floor cross beam 2510, the two sill beams 2100, the two front compartment battery pack mounting members 5000, the front wall lower cross beam 1210, and the rear floor cross beam 2510 are connected to form a fifth ring structure L005, the fifth ring structure L005 has a hollow region L0051, and a part of the upper surface of the battery pack 4000 that covers the hollow region L0051 is formed a vehicle floor. The fifth ring structure L005 is formed, to enhance rigidity of the bottom of the vehicle. The fifth ring structure is connected to a ring structure constructed by a frame of the battery pack 4000, which can greatly improve connection strength of the battery pack 4000 and a degree of integration between the vehicle body and the battery pack 4000.

In the present disclosure, as shown in FIG. 17 and FIG. 18, the vehicle may further include a front support beam 3640. One end of the front support beam 3640 is connected to the rear wall upper cross beam 3220, and the other end of the front support beam 3640 is connected to the rear longitudinal beam 3100. The front support beam 3640 is disposed, to add a force transfer path in the front-rear direction other than the rear longitudinal beam 3100 at the rear portion of the vehicle, thereby helping transfer and disperse a collision force in the front-rear direction.

As shown in FIG. 17 and FIG. 18, the vehicle may further include a rear wheel cover 3700. The rear wheel cover 3700 is connected to the rear longitudinal beam 3100, and the other end of the front support beam 3640 is further connected to the rear wheel cover 3700. In other words, the front support beam 3640 may transfer a force through a wheel cover (namely, the rear wheel cover 3700), to improve a force dispersion effect.

As shown in FIG. 17, in the height direction of the vehicle, the front support beam 3640 and the rear longitudinal beam 3100 may be spaced. In this way, in the up-down direction of the vehicle, the vehicle has two spaced paths for a force transfer, thereby helping transfer a collision force at different positions of the vehicle.

As shown in FIG. 17, the vehicle may further include a rear support beam 3650. One end of the rear support beam 3650 is connected to the rear wheel cover 3700, and the other end of the rear support beam 3650 is connected to the rear longitudinal beam 3100. In this design, the rear support beam 3650 is used to transfer a force to an upper-side force transfer path through a longitudinal beam. In this way, an effect is better.

As shown in FIG. 17, in the height direction of the vehicle, one end of the rear support beam 3650 and the rear longitudinal beam 3100 are spaced. In this way, in the up-down direction of the vehicle, the vehicle has two spaced paths for a force transfer, thereby helping transfer a collision force at different positions of the vehicle.

As shown in FIG. 17, the vehicle 1 further includes a rear wheel cover cross beam 3710, and two ends of the rear wheel cover cross beam 3710 are respectively connected to two rear wheel covers 3700 spaced in the width direction of the vehicle. In this way, the two rear wheel covers 3700 may be integrally connected, to enhance wheel cover rigidity. In addition, the rear wheel cover 3700, the two rear longitudinal beams 3100, the rear wheel cover cross beam 3710, and the rear wall lower cross beam 3210 may be connected to form a frame (namely, a ring structure), which can enhance rigidity of the vehicle body, especially enhance rigidity of the rear portion of the vehicle body. In addition, the rear wheel cover 3700, the two rear longitudinal beams 3100, the rear wheel cover cross beam 3710, the two front support beams 3640, and the rear wall upper cross beam 3220 may also be connected to form a frame, to further enhance rigidity of the vehicle body.

As shown in FIG. 17, the vehicle 1 may further include a first reinforcement beam 3610, and the first reinforcement beam 3610 is separately connected to the front support beam 3640 and a wheel cover. In this way, the front support beam 3640, the rear wheel cover 3700, the rear wheel cover cross beam 3710, and the first reinforcement beam 3610 may be connected to form a frame structure, to reinforce a ring structure formed by a rear wall of the vehicle, thereby enhancing rigidity of the rear wall ring structure, and also enhancing rigidity of the entire vehicle body.

As shown in FIG. 17, in the present disclosure, the vehicle 1 may further include a second reinforcement beam 3620 and a third reinforcement beam 3630. An upper end of the second reinforcement beam 3620 and an upper end of the third reinforcement beam 3630 may be separately connected to the front support beam 3640, and a lower end of the second reinforcement beam 3620 and a lower end of the third reinforcement beam 3630 may be separately connected to the rear compartment battery pack mounting member 6000, to add a force transfer path, and enhance rigidity of the vehicle.

Optionally, as shown in FIG. 17, the second reinforcement beam 3620, the third reinforcement beam 3630, and the front support beam 3640 may form a triangular structure, to enhance rigidity.

As shown in FIG. 3, in the present disclosure, the structure of the vehicle body further includes a first cross beam 1230. Two ends (a left end and a right end) of the first cross beam 1230 are respectively connected to the two front compartment battery pack mounting members 5000. In this way, the two front compartment battery pack mounting members 5000 may be further integrally connected, to enhance rigidity on the front side of the vehicle, and add a force transfer path. As shown in FIG. 3, the first cross beam 1230, the two front compartment battery pack mounting members 5000, and the front wall lower cross beam 1210 may be connected to form a ring structure.

Optionally, the first cross beam 1230 may be of a profile structure.

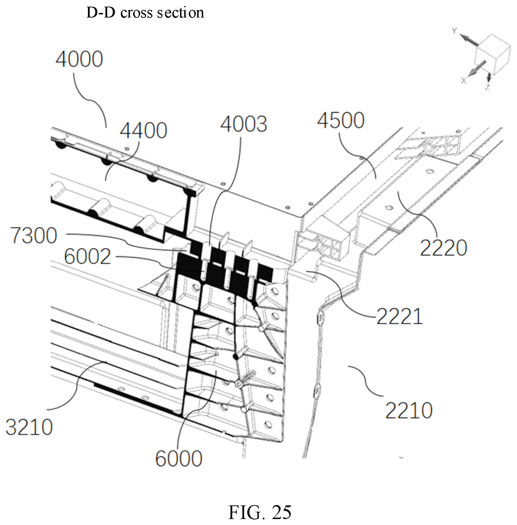

As shown in FIG. 24 and FIG. 25, in the present disclosure, a first mounting portion (which may also be referred to as a front longitudinal beam rear section lower end surface 5001, as shown in FIG. 24) is disposed on the front compartment battery pack mounting member 5000, and the first mounting portion is suitable for being connected to a front portion (for example, a battery pack front mounting point 4002, as shown in FIG. 24) of the battery pack 4000. A second mounting portion 6002 is disposed on the rear compartment battery pack mounting member 6000, and the second mounting portion 6002 is suitable for being connected to a rear portion (for example, a battery pack rear mounting point 4003, as shown in FIG. 24) of the battery pack 4000.

Optionally, the first mounting portion may be constructed as a first mounting surface, and the second mounting portion may be constructed as a second mounting surface. A first mounting hole (which may also be referred to as a front longitudinal beam battery pack mounting point 5002) is disposed on the first mounting surface, and the first mounting hole is suitable for being fitted with a fastener (for example, a bolt), to mount the battery pack front cross beam 4300 of the battery pack 4000. A second mounting hole is disposed on the second mounting surface, and the second mounting hole is suitable for being fitted with a fastener (for example, a bolt), to mount the battery pack rear cross beam 4400 of the battery pack 4000.

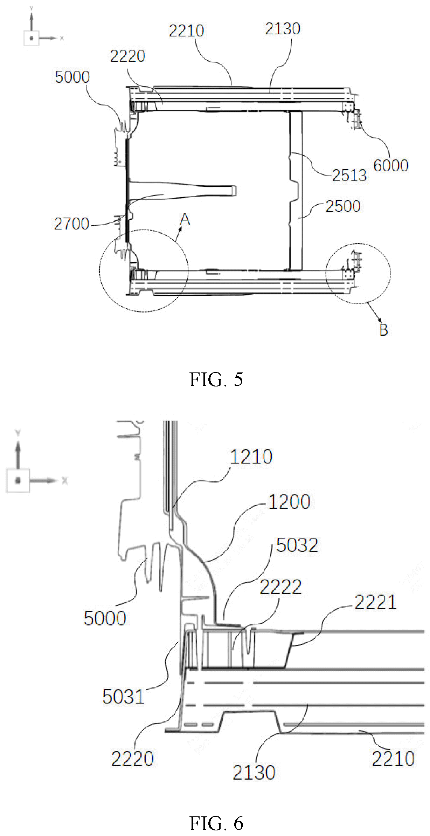

In the present disclosure, as shown in FIG. 6 and FIG. 7, the sill beam 2100 (also referred to as a sill) includes a body beam and a sill reinforcement beam 2130 located inside the body beam, the sill beam 2100 further includes a sill inner plate and a sill outer plate, and the sill inner plate and the sill outer plate enclose and form the body beam.

The side wall inner plate 2220 of the vehicle and the sill inner plate are integrally formed, which is equivalent to that a lower portion of the side wall inner plate 2220 and a corresponding portion of the sill reinforcement beam 2130 are constructed as the sill inner plate 2110. The side wall outer plate 2210 of the vehicle and the sill outer plate are integrally formed, which is equivalent to that a lower portion of the side wall outer plate 2210 and a corresponding portion of the sill reinforcement beam 2130 are constructed as the sill outer plate.

As shown in FIG. 6, the front compartment battery pack mounting member 5000 is further provided with a third mounting portion 5031 and a fourth mounting portion 5032, the third mounting portion 5031 abuts against a side of the side wall inner plate 2220 (sill inner plate) that faces a passenger compartment, and the fourth mounting portion 5032 is connected to the side wall inner plate 2220 and the sill reinforcement beam 2130 through a first fastener. The sill reinforcement beam 2130 is located in a cavity enclosed by the side wall inner plate 2220 and the side wall outer plate 2210.

As shown in FIG. 6, the vehicle further includes a side wall inner plate reinforcement block 2222 (namely, the sill inner reinforcement profile 2140) in the cavity. One end of the first fastener sequentially passes through the fourth mounting portion 5032, the side wall inner plate 2220, and the side wall inner plate reinforcement block 2222, and is fastened to the sill reinforcement beam 2130.

As shown in FIG. 6, the third mounting portion 5031 extends in a width direction of a vehicle body frame, and the fourth mounting portion 5032 extends in a length direction of the vehicle body frame.

As shown in FIG. 7, the C-pillar 2400 of the vehicle may include a C-pillar inner panel 2420 (namely, the following side wall reinforcement member 2420) and a C-pillar outer panel 2430 (namely, the following intermediate connection member 2430). The C-pillar inner panel 2420 and the sill reinforcement beam 2130 are connected, and both are located in the cavity enclosed by the side wall inner plate 2220 and the side wall outer plate 2210. The rear compartment battery pack mounting member 6000 is further provided with a fifth mounting portion 6121, the fifth mounting portion 6121 abuts against a rear end of the side wall plate 2220, and the fifth mounting portion 6121 is connected to the C-pillar inner panel 2420 through a second fastener. The C-pillar outer panel 2430 is connected to the side wall inner plate 2220 and the C-pillar inner panel 2420 through a third fastener.

As shown in FIG. 7, the fifth mounting portion 6121 may extend in the width direction of the vehicle.

As shown in FIG. 9, the front wall plate lower cross beam 1210 is suitable for being connected to the battery pack front cross beam 4300.

In the length direction of the vehicle, the front wall plate lower cross beam 1210 is disposed to have a first overlapping region (namely, an overlapping region C in FIG. 9) with the battery pack front cross beam 4300, and the rear wall plate lower cross beam 3210 is suitable for being connected to the battery pack rear cross beam 4400. In the length direction of the vehicle, the rear wall plate lower cross beam 3210 is disposed to have a second overlapping region (namely, an overlapping region D in FIG. 9) with the battery pack rear cross beam 4400. Optionally, a length of the first overlapping region in the length direction of the vehicle body frame is 80 mm to 120 mm, and a length of the second overlapping region in the length direction of the vehicle body frame is 80 mm to 120 mm. The first overlapping region and the second overlapping region are disposed to provide side-surface prevention for the entire battery pack 4000.

In the present disclosure, as shown in the figure, the vehicle may further include a seat front cross beam 2630, a seat rear cross beam 2620, the floor middle cross beam 2513, and a floor middle cross beam reinforcement beam 2514.

The floor middle cross beam 2513 is located in rear of the seat rear cross beam 2620, and the two ends of the floor middle cross beam 2513 are respectively connected to two side wall inner plates 2220 of the vehicle body frame (connected to the two sill beams 2100). The center tunnel 2700 is sequentially connected with the first cross beam 1230, the front wall plate lower cross beam 1210, the seat front cross beam 2630, the seat rear cross beam 2620, the floor middle cross beam 2513, and the floor middle cross beam reinforcement beam 2514 from front to rear.

In this way, the center tunnel 2700 covers the foregoing plurality of horizontal beams from front to rear, and the center tunnel 2700 enhances the first ring structure L001 at the front end of the vehicle and the sixth ring structure L006 at the bottom of the vehicle from front to rear, to form a "full-length" structure of the center tunnel 2700. As shown in FIG. 9, the center tunnel 213 and a center tunnel cover plate form a closed cavity structure at the front portion.

When a seat assembly of the vehicle (which is not shown in the figure, and may be assembled on the seat front cross beam 2630 and the seat rear cross beam 2620) is subject to a Z-direction load (for example, an operating condition such as rapid acceleration and rapid deceleration at a high speed), a coverage structure of the center tunnel 2700 minimizes, to a maximum extent, a risk of lifting a seat. In addition, the "full-length" structure of the center tunnel 2700 helps transfer disperse a front collision force and a side collision force.

As shown in FIG. 9, the first cross beam 1230 is hollow inside and is provided with a reinforcement rib, and the reinforcement rib may be flush with an upper surface of a front end of the center tunnel 2700.

As shown in FIG. 9, a front end of the first cross beam 1230 has an inclined surface, and an upper end of the inclined surface is located in front of a lower end of the inclined surface. Such an arrangement helps avoid cabling of the vehicle, for example, avoid cabling of a motor.

In the present disclosure, a solution in which the battery pack 4000 may extend forward toward the front subframe and extend backward toward the rear subframe, without being obstructed by a front or rear vehicle body member, to increase a capacity of the battery pack 4000 is used.

Optionally, as shown in FIG. 22, a mounting point, namely, a sixth mounting portion 5003, for mounting the front subframe may be disposed on the front compartment battery pack mounting member 5000, and a mounting point, namely, a seventh mounting portion 6123, for mounting the rear subframe may be disposed on the rear compartment battery pack mounting member 6000.

For example, as shown in FIG. 22, the front compartment battery pack mounting member 5000 is provided with the sixth mounting portion 5003, the sixth mounting portion 5003 is configured for mounting the front subframe (namely, the front subframe assembly 1300), the rear compartment battery pack mounting member 6000 is further provided with a seventh mounting portion 6123, and the seventh mounting portion 6123 is configured for mounting the rear subframe (namely, the rear subframe assembly 3300).

In the present disclosure, the battery pack mounting members 5000 and 6000 are located above and in front of a front end surface of the battery pack 4000, and the front wall plate lower cross beam 1210 of the vehicle body frame is located above the front end surface of the battery pack 4000, so that the front end of the battery pack 4000 can extend toward the front subframe of the vehicle body frame. The rear compartment battery pack mounting member 6000 is located above and in rear of a rear end surface of the battery pack 4000, so that the rear end of the battery pack 4000 can extend toward the rear subframe of the vehicle body frame. Such a design helps increase mounting space of the battery pack 4000 in the front-rear direction of the vehicle, helps increase the capacity of the battery pack 4000, and improve endurance of the vehicle.

Optionally, as shown in FIG. 22, a front cross beam of the battery pack 4000 is mounted below the front wall lower cross beam 1210, and the front end surface of the battery pack 4000 is a frontmost end of the battery pack 4000. A front subframe rear cross beam 1310 is mounted below the front compartment battery pack mounting member 5000, and a front subframe rear mounting point 1301 is a rearmost end of the front subframe assembly 1300. A clearance L1 may be disposed between the battery pack front cross beam front end surface 4301 and the front subframe rear mounting point 1301. A width of L1 may be 30 mm to 50 mm.

As shown in FIG. 22, a lower end surface of the front wall lower cross beam 1210 is a lowest end profile of the front wall plate lower cross beam 1210, and all other profiles of this part are higher than the profile (in a Z direction). A lower end surface of the front compartment battery pack mounting member 5000 is a lowest end profile of the front compartment battery pack mounting member 5000, and all other profiles of this part are higher than the profile (in the Z direction). That is, the battery pack front cross beam 4300 may extend forward, without being obstructed by a front mounting point of the battery pack 4000.

The battery pack rear cross beam 4400 is mounted below the rear compartment battery pack mounting member 6000, and a rear end surface of the battery pack rear cross beam 4400 is a rearmost end of an assembly of the battery pack 4000. The rear subframe front cross beam 3310 is mounted below the rear compartment battery pack mounting member 6000, and a rear subframe front mounting point 3301 (which may also be referred to as a rear subframe mounting point 3301) of the rear subframe front cross beam 3310 is a frontmost end of the rear subframe assembly 3300. A clearance L2 may be disposed between the battery pack rear cross beam rear end surface 4401 and the rear subframe rear/front mounting point 3301. A width of L2 may be 30 mm to 50 mm.

Specifically, for the rear compartment battery pack mounting member 6000, a middle portion is provided with a rear subframe front mounting point 3301, and a front portion is provided with a battery pack rear mounting point. The mounting point is located on a lowest end profile of the rear compartment battery pack mounting member 6000, and all other profiles of this part are higher than the mounting point (the Z direction). That is, the battery pack rear cross beam 4400 may extend backward, without being obstructed by the mounting point.

In conclusion, the battery pack 4000 may extend in the front-rear direction of the vehicle body without being obstructed, or may be disposed to abut against the sealing plate of the battery pack 4000 in an up direction, and may abut against a neutral plane of the side wall inner plate 2220 in a right direction and a left direction. That is, maximum space below the vehicle body may be used for the battery pack 4000, and an actual quantity of loadable batteries of the battery pack 4000 is further increased in a physical volume increasing way, to finally achieve longer endurance.

The present disclosure uses a "collapsible" side-direction force transfer frame and implements dispersion of a side-surface load.

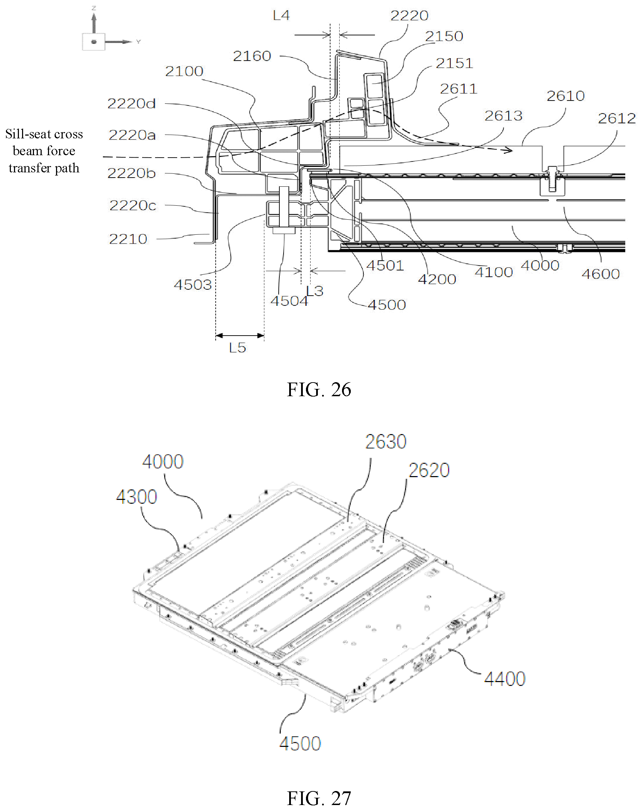

As shown in FIG. 26, the vehicle 1 further includes a connection member. The seat front cross beam 2630 (namely, a seat cross beam 2610) and the seat rear cross beam 2620 (namely, a seat cross beam 2610) may be connected to the side wall inner plate 2220 through the connection member, and end portions of the seat front cross beam 2630 and the seat rear cross beam 2620 in the width direction of the vehicle body frame respectively have clearances with corresponding side wall inner plates 2220. The connection member is a collapsible member.

The clearance is disposed, so that a side wall plate of the vehicle does not directly squeeze the seat front cross beam 2630 (and a closing plate thereof) and the seat rear cross beam 2620 in a Y direction. Instead, a "collapsible" side-direction force transfer frame is formed, to implement dispersion and absorption of a side-surface load. The "collapsible" side-direction force transfer framework implements a Y-direction load requirement.

During mounting, the battery pack 4000 may be assembled together with the seat front cross beam 2630 and the seat rear cross beam 2620, and then, an assembled entirety is mounted on the vehicle body in the Z direction from the bottom of the vehicle. This helps ensure a smallest clearance between the battery pack 4000 and the vehicle body, and uses maximum space below the vehicle body for an arrangement of the battery pack 4000, thereby helping increase endurance.

As shown in FIG. 26, FIG. 56, and FIG. 57, the side wall outer plate 2210 and the side wall inner plate 2220 form a closed cavity, and a sill beam 2100 that extends from front to rear is disposed at a lower layer inside the closed cavity. A front connecting block 2151 is disposed at a position close to an X-direction position of the seat front cross member 2630, and a rear connecting block 2152 is disposed at a position close to an X-direction position of the seat rear cross member 2620. The two connection blocks are fastened to the sill beam 2100 through a sill front diagonal support beam.

On an upper portion of the sealing plate of the battery pack 4000, a force transfer between the side wall of the vehicle 11 and the seat cross beam 2610 is in two states. On an upper half portion, the sill beam 2100 performs a transfer to the seat cross beam 2610 (upper surface) through a connection block and a sill front diagonal support beam and then through a seat cross beam connection plate 2611. On a lower half portion, a Y-direction clearance L4 is disposed between the sill beam 2100 (which is specifically the side wall inner plate 2220) and the seat cross beam 2610 (which is specifically a seat cross beam side end plate 2613), and a width of L4 may be 5 mm to 10 mm.

In conclusion, a side wall of the vehicle and the seat cross beam 2610 are directly fastened through a connection block on an upper portion, and are connected through the clearance L4 on a lower portion. Therefore, when the side wall is subject to a side-surface load, a transfer is first performed through an upper half path, and then energy absorption is performed through a lower half path after the upper portion is damaged.

In the present disclosure, a structure in which the seat cross beam 2610 and the side wall inner plate 2220 overlap in the Y direction is used. A sill is fastened at both the seat cross beam 2610 and a side frame of the battery pack 4000, to form a stable frame.

As shown in FIG. 26, in the present disclosure, optionally, in the width direction of the vehicle, end portions of the seat front cross beam 2630 and the seat rear cross beam 2620 have overlapping regions with a corresponding side wall inner plate 2220 (a sill inner plate).

As shown in FIG. 26, two end portions of the seat cross beam 2610 are enclosed with closing plates, and the ends of the seat cross beam 2610 have Y-direction overlapping regions with the sill inner plate 2110. Above the overlapping region, reinforcement parts such as a connection block and a diagonal support beam (namely, a sill diagonal support beam 2150) of the side wall assembly 2200 are disposed inside the side wall inner plate 2220. When the seat cross beam is subject to a Z-direction upward load, the side wall protects the seat cross beam, to avoid a case in which the seat cross beam is excessively lifted, causing damage to a passenger.

As shown in FIG. 26 to FIG. 28, there are a plurality of Z-direction fixed connections between the vehicle body and an assembly including the battery pack 4000, the seat front cross beam 2630, and the seat rear cross beam 2620, including a fixed connection between the seat cross beam connection plate 2611 and the seat cross beam 2610, and a fixed connection between the battery pack longitudinal beam 4500 and the side wall inner plate 2220 (the sill beam 2100). The plurality of fixed connections further improve integrity of the battery pack 4000 and the vehicle body, thereby forming a stable vehicle body and battery integrated frame.

As shown in FIG. 11, FIG. 26, and FIG. 27, the battery pack front cross beam 4300 may be connected to the front compartment battery pack mounting member 5000 and/or the front wall plate lower cross beam 1210, and the battery pack rear cross beam 4400 may be connected to the rear compartment battery pack mounting member 6000. A battery pack left longitudinal beam and a battery pack right longitudinal beam may be respectively connected to corresponding sill reinforcement beams 2130.

As shown in FIG. 26 to FIG. 28, in the present disclosure, the seat front cross beam 2630 and the seat rear cross beam 2620 are disposed above an upper cover plate of the battery pack and arranged in parallel.

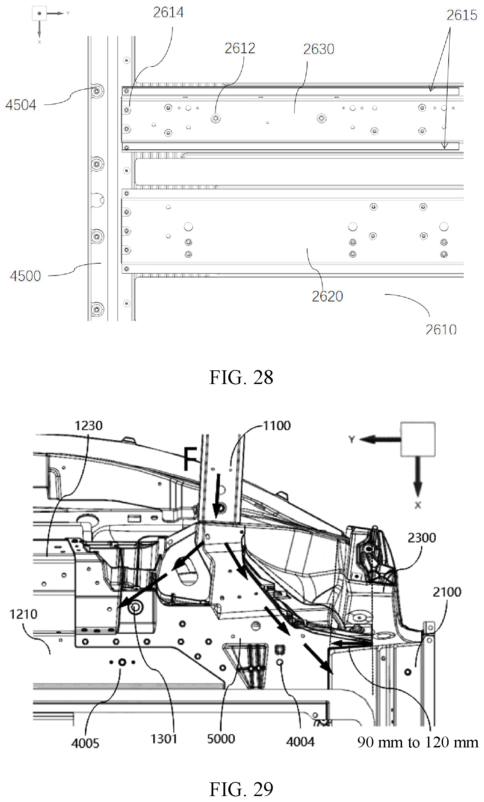

The seat front cross beam 2630 is used as an example. A left end and a right end of the seat front cross beam 2630 are disposed to be of a structure of overlapping the battery pack longitudinal beam 4500 in the Y direction, and are fastened through more than two screws. Such a connection point (a seat cross beam end portion fastening point 2614 shown in FIG. 28) is located on an inner side (near an inside of the vehicle) of the battery pack longitudinal beam 4500, and is parallel to an arrangement of a mounting point of the battery pack 4000. In addition, a Y-direction clearance between the mounting point of the battery pack 4000 and the screw is set to 50 mm to 100 mm. Optionally, the seat front cross beam 2630 may be manufactured by using an aluminum alloy extrusion process, for example, by using an extrusion profile in a closed square shape or in a " 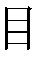 " shape, or may be made of high-strength steel, for example, in a " 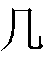 " shape or in an M shape. However, the part of the seat front cross beam 2630 is designed to be in a shape of a straight line, and is arranged in the Y direction to maximize a Y-direction force transfer effect. Two end surfaces of the seat front cross beam 2630 may be designed with a flat closing plate to close the seat front cross beam 2630 to form a completely closed part.

For a bottom connection, as shown in FIG. 28, flanged edges 2615 used to be connected to the upper cover plate of the battery pack 4000 are disposed on two sides of the seat front cross beam 2630, and may be fastened through laser welding, adhesive coating (the seat cross beam may be provided with an adhesive coating surface), or the like. If the seat front cross beam 2630 is in a form of aluminum extrusion, no flanged edge is disposed at an adhesive coating/welding position. If the seat front cross beam 2630 is made of high-strength steel, the flanged edge is welded to the upper cover plate of the battery pack 4000 to ensure connection strength.

For a middle connection, the seat front cross beam 2630 and the battery pack 4000 are connected in a bolted configuration (for example, are connected in the bolted configuration at a position of a seat cross beam middle portion fastened point 2612 in FIG. 26 and FIG. 28). Optionally, bolts may be disposed on a front middle cross beam 4600 and a rear middle cross beam 4700 of the battery pack 4000.

In conclusion, the battery pack 4000, the seat front cross beam, and the seat rear cross beam 2620 may be assembled into an assembly, and then the assembly is assembled with the vehicle body in the Z direction.

In the Y direction, as shown in FIG. 26, there is a clearance L4 between a side end plate of the battery pack longitudinal beam 4500 and a middle surface 2220d of the side wall inner plate, there is a clearance fit L3 between a side end surface (namely, a longitudinal beam upper side end surface 4501) of the battery pack left longitudinal beam and a middle surface 2220a of the side wall inner plate, and there is a clearance fit L5 between a longitudinal beam outer end surface 4503 and a lower surface 2220c of the side wall inner plate.

In the Z direction, the seat front cross beam 2630 and the seat cross beam connection plate 2611 are fastened to an upper surface of the seat front cross beam 2630 in a bolted configuration, or the like. A left mounting point on the battery pack longitudinal beam 4500 is fastened below the sill beam 2100 (specifically, to a lower end surface 2220b of the side wall inner plate) through a bolt 4504, or the like. The battery pack 4000 and the vehicle body are sealed through a sealing foam (battery pack sealing foam 4200).

In the foregoing assembly process, a tolerance between the Y direction and the Z direction may be absorbed by the seat cross beam connection plate. The sealing foam may be adhered (assembled) to the upper cover plate of the battery pack 4000, and then an assembly 6Z is assembled in the Z direction from bottom to top.

It may be learned from the foregoing Z-direction assembly process that a clearance between the battery pack 4000 and the vehicle body is greatly reduced, thereby greatly increasing space used for the battery pack 4000 below the vehicle body, and increasing endurance of the vehicle.

In the present disclosure, a Z-direction pure flat battery pack sealing plate structure is used to form a solution for sealing the battery pack 4000 and the vehicle body.

Optionally, as shown in FIG. 26, the vehicle may include a sealing member 4100 (which may also be referred to as a battery pack sealing portion 4100). The sealing member 4100 is disposed at the bottom of the vehicle body frame, and is configured to be in hermetical contact with the upper cover plate of the battery pack 4000.

Optionally, the sealing member 4100 is constructed as an annular flat plate with a same thickness.

As shown in FIG. 3, FIG. 10, FIG. 24, and FIG. 25, the battery pack mounting surface 7300 of the front compartment battery pack mounting member 5000, the lower end surface (namely, the battery pack mounting surface 1212 of the front wall plate lower cross beam 1210) of the front wall plate lower cross beam, the middle surface (namely, the battery pack mounting surface 2104 of the sill beam 2100) of the side wall inner plate 2220, and a lower end surface (the rear floor battery pack mounting surface 2516) of the rear floor 2500 are flush in the height direction of the vehicle body frame, to jointly construct a mounting surface for mounting the sealing member 4100.

As shown in FIG. 26, the side wall inner plate 2220 is a stepped cross section, and three horizontal (flat) planes are disposed in an inner-to-outer direction, including the middle surface 2220d of the side wall inner plate 2220.

The battery pack mounting surface is a pure flat surface on an XY plane, and may be parallel to an XY plane of the vehicle. The lower end surface of the front wall plate lower cross beam 1210, the middle surface 2220d of the side wall inner plate 2220, and the lower end surface of the rear floor 2500 are at a same Z-direction height as the battery pack mounting surface 7300 of the battery pack mounting member, to form a Z-direction pure flat mounting surface. The battery pack sealing member 4100 is disposed below the mounting surface, and is fastened by using a structural adhesive.

The sealing member 4100 may be a flat plate part with a thickness of 1 mm to 5 mm (in the Z direction), surround the mounting surface, and is in a " 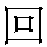 " shape and is of a hollow structure. The sealing plate and the battery pack 4000 are sealed through the sealing foam, to prevent substances such as air or water outside the vehicle from entering the vehicle (passenger compartment). The sealing foam may be of a silicone material, or may be of another sealing material, but is of a planar (parallel to the XY plane) structure.

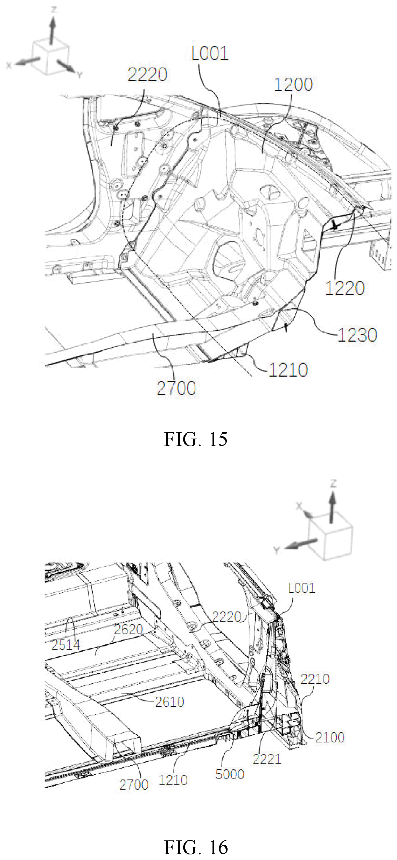

In the present disclosure, as shown in FIG. 15 and FIG. 16, the front wall plate upper cross beam 1220 and the front wall plate 1200 form a closed cavity, which extends in the left-right direction above the front wall plate 1200, and is connected to two side wall inner plates 2220 in the left-right direction. The side wall inner plate 2220 and the side wall outer plate 2210 form a closed cavity at a position of an A-pillar 2300 at a front end of the passenger compartment. At the position of the A-pillar 2300, in the cavity formed by using the side wall inner plate 2220 and the side wall outer plate 2210, a side wall inner plate closing plate 2221 and a sill beam 2100 located on a lower portion of the cavity are further provided. At a position on the lower portion of the side wall inner plate 2220, the front compartment battery pack mounting member 5000 is connected.

As shown in FIG. 17 and FIG. 18, the rear wall upper cross beam 3220 may include a top cover rear cross beam upper plate 2820 and a top cover rear cross beam lower plate 2830. The top cover rear cross beam upper plate 2820 and the top cover rear cross beam lower plate 2830 are fastened to form a closed cavity, which extends in the left-right direction to be connected to the side wall. An outer side is specifically connected to the C-pillar rear reinforcement plate 2412, and an inner side is connected to the side wall inner plate 2220. The side wall inner plate 2220 and the side wall outer plate 2210 form a closed cavity at a position of a C-pillar 2400 at a rear end of the passenger compartment. At the position of the C-pillar 2400, the C-pillar rear reinforcement plate 2412 is further disposed in the cavity, and the C-pillar rear reinforcement plate 2412 and the side wall inner plate 2220 form a closed cavity. The rear compartment battery pack mounting member 6000 abuts with the side wall inner plate 2220 and the rear wall plate 3200 in the front. A rear lower portion of the rear wall plate 3200 is provided with the rear wall lower cross beam 3210 that extends in the left-right direction. The rear wall lower cross beam 3210 is connected to the side wall inner plate 2220 through the rear compartment battery pack mounting member 6000.

In conclusion, in the present disclosure, a plurality of ring structures such as the first ring structure L001, the second ring structure L002, the third ring structure L003, the fourth ring structure L004, the fifth ring structure L005, the sixth ring structure L006, and the seventh ring structure L007 are disposed, and corresponding ring structures are connected, so that the battery pack 4000 and the vehicle body form an integral force transfer frame. When the battery pack 4000 is subject to a front-surface or side-surface external force (for example, the vehicle is in an operating condition of a front collision, a side collision, or a side pillar collision), the force may be transferred through the directly connected rings. Related functions of the plurality of ring structures may greatly enhance torsional rigidity and a modality of the vehicle, and improve crashworthiness performance of the vehicle. In addition, the first ring structure L001 at the front end and the third ring structure L003 at the rear end are disposed perpendicular to the bottom ring structure (for example, the second ring structure L002 and the sixth ring structure L006) of the battery pack 4000, and the second ring structure L002 and the sixth ring structure L006 are disposed in parallel to the seventh ring structure L007 of the battery pack 4000, to further protect the battery pack 4000 from maximum damage caused by a collision.

According to the foregoing solution, a frame structure of a vehicle body and battery integrated set that has a good vehicle collision force transfer effect and maximum space used for the battery pack 4000 can be obtained.

In the present disclosure, the vehicle may be a hybrid vehicle, or may be a battery electric vehicle. The present disclosure sets no limitation thereto. In addition, the present disclosure also sets no limitation on a model. The model may be a car, or may be another model, for example, may be a sports car.

Optionally, the vehicle in the present disclosure may be a battery electric vehicle without a conventional B-pillar, and in particular, may be a battery electric sports car without a conventional B-pillar.

Automobile lightweighting is a core technology and an important development direction of the automobile industry, and has become the development strategy of the national manufacturing industry. Automobile lightweighting is to reduce a vehicle weight without reducing vehicle safety, reliability, comfort, and cost controllability, thereby improving a power economy of the vehicle. With implementation of national carbon neutralization and energy-saving and emission reduction policies, a future vehicle development direction is necessarily full electrification. However, because a battery has lower specific energy than fuel oil, to achieve endurance mileage comparable with that of a fuel vehicle, a weight of the battery is usually increased to 500 kg or more, accounting for 20-30% of a weight of the vehicle. Therefore, a lightweighting demand for a new energy vehicle, especially a long-range battery electric vehicle, is more urgent.

As one of five major components of the vehicle, a body in white has a weight accounting for about a quarter of the weight of the vehicle. Vehicle lightweighting may be implemented by reducing the weight of the body in white. Usually, the weight of the body in white may be reduced through material replacement, structural optimization, process optimization, and the like. For example, the weight of the body in white is reduced by using ultra-high-strength steel, hot-formed steel, aluminum alloy, plastic, and a reinforced composite material. A carbon fibre composite material (CFRP) has advantages of high specific strength (more than 5 times of that of steel), high degree of design freedom, corrosion resistance, and fatigue resistance. The weight may be finally reduced by about 40% to 50% by replacing a steel vehicle body by the carbon fibre composite material. However, at present, domestic research on a carbon fiber composite material for the vehicle body mainly focuses on an application to a single part, for example, cover members such as a machine cover and a top cover. There is little in-depth research on an application of the carbon fiber composite material to a vehicle body structure assembly, and there is a long way to go for batch production.

It is well known that, there is no precedent for developing a new energy sports car in the industry. First, a sports car requires ultra-high performance, and a new breakthrough in a vehicle body architecture is needed to meet higher performance and a lighter weight. However, an existing vehicle body architecture is generally in a conventional metal form, and can hardly meet a high performance requirement of the sports car. Second, ultimate driving performance of the sports car is very common. If driving comfort needs to be integrated, for example, configuring air suspension is a huge challenge.

Certainly, the sports car further needs to meet a specific modeling appearance requirement, for example, has a lower vehicle height than a conventional passenger car, and has a lower-slung and more avant-garde front-end model. However, for a new energy vehicle, especially a battery electric vehicle, three-electric systems such as a power assembly (battery pack 4000), a motor, and a motor controller are indispensable. In addition, volumes and performance of these systems have a positive correlation. For example, to achieve an ultra-high vehicle horsepower or power, more motors need to be arranged, and to achieve ultra-long endurance, more modules of the battery pack 4000 need to be arranged. The foregoing imposes more requirements for the vehicle body architecture of the battery electric sports car.

Currently, for the sports car, a relatively direct way is to use a component of a conventional passenger car. However, this measure causes many problems such as a vehicle arrangement, a collision safety policy, and a configuration distribution.

The battery electric sports car is in a two-door form and has no B-pillar structure of a conventional vehicle model. The B-pillar structure greatly affects a side collision and top load testing of the vehicle. To meet strict side collision and top load requirements, a new side wall reinforcement structure needs to be designed without the B-pillar of the conventional vehicle. Therefore, in the present disclosure, a design of the vehicle body and a design of connection to the battery pack 4000 enable the vehicle to meet a requirement.

The foregoing roughly describes parts of the vehicle such as the front longitudinal beam 1100, the battery pack mounting member (the front compartment battery pack mounting member 5000 and the rear compartment battery pack mounting member 6000), the sill beam 2100, the A-pillar 2300, the C-pillar 2400, the first cross beam 1230, the front wall lower cross beam 1210, the front wall upper cross beam 1220, the front wall plate 1200, the side wall plate, the rear wall plate 3200, the rear wall lower cross beam 3210, the rear longitudinal beam 3100, the floor middle cross beam, the floor rear cross beam, the center tunnel 2700, the seat cross beam, and the battery pack 4000, and relative positions and corresponding connection relationships. The following specifically describes a specific connection structure between related parts with reference to the accompanying drawings.

Connection castings may be added between a front compartment and the passenger compartment and between a rear compartment and the passenger compartment. The connection castings may be used for mounting structures such as the battery pack and a force transfer structure.

For ease of description, a connection casting between the front compartment and the passenger compartment is defined as a battery pack mounting member, and a connection casting between the rear compartment frame 3000 and the passenger compartment is defined as a connection integrated member 6000. The battery mounting member and the connection integrated member may be separately connected to a plurality of vehicle body structural members, which are separately described below.

### I. Connection integrated member

As shown in FIG. 1 to FIG. 5, in a front-rear direction of a vehicle, a connection integrated member 6000 (namely, a rear compartment battery pack mounting member) may be disposed between a rear compartment frame 3000 and a passenger compartment frame 2000, and the connection integrated member 6000 is separately connected to the rear compartment frame 3000 and the passenger compartment frame 2000. The connection integrated member may be an integral member. It should be explained that, the "integral member" herein means that the connection integrated member is a separate part, and the connection integrated member may be specifically an integrally formed member, or may be a member formed by connecting a plurality of parts. Compared with a conventional solution in which a front compartment frame 1000 and the passenger compartment frame 2000 are connected through splicing (electric welding, welding, soldering, bolting, and the like) by using a plurality of sheet metal parts, this design can improve a degree of integration of the connection integrated member, and simplify an assembly process.

In an embodiment in which the connection integrated member is integrally formed, due to splicing of the plurality of parts, strength of a connection region is distributed in a stepped pattern (there is a potential failure point and connection strength is low), or a lapping edge redundancy structure exists (which affects lightweighting). An integrally formed design may effectively avoid the foregoing problems and implement lightweighting and enhance rigidity of an integrated member. In addition, a topology optimization design can be further added, to further improve a lightweighting design effect and proper strength of a force transfer path theoretically.

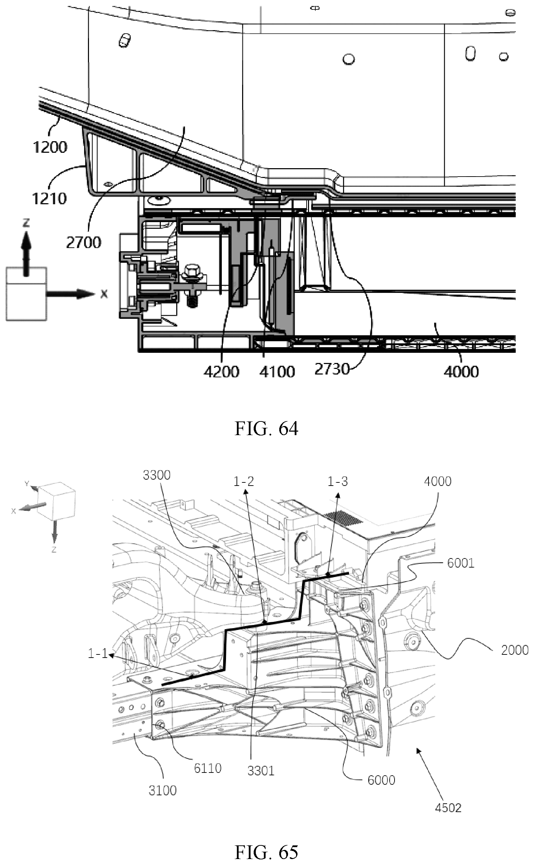

As shown in FIG. 65, in this embodiment of the present disclosure, the connection integrated member may be formed with a first mounting surface 6001, and the first mounting surface may be constructed as at least a part of a battery pack mounting surface 4502 (or referred to as a second battery pack mounting surface). A battery pack is fastened to the connection integrated member through the first mounting surface. In this way, rigidity of a battery pack mounting point can be enhanced. In addition, when the rear compartment frame 3000 of the vehicle is subject to impact, an impact force is transferred to the battery pack through the connection integrated member, to disperse the impact through the battery pack, enhance rigidity of a vehicle body by using a large area attribute of the battery pack, and reduce damage to the passenger compartment frame 2000.

As shown in FIG. 18, FIG. 29, and FIG. 38, in this embodiment of the present disclosure, the passenger compartment frame 2000 may include a sill beam 2100, and at least a partial bottom surface of the sill beam may be constructed as at least a part of the battery pack mounting surface 4502. Forming the battery pack mounting surface on the sill beam may further improve connection strength between the battery pack and the vehicle body, and connecting the battery pack and the sill beam together may better disperse an impact force from the rear, and avoid damage caused by stress concentration.

As shown in FIG. 18, in this embodiment of the present disclosure, the first mounting surface 6001 and at least the partial bottom surface of the sill beam 2100 are flush on a horizontal plane. It should be explained that, "flush" herein does not require that the first mounting surface and at least the partial bottom surface of the sill beam are absolutely at an equal height in a height direction, but means that heights of the first mounting surface and at least the partial bottom surface of the sill beam approach a same height, to facilitate mounting of the battery pack. In this design, when the battery pack is mounted on the vehicle body, because the first mounting surface and at least the partial bottom surface of the sill beam are flush, it only needs to fasten an upper-side connection surface of the battery pack to the first mounting surface and at least the partial bottom surface of the sill beam. There is no mounting interference, and a height of the vehicle body is reduced.

As shown in FIG. 18, in this embodiment of the present disclosure, in a width direction of the vehicle, at least a part of the first mounting surface 6001 may be located on an inner side of the sill beam 2100. In this case, "inner side" is a side of the sill beam near an axis of the vehicle in the width direction of the vehicle. In this design, the integrated member supports the battery pack in a length direction, and also supports the battery pack in the width direction, to expand a connection area between the battery pack and the vehicle body, thereby improving mounting stability and mounting strength of the battery pack and the sill beam, improving integration, and improving integrity of the battery pack and the vehicle body. In addition, the battery pack can be extended in the width direction, to increase a volume.

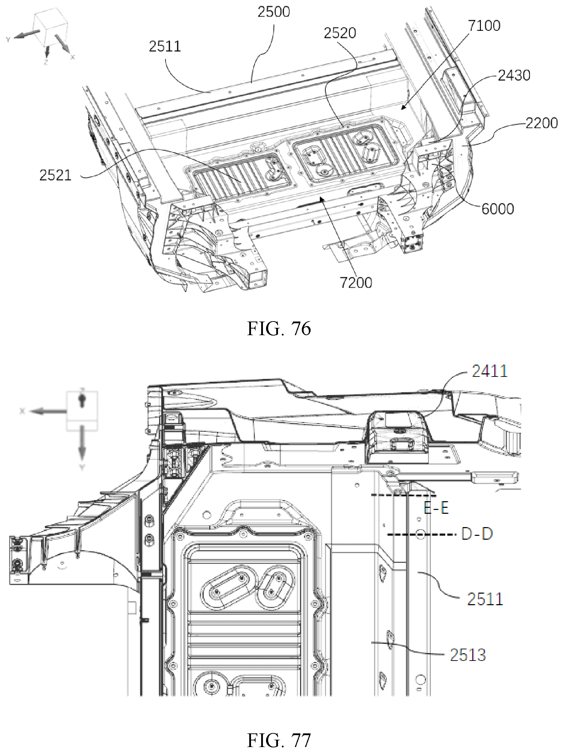

As shown in FIG. 76, in this embodiment of the present disclosure, the passenger compartment frame 2000 may further include a first connection plate 2520, and the first connection plate is connected to the sill beam. Two sides of the first connection plate are connected to sill beams on the two sides, to improve connection stability of a vehicle body frame, and improve a force transfer effect.

Further, as shown in FIG. 76, in this embodiment of the present disclosure, the battery pack may be further included, and the battery pack and the first connection plate may be spaced in the height direction of the vehicle, to form accommodating space. The accommodating space may be used to place an on-board charger. In this case, the battery pack may serve as a base for placing the on-board charger. The on-board charger and the battery pack may be detachably connected. In this case, the sill beams on the two sides of the first connection plate may protect the on-board charger in the accommodating space.

As shown in FIG. 76, in this embodiment of the present disclosure, the passenger compartment frame 2000 may further include a second connection plate 2500 (namely, a rear floor). The second connection plate 2500 is connected to at least one of the first connection plate and the sill beam 2100, and the battery pack, the first connection plate, the second connection plate 2500, and the sill beam may form accommodating space. For the accommodating space, the sill beam and a side wall assembly 2200 of the vehicle are on a left side and a right side, the battery pack is on a lower side, and the second connection plate 2500 is on a front side. The second connection plate 2500 may further form a floor beam (the floor beam is enclosed and formed by the first connection plate, the rear floor cover plate, and a floor front beam) with another component. These components form relatively strong accommodating space to protect the on-board charger. In addition, it is also equivalent to forming a cavity (accommodating space) for energy absorption on a rear side of the vehicle, to reduce a risk of a passenger in a passenger compartment.

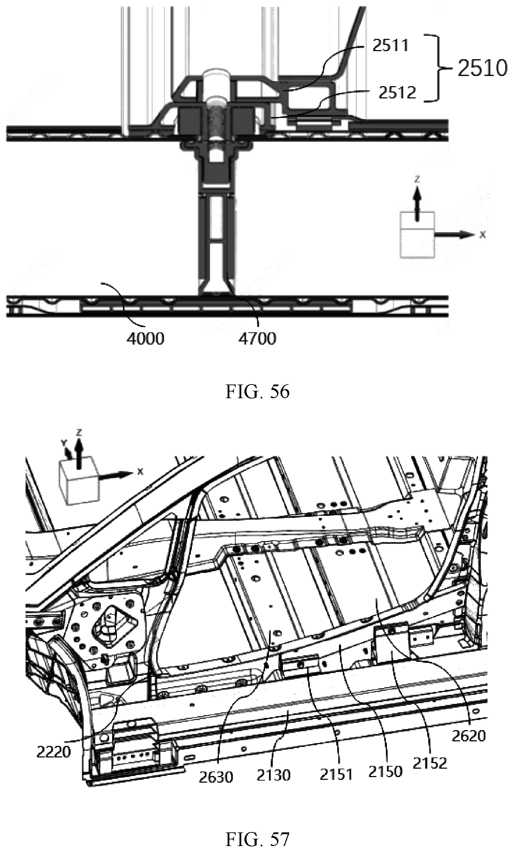

As shown in FIG. 56 and FIG. 76 to FIG. 79, in this embodiment of the present disclosure, the floor front beam may include an upper cross beam and a lower cross beam. The upper cross beam, the lower cross beam, and the battery pack may be connected in the height direction. The upper cross beam at least partially extends forward between a rear floor cover plate and a rear floor, and the lower cross beam is connected to the battery pack, so that the battery pack is connected to the vehicle body.

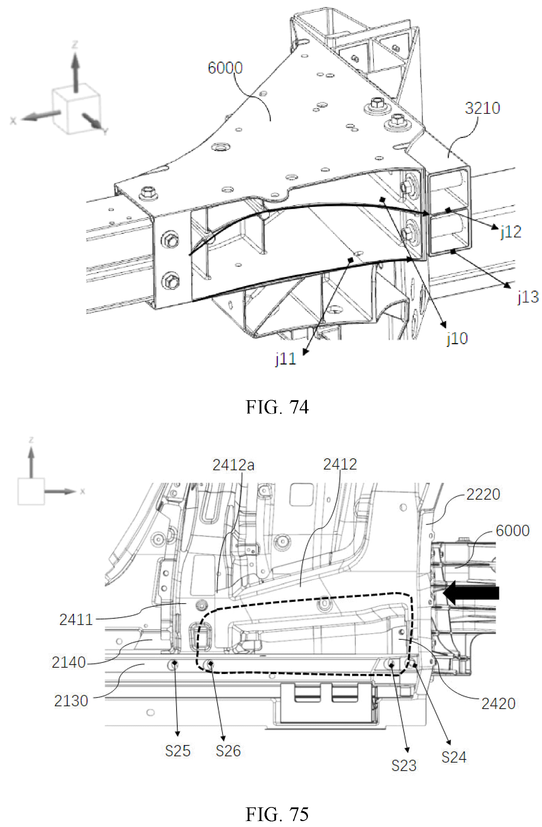

As shown in FIG. 75 and FIG. 76, in this embodiment of the present disclosure, the floor beam, the sill beam 2100, and a cross beam of the battery pack may form a closed-loop structure, to improve force transfer and torsion resistance performance of the vehicle body.

As shown in FIG. 76, in this embodiment of the present disclosure, the battery pack, the first connection plate, the second connection plate 2500, the sill beam 2100, and the connection integrated member 6000 may form accommodating space. In this design, the connection integrated member may also protect the on-board charger in the accommodating space at a rear end.

The present disclosure sets no limitation on a connection form of the first connection plate and the second connection plate 2500. For example, in this embodiment of the present disclosure, the first connection plate and the second connection plate 2500 may be integrally formed. This design can reduce assembly steps of the vehicle and reduce difficulty in an assembly process.

As shown in FIG. 76, in an example of the present disclosure, an access panel 2521 may be disposed on the first connection plate, to facilitate an overhaul of a device in the accommodating space. When the device in the accommodating space needs to be overhauled, it only needs to open the access panel on the lower side to perform overhaul.

As shown in FIG. 8, in this embodiment of the present disclosure, two connection integrated members are spaced in the width direction of the vehicle. The vehicle may further include a rear wall cross beam 3210 (namely, a rear wall lower cross beam), and two ends of the rear wall cross beam 3210 may be respectively connected to the two connection integrated members 600. In this design, a force transfer capability of the connection integrated member can be improved. That is, a force may be transferred toward two sides in addition to being transferred to the front and the rear. In addition, when the battery pack is connected to the connection integrated member, in addition to enhancing rigidity of the passenger compartment, the rear wall cross beam can also suppress flipping of the front longitudinal beam 1100 in a vertical direction. Specifically, the rear wall cross beam is connected to the connection integrated member. When the vehicle is subject to rear impact, the connection integrated member may transfer the impact to the rear wall cross beam, and further disperse such an impact force to a rear wall plate 3200 through the rear wall cross beam, to avoid damage caused by stress concentration to the passenger compartment frame 2000. In this embodiment of the present disclosure, the rear wall cross beam may be integrally formed.

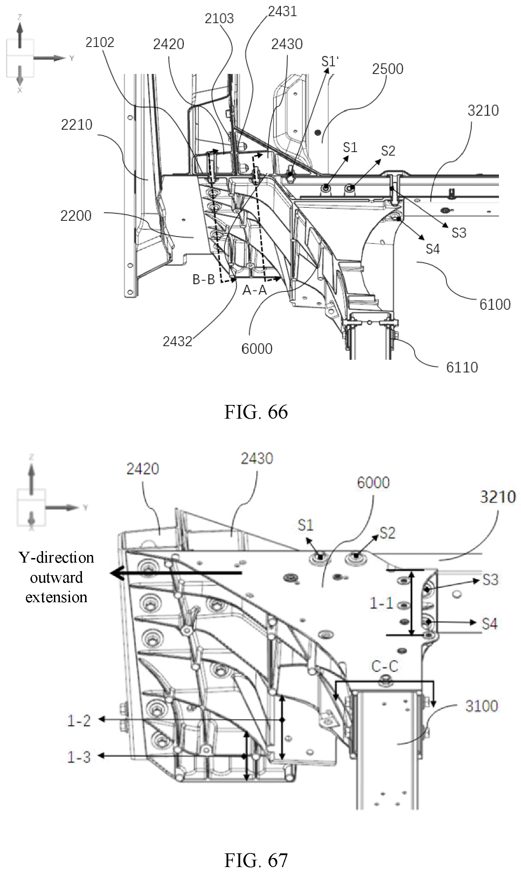

As shown in FIG. 66, in this embodiment of the present disclosure, the connection integrated member 6000 may further include a connection portion 6100. One end of the connection portion may be connected to the rear wall cross beam, and the other end of the connection portion 6100 may be formed a rear longitudinal beam connection portion 6110. A rear longitudinal beam 3100 and the rear wall cross beam are connected through the connection integrated member, so that when the rear side of the vehicle is subject to a collision, a forward impact force of the rear longitudinal beam may be transferred to the rear wall cross beam through the connection integrated member, to disperse the impact force to the rear wall plate 3200, or the like. Specifically, as shown in the figure, the connection portion is provided with an accommodating portion on a side of the sill beam away from the vehicle, and is connected to the rear wall cross beam through the accommodating portion.

Further, to better transfer a force between the rear longitudinal beam and the rear wall cross beam in the front-rear direction, as shown in FIG. 65 and FIG. 66, in this embodiment of the present disclosure, a projection of the rear wall cross beam 3210 in the front-rear direction of the vehicle and a projection of the rear longitudinal beam connection portion 6110 in the front-rear direction of the vehicle may at least partially overlap, and such an overlapping portion may achieve a better force transfer effect when a force is transferred from the rear to the front. In addition, a force transfer area can be effectively increased, and pressure can be reduced, to prevent the rear longitudinal beam from intruding into the passenger compartment when being subject to a force. It will be noted that, in some other embodiments, the projection of the rear wall cross beam in the front-rear direction of the vehicle and the projection of the rear longitudinal beam connection portion in the front-rear direction of the vehicle may completely overlap. The present disclosure sets no limitation on a size of an overlapping portion.

As shown in FIG. 25, in this embodiment of the present disclosure, an upper surface of the connection integrated member 6000 may include a protruding plate 6002 that extends forward from a front end, and is configured to lap an upper surface of the rear wall cross beam 3210, and a lower surface of the connection integrated member 6000 is configured to be flush with a lower surface of the rear wall cross beam 3210. The protruding plate 6002 is configured to be connected to the upper surface of the rear wall cross beam, and a front surface of the connection integrated member is configured to be connected to a rear surface of the rear wall cross beam. A cross section of the rear wall cross beam may be constructed to be in a " 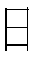 " shape, and the connection integrated member may be further formed with a first reinforcement rib j10 aligned with a first intermediate rib j12 of the rear wall cross beam. The foregoing design can improve a force transfer effect between the connection integrated member and the rear wall cross beam.

Similarly, in this embodiment of the present disclosure, the projection of the rear longitudinal beam in the front-rear direction of the vehicle and the projection of the rear wall cross beam in the front-rear direction of the vehicle may at least partially overlap, to better transfer a force of the rear longitudinal beam to the rear wall cross beam.

As shown in FIG. 65 and FIG. 66, in this embodiment of the present disclosure, a projection of the rear wall cross beam 3210 in the left-right direction of the vehicle and a projection of the rear longitudinal beam connection portion 6110 in the left-right direction of the vehicle may at least partially overlap. This design can achieve an effect of transferring a force in the width direction of the vehicle. For example, when the rear longitudinal beam 3100 is subject to impact in the width direction of the vehicle, a force may be transferred to the rear wall cross beam.

As shown in FIG. 76, to ensure ventilation of the accommodating space and avoid thermal damage, as shown in the figure, in this embodiment of the present disclosure, the rear wall cross beam and the battery pack 4000 are spaced in the height direction of the vehicle, so that an air vent 7200 connected to the accommodating space 7100 is formed between the battery pack and the rear wall cross beam 3210. In addition to a ventilation effect, the air vent may further cushion a component arranged in the accommodating space. For example, when a front side of the vehicle is subject to a collision, the component in the accommodating space may be cushioned by a backward displacement of the air vent, to reduce collision damage caused by a collision.

As shown in FIG. 76, in this embodiment of the present disclosure, in the height direction of the vehicle, the rear wall cross beam 3210 may be located on a side of the first connection plate 2520 that is away from the battery pack, to form the accommodating space 7100 and the air vent 7200.

As shown in FIG. 76, in this embodiment of the present disclosure, in the height direction of the vehicle, the first connection plate may be located on an upper side of the first mounting surface, to form the accommodating space and the air vent.

As shown in FIG. 23 and FIG. 65, in this embodiment of the present disclosure, the connection integrated member 6000 may be formed with a rear subframe mounting point 3301 (namely, a rear subframe front mounting point), to connect a rear subframe assembly 3300 and the connection integrated member 6000. In this design, the rear subframe assembly is mounted on the connection integrated member. When the rear side of the vehicle is subject to a collision, an impact force from the rear longitudinal beam may greatly disperse a collision force to an entire vehicle body bottom plate structure through the rear subframe assembly. The rear subframe assembly participates in a force transfer at the bottom of the vehicle, to improve performance such as collision safety and torsional rigidity.

As shown in FIG. 65, in this embodiment of the present disclosure, in the height direction of the vehicle, a plane on which the rear subframe mounting point 3301 is located is located on an upper side of the first mounting surface 6001. In this design, when the rear subframe assembly moves forward when being subject to a rear-side impact force, the rear subframe assembly is staggered with the battery pack 4000 in the height direction, to avoid causing damage to the battery pack when the rear subframe assembly directly collides with the battery pack. Specifically, when the connection integrated member is constructed to be in a stepped shape in the figure, when being subject to a force, the rear subframe assembly may directly transfer the force to the connection integrated member through a front side step surface, and further disperse the force through another component that fits the connection integrated member. Specifically, in the embodiment shown in FIG. 65 and FIG. 67, the connection integrated member may be constructed to be in a stepped shape and include a first step 1-3 and a second step 1-2 that are adjacent in the height direction, a rear end of the first step 1-3 is closer to the passenger compartment than a rear end of the second step 1-2, the second step 1-2 is provided with a rear subframe mounting point, and the first step 1-3 is located on a front side of the rear subframe mounting point, to limit a forward displacement of the rear subframe assembly 3300.

In some embodiments, in the height direction, the rear subframe mounting point may be closer to a connection portion used to connect the rear wall cross beam. In this design, a force can be better transferred to the rear wall cross beam, to reduce torque of the rear subframe cross beam in the vertical direction.

As shown in FIG. 23 and FIG. 65, in this embodiment of the present disclosure, in the front-rear direction of the vehicle, the rear subframe mounting point 3301 may be located on a rear side of a connection point between the battery pack 4000 and the connection integrated member 6000 that are of the vehicle. In this design, a rear subframe can be formed a rear-side limiting surface of the battery pack, so that the battery pack can extend all the way to the subframe, to increase a capacity of the battery pack. In addition, when the rear subframe assembly transfers a force forward, the battery pack can further serve as a force transfer path. In this way, a force transfer path is added when it is ensured that the battery pack is not directly collided with, thereby implementing a dispersed force transfer.

As shown in FIG. 65, in this embodiment of the present disclosure, in the height direction of the vehicle, the first mounting surface 6001 may be located on a lower side of the rear subframe mounting point 3301, and the rear longitudinal beam connection portion 6110 may be located on an upper side of the rear subframe mounting point 3301. In this design, a plurality of force transfer paths may be formed in the height direction of the vehicle, thereby reducing a degree of damage to the passenger compartment.

As shown in FIG. 65, in this embodiment of the present disclosure, the connection integrated member 6000 may further include the rear longitudinal beam connection portion 6110. In the front-rear direction of the vehicle, the rear longitudinal beam connection portion 6110 may be located on a rear side of the rear subframe mounting point 3301. When the vehicle is subject to a rear-side collision force, a rear longitudinal beam is first subject to a force, and the rear longitudinal beam connection portion is disposed on the rear side, so that a cross-sectional area of the connection integrated member from the rear to the front can be further gradually increased when a multi-layer force transfer structure can be formed.

As shown in FIG. 65, in this embodiment of the present disclosure, in the height direction of the vehicle, the rear longitudinal beam connection portion 6110 may be located on an upper side of a plane on which the rear subframe mounting point 3301 is located. In this design, when the vehicle is subject to rear-side impact, a double-layer force transfer path may be formed in the front-rear direction, to avoid stress concentration and reduce damage to the passenger compartment.

Specifically, as shown in FIG. 67, in this embodiment of the present disclosure, the connection integrated member 6000 may include a third step 1-1 adjacent to the second step 1-2 in the height direction, and the rear end of the second step 1-2 is closer to a cockpit 200 than a rear end of the third step 1-1. The rear longitudinal beam 3100 and the rear wall cross beam 3210 are separately disposed on the third step 1-1, so that the rear wall cross beam may be flush with the rear longitudinal beam in the height direction.

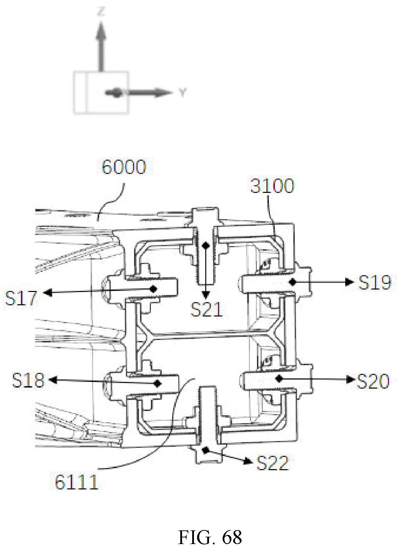

Specifically, as shown in FIG. 68, in this embodiment of the present disclosure, a first opening 6111 may be formed at a rear end of the connection integrated member, and the rear longitudinal beam 3100 may extend into and be fastened inside the first opening 6111. A cross section of the rear longitudinal beam may be constructed to be in a double-square shape, and chamfers are formed at all corners, to improve connection strength and a force transfer effect between the connection integrated member and the rear longitudinal beam.

As shown in FIG. 10, in this embodiment of the present disclosure, the passenger compartment frame 2000 may include a sill beam 2100, and the connection integrated member is connected to a rear end of the sill beam 2100. The connection integrated member is connected to the sill beam, so that when the vehicle is subject to a rear side collision, a collision force of the rear longitudinal beam is transferred to the sill beam through the connection integrated member, to disperse the collision force, thereby improving performance such as vehicle collision safety and torsional rigidity.

As shown in FIG. 66, in this embodiment of the present disclosure, the sill beam 2100 may have a first connection surface 2102 and a second connection surface 2103 that cross each other, and both the first connection surface and the second connection surface may be connected to the connection integrated member. The present disclosure sets no limitation on a cross angle, which may be 90 degrees, 80 degrees, or the like. In this design, according to one aspect, forces can be transferred from two different angles, and the passenger compartment can be protected from different angles. According to a second aspect, the sill beam, the connection integrated member, and the battery pack may be better connected, to perform reinforcement from two angles, so that the sill beam, the connection integrated member, and the battery pack are integrated into a whole, thereby enhancing connection rigidity. According to a third aspect, the rear wall cross beam, the two connection integrated members, and the battery pack may form a closed ring herein, and the ring is connected to the sill beam, to improve force transfer performance in the front-rear direction and the left-right direction.

The present disclosure sets no limitation on the first connection surface and the second connection surface. For example, in the shown embodiment, the first connection surface 2102 may be located on a rear-side end surface of the sill beam 2100, and the connection integrated member may be directly connected to the first connection surface. Directly connecting the connection integrated member and the rear-side end surface of the sill beam helps the connection integrated member directly transfer a rear-side collision force to the sill beam, thereby improving a force transfer effect between the connection integrated member and the rear end surface of the sill beam.

In the embodiment shown in FIG. 66, the vehicle may further include an intermediate connection member 2430 (namely, a C-pillar outer panel), the second connection surface 2103 may be an inner side surface of the sill beam 2100, and the connection integrated member 6000 may be connected to the second connection surface 2103 through the intermediate connection member 2430. This design can increase a force transfer area between the connection integrated member and the sill beam, and improve a force transfer effect.

The present disclosure sets no limitation on a structure of the intermediate connection member 2430. For example, in the embodiment shown in FIG. 66, the intermediate connection member 2430 may include a third connection surface 2431 and a fourth connection surface 2432, the third connection surface may be connected to the second connection surface 2103, and the fourth connection surface may be connected to the connection integrated member 6000. Therefore, the connection integrated member may be connected to the inner side surface of the sill beam through the intermediate connection member 2430. Specifically, a cross section of the intermediate connection member 2430 may be a triangle shown in the figure. In this design, because of stability of a triangle, use strength of the intermediate connection member 2430 is higher, and compared with a square, the triangle can improve space utilization.

The present disclosure sets no limitation on a position relationship between the fourth connection surface 2432 and the first connection surface. For example, in the embodiment shown in FIG. 66, the fourth connection surface and the first connection surface may be parallel or may be located on a same plane. This design can increase a force transfer area in the front-rear direction, so that the connection integrated member can simultaneously transfer a force to the sill beam 2100 and the intermediate connection member 2430, to avoid too large pressure in a case of being in contact with only one of the sill beam 2100 and the intermediate connection member 2430.

As shown in FIG. 18 and FIG. 20, a projection of the sill beam 2100 in the front-rear direction of the vehicle and a projection of the connection integrated member 6000 in the front-rear direction of the vehicle may at least partially overlap, to enable the connection integrated member to better transfer the force to the sill beam in the front-rear direction.

Similarly, as shown in FIG. 18 and FIG. 20, in this embodiment of the present disclosure, a projection of the sill beam in the left-right direction of the vehicle and a projection of the connection integrated member in the left-right direction of the vehicle may at least partially overlap, to better transfer the force between the connection integrated member and the sill beam in the width direction of the vehicle.

The present disclosure sets no limitation on a specific construction of the sill beam 2100. For example, in this embodiment of the present disclosure, the sill beam may include a sill body 2100a (namely, a body beam) and a sill reinforcement beam 2130. A sill reinforcement beam accommodating space 2101 is disposed in the body, and the sill reinforcement beam is disposed in the sill reinforcement beam accommodating space 2101. Herein, in this embodiment of the present disclosure, the sill body may be a cavity enclosed and formed by a side wall outer plate 2210 and a side wall inner plate 2220 that are of the vehicle, and parts of the side wall outer plate and the side wall inner plate that correspond to the sill beam may also be referred to as a sill beam outer plate and a sill beam inner plate. The sill beam outer plate and the side wall outer plate may be integrally formed, and the sill beam inner plate and the side wall inner plate may be integrally formed. The connection integrated member may be connected to both the sill body and the sill reinforcement beam, and the intermediate connection member 2430 may be connected to both the sill body and the sill reinforcement beam. The connection integrated member is connected to the sill body 2100a and the sill reinforcement beam, so that connection strength between the connection integrated member and the sill beam can be ensured. The present disclosure sets no limitation on a way of connecting the intermediate connection member 2430 and the sill reinforcement beam. For example, the intermediate connection member 2430 may be indirectly connected to the sill reinforcement beam through the side wall reinforcement member 2420 described below.

As shown in FIG. 66 to FIG. 70, in this embodiment of the present disclosure, the vehicle may further include the side wall reinforcement member 2420 (namely, a C-pillar inner panel), at least a part of the side wall reinforcement member 2420 is disposed in the sill reinforcement beam accommodating space 2101, and the side wall reinforcement member 2420 is connected to both the sill reinforcement beam 2130 and the body 2100a. Specifically, in the shown embodiment, the connection integrated member may be separately connected to the side wall reinforcement member 2420 and the intermediate connection member 2430 through a fastener, the side wall reinforcement member 2420 is connected to the sill reinforcement beam, and the side wall reinforcement member 2420 is further connected to the intermediate connection member 2430 through a fastener. In this design, disposing the side wall reinforcement member 2420 may ensure connection strength between the C-pillar 2400 and each of the sill beam 2100 and the connection integrated member, and can improve strength of the sill beam and the A-pillar 2300.

As shown in FIG. 7, FIG. 71, and FIG. 75, in this embodiment of the present disclosure, a projection of the sill reinforcement beam 2130 in the width direction of the vehicle, a projection of the intermediate connection member 2430 in the width direction of the vehicle, and a projection of the side wall reinforcement member 2420 in the width direction of the vehicle at least partially overlap. In this design, when the vehicle is subject to collisions on two sides, the sill reinforcement beam, the intermediate connection member 2430, and the side wall reinforcement member 2420 can better transfer and disperse collision forces from side surfaces.

As shown in FIG. 75, in this embodiment of the present disclosure, the side wall reinforcement member 2420 may extend out of the sill reinforcement beam accommodating space 2101 to be connected to a C-pillar reinforcement plate 2410 of the vehicle. In this design, pressure from a roof may be transferred downward to the side wall reinforcement member 2420 through the C-pillar reinforcement plate and dispersed through another component connected to the side wall reinforcement member 2420. In addition, when the rear of the vehicle is subject to an impact force, the side wall reinforcement member 2420 may transfer a partial force upward through the C-pillar reinforcement plate 2410 to disperse impact from the rear. In addition, when the side wall reinforcement member 2420 is subject to collisions on a left side and a right side of the vehicle, the impact force may also be transferred to the C-pillar reinforcement plate, so that the impact force can be dispersed to the passenger compartment frame 2000 of the vehicle through a C-pillar, thereby improving performance such as vehicle collision safety and torsional rigidity.

As shown in FIG. 18 and FIG. 20, in this embodiment of the present disclosure, in the height direction of the vehicle, the C-pillar reinforcement plate 2410 may be on an upper side of the sill beam 2100, and further, an impact force to which the sill beam, the side wall reinforcement member 2420, and the like are subject may be transferred upward through the C-pillar reinforcement plate.

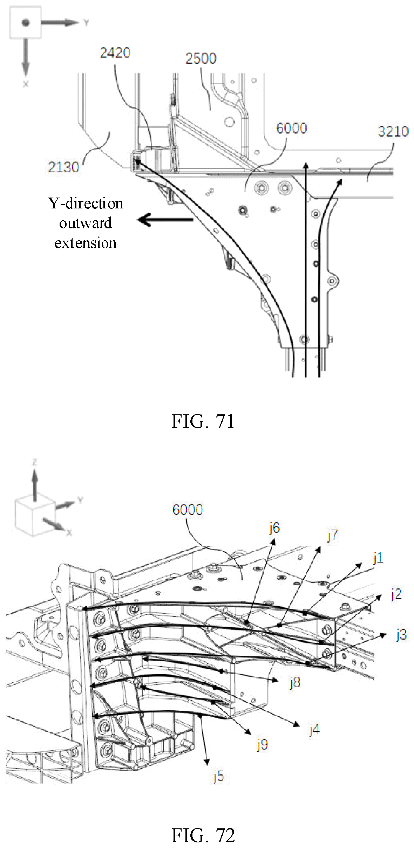

As shown in FIG. 72 and FIG. 74, in an embodiment of the present disclosure, the connection integrated member may further include force transfer ribs j1 to j13, and the force transfer rib may extend toward a sill beam direction in a direction of the rear compartment frame 3000. Disposing the force transfer rib can reinforce a structure of the connection integrated member, and can better transfer an impact force from the rear forward. The present disclosure sets no limitation on a form of the force transfer rib. For example, the force transfer rib may include a main rib and a " 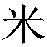 "-shaped rib.

Further, in this embodiment of the present disclosure, a projection of the force transfer rib in the front-rear direction of the vehicle may at least partially overlap a projection of the sill beam in the front-rear direction of the vehicle. In this design, the rear-side impact force can be better transferred to the sill beam through the force transfer rib for dispersion.

As shown in FIG. 26, in this embodiment of the present disclosure, the passenger compartment frame 2000 may further include a seat cross beam 2610. A projection of the sill beam 2100 in the height direction of the vehicle may at least partially overlap a projection of the seat cross beam 2610 in the height direction of the vehicle. This design can physically prevent the seat cross beam from being lifted (the sill beam performs an obstruction function) when being subject to a load for lifting, thereby ensuring safety of the passenger compartment.

As shown in FIG. 26, in this embodiment of the present disclosure, a projection of the sill beam 2100 in the width direction of the vehicle at least partially overlaps a projection of the seat cross beam in the width direction of the vehicle. In this design, when the vehicle is subject to impact from a left side and a right side, the sill beam may transfer a part of the impact force to the seat cross beam. Dispersing the impact force through the seat cross beam may reduce damage of the impact force to the passenger compartment, to protect passenger safety.

As shown in FIG. 9, in this embodiment of the present disclosure, the sill beam may include an accommodating portion 2170, and the accommodating portion is configured to partially accommodate the seat cross beam. The accommodating portion may be formed by using a structure of the sill beam. The present disclosure sets no limitation on a specific shape of the accommodating portion, provided that the accommodating portion can at least partially accommodate the seat cross beam. Specifically, in the shown embodiment, the sill beam may be constructed to be in a stepped shape, and may specifically include a first step surface, a second step surface, and a third step surface that are sequentially arranged in the height direction. A connection surface is formed between the second step surface and the third step surface, and the accommodating portion includes the third step surface and the connection surface. The third step surface overlaps the seat cross beam in the height direction, and the connection surface overlaps the seat cross beam in the width direction.

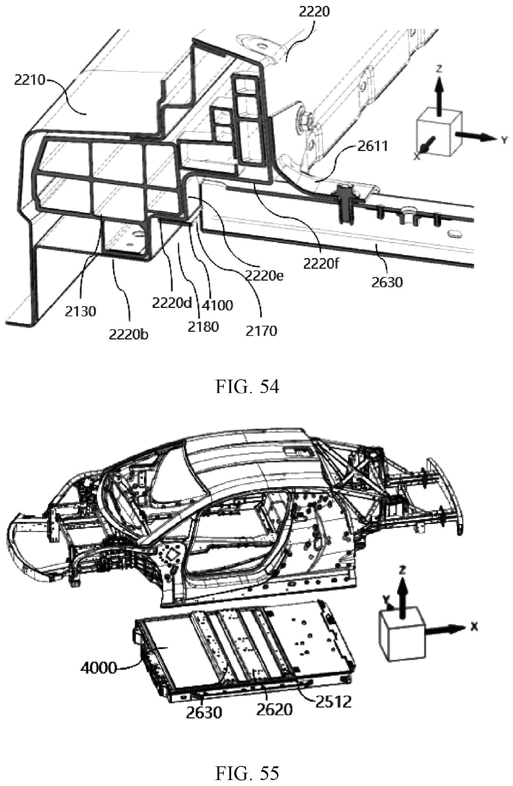

As shown in FIG. 54, in this embodiment of the present disclosure, the sill beam may be provided with a battery pack mounting portion 2180. In the height direction of the vehicle, the battery pack mounting portion may be located on a lower side of the accommodating portion 2170, and in the width direction of the vehicle, the battery pack mounting portion may be located on an outer side of the accommodating portion. In this design, the seat cross beam is connected to the battery pack. A battery pack longitudinal beam 4500 is disposed in a left-right direction of the battery pack. The battery pack longitudinal beam is connected to the battery pack mounting portion of the sill beam, and the seat cross beam is connected to the battery pack longitudinal beam 4500. Therefore, when the seat cross beam is connected to the battery pack, the seat cross beam is still on a lower side of the battery pack, and the seat cross beam is less likely to move in the vertical direction. In addition, the battery pack longitudinal beam and the sill beam are spaced in the width direction of the vehicle, and the seat cross beam and the sill beam are spaced in both the width direction and the height direction. In addition, the seat cross beam and the battery pack may be connected to the following mentioned lateral fastener through a connection plate. When a side collision occurs, a force may be transferred to the lateral fastener through the sill beam, and then transferred to the seat cross beam. However, the lateral fastener is relatively weak, and the seat cross beam, the battery pack, and the sill beam 2100 are spaced in the width direction. Therefore, there is a collapse distance during a force transfer. Then, a force is transferred to the seat cross beam, to form a multi-layer force transfer in the vertical direction, and form a multi-segment force transfer in the left-right direction.

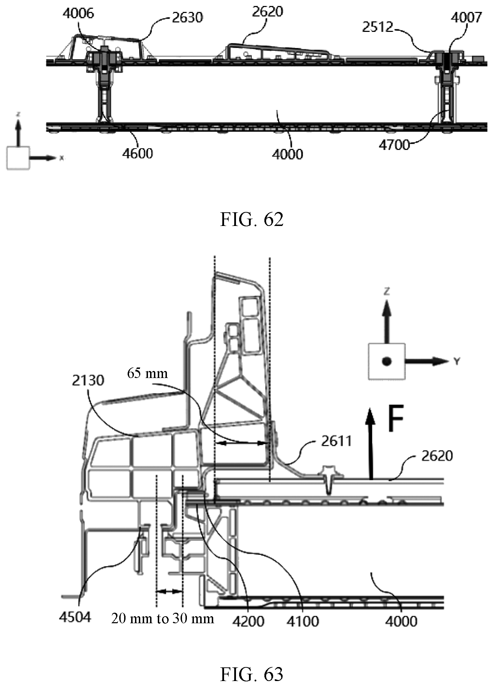

As shown in FIG. 63 and FIG. 64, in this embodiment of the present disclosure, the sill beam 2100 may be further provided with a battery pack sealing portion 4100 (namely, a sealing member). It should be explained that, the battery pack sealing portion herein is a position for attaching the sealing member, and the sealing member is configured to be hermetically connected to the battery pack, to ensure internal sealing performance of the battery pack, and prevent rain, an impurity, and the like from entering the battery pack through a connection clearance between the battery pack and the vehicle body. In the height direction of the vehicle, the battery pack sealing portion may be located between the accommodating portion 2170 and the battery pack mounting portion 2180. In the width direction of the vehicle, the battery pack sealing portion is located between the accommodating portion and the battery pack mounting portion. For example, in the foregoing embodiment in which the sill beam is constructed to be in a stepped shape, the battery pack sealing portion may be formed on the third step surface. When the battery pack and the sill beam are sealed, projections of the battery pack and the sill beam in the vertical direction can further overlap. That is, the battery pack is expanded to extend in the left-right direction, to increase a capacity while satisfying sealing performance.

As shown in FIG. 26, in this embodiment of the present disclosure, the vehicle may further include a lateral fastener 2611 connected between the sill beam 2100 and the seat cross beam 2610. The sill beam and the seat cross beam may form a whole through the lateral fastener, to facilitate a transfer of a lateral impact force exerted on the sill beam to the seat cross beam. The present disclosure sets no limitation on a mounting position of the lateral fastener. For example, in the shown embodiment, the lateral fastener may be located on an upper side of the seat cross beam.

As shown in FIG. 55, in this embodiment of the present disclosure, at least a part of the battery pack 4000 of the vehicle may be formed a vehicle body floor. In this design, the vehicle body floor can be omitted, to reduce a vehicle weight. In addition, a clearance between the battery pack and the vehicle body may be reduced, a center of gravity of the vehicle is lowered, and maneuverability is improved, or a height of the passenger compartment is increased, or a ground clearance of the vehicle is increased, to improve vehicle passability.

As shown in FIG. 18, FIG. 75, and FIG. 83, in this embodiment of the present disclosure, an upper end of a C-pillar rear reinforcement plate 2412 of the vehicle may be connected to a vehicle frame longitudinal beam 2840 of the passenger compartment frame 2000. It will be noted that, the vehicle frame longitudinal beam 2840 extends in the front-rear direction of the vehicle, and is connected to the A-pillar 2300 and the C-pillar 2400 that are of the vehicle to perform a force transfer. In this design, a rear impact force may be transferred to the sill beam and the vehicle frame longitudinal beam 2840 through the C-pillar rear reinforcement plate 2412, to increase a force transfer area and add a force transfer path.

Further, in this embodiment of the present disclosure, the upper end of the C-pillar rear reinforcement plate 2412 may be connected to a rear wall upper cross beam 3220 of the passenger compartment frame 2000. The rear wall upper cross beam 3220, the C-pillar rear reinforcement plate 2412, the side wall reinforcement member 2420, the connection integrated member, and the rear wall cross beam may form a ring structure. This facilitates a force transfer of the battery pack. In addition, when the connection integrated member is connected to the battery pack, rigidity of the vehicle body can be effectively enhanced. In addition, the foregoing accommodating space used to accommodate an on-board charger is formed at such a position. Therefore, after the battery pack is connected herein, the ring structure reinforces the accommodating space, and the battery pack is located on a lowest side. Therefore, a " 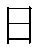 "-shaped structure may be formed at a rear portion, to further enhance rigidity.

As shown in FIG. 75 to FIG. 82, in this embodiment of the present disclosure, the vehicle may further include a C-pillar front reinforcement plate 2411. An upper end of the C-pillar front reinforcement plate 2411 is connected to a frame longitudinal beam, and a lower end of the C-pillar front reinforcement plate is connected to the sill beam 2100 of the vehicle. In this design, the C-pillar front reinforcement plate 2411, the frame longitudinal beam, the sill beam, the battery pack 4000, and a top cover of the vehicle may also form a ring structure, to enhance rigidity of the vehicle body. The top cover of the vehicle herein is a roof portion, and two sides of the top cover of the vehicle are connected to the side wall assembly, and both the A-pillar 2300 and the pillar C 2400 are disposed on the side wall assembly.

In this embodiment of the present disclosure, the C-pillar front reinforcement plate 2411 may be disposed on a front side of the C-pillar rear reinforcement plate 2412.

As shown in FIG. 75, in this embodiment of the present disclosure, the C-pillar rear reinforcement plate 2412 may be provided with a C-pillar front reinforcement plate connection portion 2412a, and the C-pillar rear reinforcement plate 2412 may be connected to the C-pillar front reinforcement plate 2411 through the C-pillar front reinforcement plate connection portion 2412a, so that the C-pillar front reinforcement plate 2411 and the C-pillar rear reinforcement plate 2412 may transfer a force in the front-rear direction. In addition, the C-pillar front reinforcement plate connection portion 2412a and the sill beam are spaced in the height direction to form a three-layer force transfer path of the vehicle frame longitudinal beam 2840, a connection portion of the C-pillar front reinforcement plate 2411, and the sill beam in the vertical direction, to achieve a better force transfer effect.

### II. Battery pack mounting member

A battery pack mounting member 5000 (namely, a front compartment battery pack mounting member) may be connected to at least one end portion of a sill beam 2100 in a front-rear direction, the battery pack mounting member is formed with a battery pack mounting surface 4502 (or referred to as a second battery pack mounting surface), and the battery pack mounting member is an integral member. In this design, the integral member is connected to a battery pack, to better improve strength of a battery pack mounting point, and a combination of the integral member and the battery pack can effectively enhance rigidity of a vehicle body. In addition, when a force is transferred in the front-rear direction, the force can be effectively transferred to the sill beam. In addition, because of the integral member, a force transfer capability in the front-rear direction can be effectively improved with the support of the battery pack and the sill beam. Rigidity of the integral member is relatively good, and therefore, a force transfer effect and a rigidity enhancement effect are better. Similar to the foregoing connection integrated member, the integral member herein is a separate part, and the integral member may be an integrally formed member, or may be a part formed by connecting a plurality of parts. It will be noted that the battery pack mounting member may be connected to a front end of the sill beam, or may be connected to a rear end of the sill beam. For ease of description, the following provides descriptions by using an example in which the battery pack mounting member is connected to the front end of the sill beam.

In this embodiment of the present disclosure, the battery pack mounting member may be of an integrally formed structure. This design can enhance rigidity of the battery pack mounting member, and further improve an effect of connecting the battery pack to the vehicle body and the battery pack, thereby effectively improving torsion resistance performance, integrity, and the like of a vehicle.

As shown in FIG. 10, in this embodiment of the present disclosure, the battery pack mounting member 5000 may be connected to a front-side end portion of the sill beam 2100 in a front-rear direction. This design can improve a force transfer effect in a case of a collision to a front compartment of the vehicle, and enhance rigidity of a front compartment portion. Specifically, when the front compartment of the vehicle is subject to impact, the front compartment may transfer such an impact force toward the sill beam and the battery pack through the battery pack mounting member, thereby reducing damage to the passenger compartment. In some embodiments, a projection of the battery pack mounting member in the front-rear direction of the vehicle and a projection of the sill beam in the front-rear direction of the vehicle may at least partially overlap, to further improve a force transfer effect between the battery pack mounting member and the sill beam.

As shown in FIG. 3, in this embodiment of the present disclosure, the vehicle may further include a front longitudinal beam 1100. In the front-rear direction of the vehicle, the battery pack mounting member 5000 may be disposed in rear of the front longitudinal beam 1100, and the front longitudinal beam is connected to the battery pack mounting member. In this design, when the front longitudinal beam is subject to impact, the front longitudinal beam may transfer such an impact force toward the sill beam and the battery pack through the battery pack mounting bracket, thereby reducing damage to the passenger compartment. In some embodiments, a projection of the front longitudinal beam in the front-rear direction of the vehicle and a projection of the battery pack mounting member in the front-rear direction of the vehicle may at least partially overlap, to improve a force transfer effect between the battery pack mounting member and the front longitudinal beam.

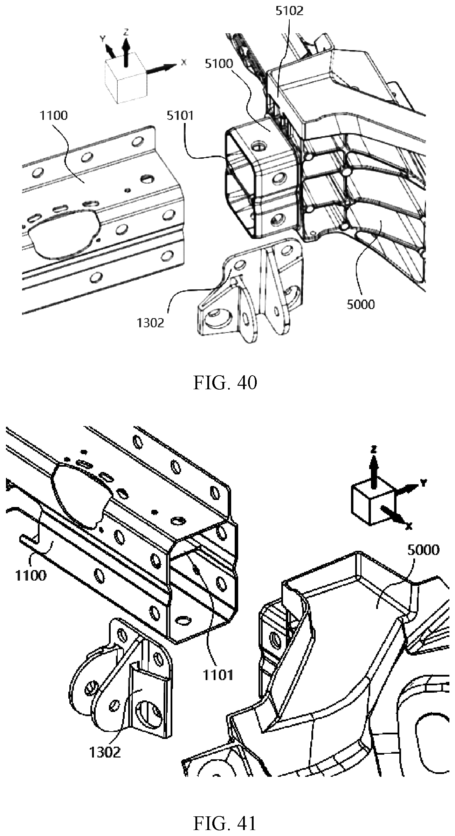

The present disclosure sets no limitation on how the front longitudinal beam 1100 is connected to the battery pack mounting member. For example, in the embodiment shown in FIG. 40, a front end of the battery pack mounting member 5000 may be formed with a protruding beam 5100 aligned with the front longitudinal beam 1100, and a rear end of the front longitudinal beam may be constructed to be in a hollow shape to be sleeved on an outer circumference of the protruding beam, and may be fastened through a bolt, or the like.

As shown in FIG. 40, in this embodiment of the present disclosure, the front end of the battery pack mounting member may have a stop surface 5102 around the protruding beam, and the stop surface is located at an end of the protruding beam that is away from the front longitudinal beam, to improve connection strength of a connection position between the front longitudinal beam 1100 and the battery pack mounting member, and prevent the front longitudinal beam from intruding forward into the passenger compartment when being subject to a force.

As shown in FIG. 40 and FIG. 41, in some other embodiments, a cross section of the protruding beam 5100 may be constructed to be in a " 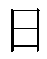 " shape, and a part of the front longitudinal beam 1100 that is at a front end of the protruding beam may be provided with a second reinforcement rib 1101 corresponding to a second intermediate rib 5101 of the protruding beam.

After the front longitudinal beam 1100, the battery pack mounting member 5000, and the sill beam 2100 are sequentially connected, the front longitudinal beam 1100, the battery pack mounting member 5000, and the sill beam 2100 may form a force transfer path from the front of the vehicle to the rear of the vehicle, thereby improving force transfer smoothness of the entire vehicle body. In addition, after the rear end of the sill beam is connected to the connection integrated member, rigidity of the connection integrated member can be better, and a process is simpler.

In this embodiment of the present disclosure, at least one of the front longitudinal beam 1100 and the sill beam may be detachably connected to the battery pack mounting member 5000. In this design, the battery pack mounting member is designed as an independent member, which can facilitate an independent optimization design of the battery pack mounting member to improve strength and rigidity of the battery pack mounting member. In addition, such a detachable design can simplify processing and a connection process of the vehicle body, and facilitate disassembly and assembly.

Further, in this embodiment of the present disclosure, the front longitudinal beam is detachably connected to the battery pack mounting member. As described above, such a design may be that an assembly process at such a position is more convenient and simper, and is easy to operate. It will be noted that, the battery pack mounting member and the passenger compartment frame 2000 may be connected through bonding. Most positions of the battery pack mounting member are of a metal material, and a part of the battery pack mounting member that is connected to the passenger compartment may be of a carbon fiber material, to facilitate bonding.

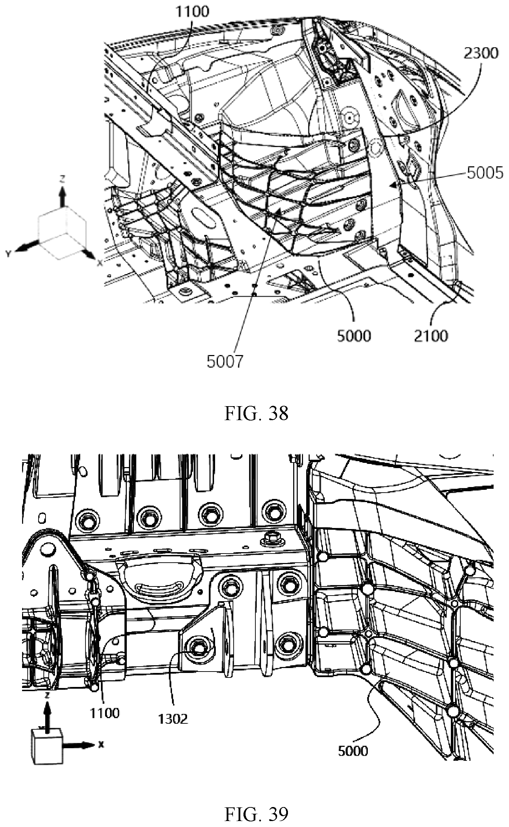

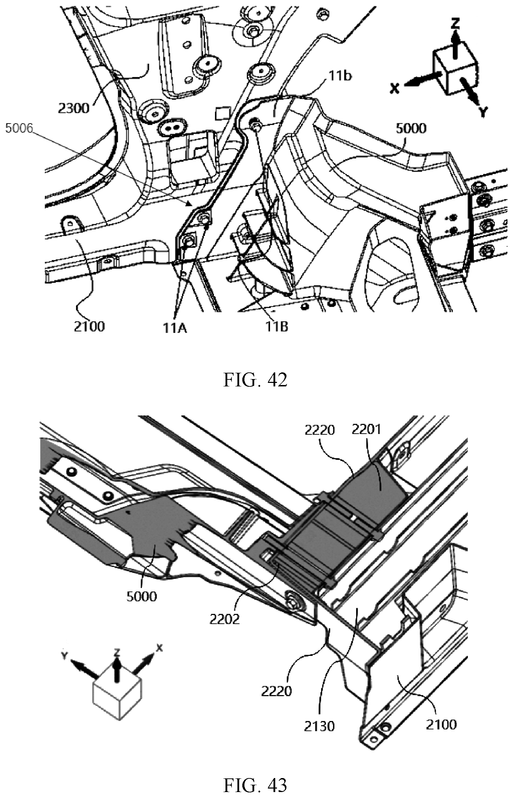

As shown in FIG. 38 and FIG. 42, in this embodiment of the present disclosure, the vehicle may further include an A-pillar 2300, and the battery pack mounting member 5000 may be connected to the A-pillar 2300. The present disclosure sets no limitation on a connection between the battery pack mounting member 5000 and the A-pillar 2300. The connection may be a direct connection, or may be an indirect connection. In this design, the vehicle has more force transfer paths in the front-rear direction and a width direction. A force may be transferred through the A-pillar in addition to the sill beam, the battery pack, and the like. In addition, the battery pack, the A-pillar, the sill beam, and the battery pack mounting member may be integrated together. In particular, the battery pack mounting member is directly connected to the sill beam, the front longitudinal beam 1100, the A-pillar, and the battery pack separately. When the battery pack mounting member is an integral member, all members can be better connected for a force transfer. In addition, strength of a connection point between the battery pack mounting member and each component is also strong. Therefore, integrity is better, and further, rigidity of the vehicle body is better. In addition, the battery pack is a relatively large component, and is distributed below the vehicle body. The parts are on two sides of the front portion of the vehicle. In this connection form, the entire battery pack can be used to strengthen rigidity of this structure. A front side can be connected to form an entirety, which enhances rigidity of the front side, suppresses deformation of the vehicle in a driving process, and improves driving and riding experience. In addition, in a case of being subject to a collision, because the components are connected together, flipping torque of the front longitudinal beam in a vertical direction in a collision process can be effectively suppressed, to avoid damage to the passenger compartment, and also avoid damage to the battery pack after a component is flipped.

As shown in FIG. 42, in this embodiment of the present disclosure, a projection of the battery pack mounting member 5000 in the width direction of the vehicle and a projection of the A-pillar 2300 in the width direction of the vehicle at least partially overlap. Such a design is more conducive to a force transfer effect of the battery pack mounting member 5000 and the A-pillar 2300 in the width direction.

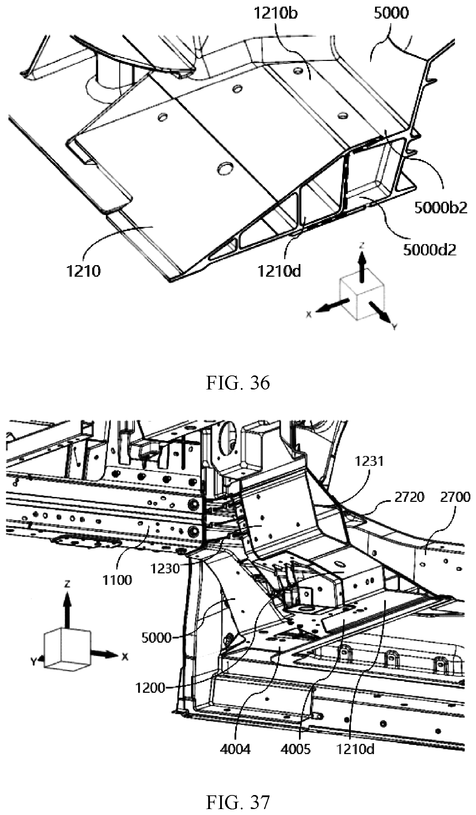

As shown in FIG. 37, in this embodiment of the present disclosure, the vehicle may further include a front wall plate 1200, and the battery pack mounting member 5000 is connected to the front wall plate 1200, the A-pillar 2300, and the sill beam 2100. The battery pack mounting member, the battery pack, the sill beam, and the A-pillar form a hollow ring structure in the vertical direction. In this design, the front wall plate can be supplemented in the hollow portion, to further enhance the rigidity of a structure.

In some embodiments, the battery pack mounting member may be directly connected to the front wall plate 1200, and the front wall plate may be an integrally formed member. In this design, because rigidity of the integrally formed member is high, when the integrally formed member is combined with another component, an effect is better.

As shown in FIG. 38, in this embodiment of the present disclosure, a first end of the battery pack mounting member 5000 may be connected to the front longitudinal beam 1100 of the vehicle, and a second end of the battery pack mounting member may be connected to the sill beam 2100, to achieve a better force transfer effect of the battery pack mounting member in the front-rear direction, perform a smoother force transfer, and reduce flipping torque in the vertical direction. It will be noted that the second end of the battery pack mounting member may alternatively be connected to the battery pack.

As shown in FIG. 38, in this embodiment of the present disclosure, a cross-sectional area of the battery pack mounting member on one side close to the sill beam may be greater than a cross-sectional area of the battery pack mounting member on one side close to the front longitudinal beam 1100. In this design, when an impact force on the front side of the vehicle is diffused backward, the battery pack mounting member may increase a force transfer area, to avoid relatively large pressure caused by a relatively small force transfer area, thereby damaging the passenger compartment.

As shown in FIG. 55, in this embodiment of the present disclosure, the vehicle may further include the battery pack 4000. The battery pack 4000 may be directly connected to at least one of the battery pack mounting member 5000 and the sill beam 2100. A direct connection may improve connection strength of the connection point, and improve an effect of combining the battery pack with the battery pack mounting member and the sill beam. In some embodiments, the battery pack may be directly connected to each of the battery pack mounting member and the sill beam.

As shown in FIG. 11 and FIG. 22, in this embodiment of the present disclosure, the vehicle may further include the battery pack 4000. A projection of a corner of the battery pack in a height direction of the vehicle may be located in a projection of the battery pack mounting member 5000 in the height direction of the vehicle. It should be explained that, the corner herein is a connection portion between a front cross beam of the battery pack and a longitudinal beam of the battery pack, the front cross beam and the longitudinal beam of the battery pack are a side frame cross beam and a side frame longitudinal beam, and the battery pack is connected to the vehicle through the side frame cross beam and the side frame longitudinal beam. This design can protect a corner position through the battery pack mounting member.

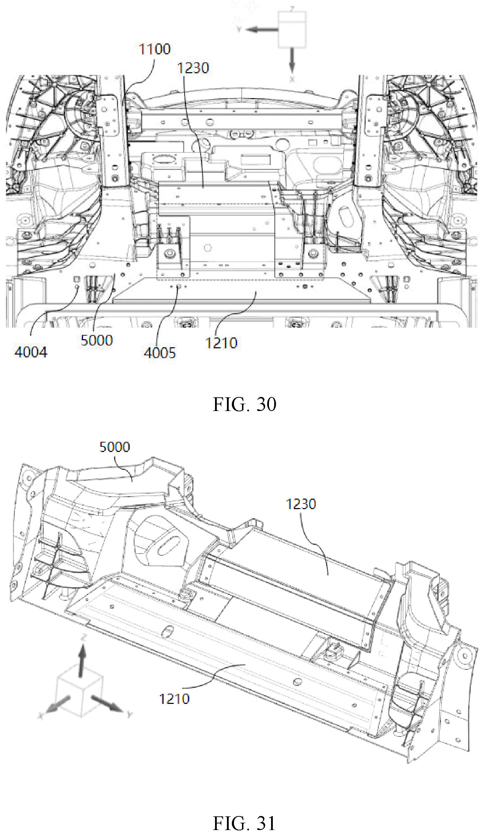

As shown in FIG. 29 and FIG. 30, in this embodiment of the present disclosure, the battery pack 4000 may be provided with a battery pack mounting member mounting point 4004, the battery pack may be connected to the battery pack mounting member 5000 through the battery pack mounting member mounting point 4000, and a minimum distance between the battery pack mounting member mounting point 4004 and the corner is less than a preset distance. The battery pack mounting point is generally arranged on a side frame of the battery pack, namely, side frames on a left side and a right side. Adding a connection to the battery pack near the corner may make the battery pack and the vehicle body form a connection with better rigidity.

For example, the preset distance may be 1/4 of a distance from the corner to an adjacent corner in the width direction of the vehicle.

For example, the preset distance may be 1/4 of a maximum distance from a left-side edge to a right-side edge of the battery pack.

As shown in FIG. 3, in this embodiment of the present disclosure, two battery pack mounting members 5000 may be spaced in the width direction of the vehicle, the vehicle may further include a front wall lower cross beam 1210, and two ends of the front wall lower cross beam are respectively connected to the two battery pack mounting members. The two ends of the front wall lower cross beam may be directly connected to the battery pack mounting members respectively, and are indirectly connected to the sill beam through the battery pack mounting members. The battery pack connection member is connected to the front longitudinal beam 1100 and a front surface of the A-pillar. The front side of the vehicle mainly transfers a force through the two battery pack mounting members and the front wall lower cross beam laterally. There are a small quantity of force transfer components. In addition, the battery pack mounting member is an integrally formed member. Therefore, there are a relatively small quantity of front side force transfer members, and there are a relatively small quantity of connection points. During a force transfer, a risk of breaking at the connection point in a case of being subject to a force can be reduced. The two battery pack mounting members are connected to the A-pillar, and the front wall lower cross beam is directly connected to the battery pack mounting member, so that a force can be transferred to the A-pillar through the battery pack mounting member, to prevent a part of the front compartment portion from being deformed and intruding into the passenger compartment. In addition, in some other embodiments, the front wall lower cross beam may also be of an integrally formed structure, to further reduce connection points of the front side force transfer member.

As shown in FIG. 9, in some embodiments, the front wall lower cross beam 1210 may be connected to the battery pack 4000 of the vehicle. In this design, the battery pack is separately connected to the front wall lower cross beam and the two battery pack mounting members. Because the three members are connected to the A-pillar for a force transfer, when the battery pack is connected to both the front wall lower cross beam and the battery pack mounting member, the front compartment portion can be connected and integrated into an entirety, thereby enhancing rigidity of the battery pack and also enhancing rigidity of the vehicle body.

In some embodiments, the front wall lower cross beam 1210 may be directly connected to the battery pack, to further reduce connection points of the front side force transfer member and improve connection strength. In addition, in some other embodiments, the front wall lower cross beam may alternatively be indirectly connected to the battery pack. The present disclosure sets no limitation thereto.

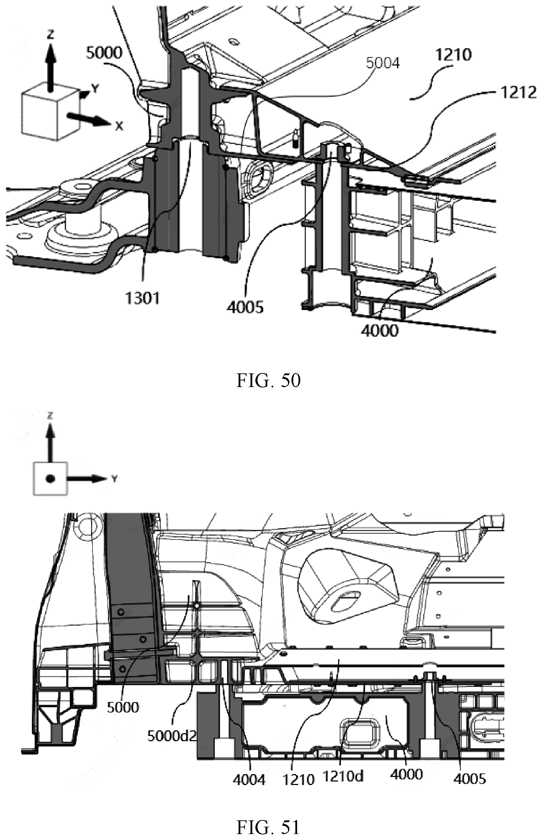

As shown in FIG. 50, in this embodiment of the present disclosure, a cross beam mounting surface 1212 (namely, a lower cross beam battery pack mounting surface) may be disposed on a bottom surface of the front wall lower cross beam 1210, a battery pack mounting member mounting surface 5004 may be disposed on the battery pack mounting member 5000, and the cross beam mounting surface 1212 and the battery pack mounting member mounting surface may be formed a battery pack mounting surface. This design can improve a connection area between the battery pack and the vehicle body, improve connection strength, and improve a force transfer effect.

The cross beam mounting surface 1212 and the battery pack mounting member mounting surface may be located on a same horizontal plane. In this design, the force transfer effect may be smoother. In addition, the battery pack is not damaged when the battery pack is connected.

As shown in FIG. 50, in this embodiment of the present disclosure, a projection of at least one of the front wall lower cross beam 1210 and the battery pack mounting member 5000 in the height direction of the vehicle at least partially overlaps a projection of the battery pack 4000 in the height direction of the vehicle. The projection of at least one of the front wall lower cross beam and the battery pack mounting member in the height direction of the vehicle at least partially overlaps a projection of a battery cell of the battery pack in the height direction of the vehicle. In this design, the battery pack may be expanded forward for more regions, to improve a capacity of the battery pack.

As shown in FIG. 10, in this embodiment of the present disclosure, at least a partial bottom surface of the sill beam 2100 may be formed a battery pack mounting surface. This design can increase the connection area between the battery pack and the vehicle body, and improve connection stability. In addition, the battery pack may be allowed to be expanded in a left-right direction, to improve the capacity of the battery pack.

As shown in FIG. 10, in this embodiment of the present disclosure, a projection of the sill beam 2100 in the height direction of the vehicle may at least partially overlap the projection of the battery cell of the battery pack 4000 of the vehicle in the height direction of the vehicle. In addition, the battery pack may be allowed to be expanded toward two sides for more regions, to improve the capacity of the battery pack. In addition, an overlapping region with the sill beam is increased. In the front-rear direction of the vehicle, the battery pack can be better integrated with the vehicle body, to enhance rigidity of the vehicle body. In addition, a very large load-bearing surface can be formed by connecting the battery pack and the sill beam. When a front side component is connected, flipping torque in the vertical direction when the front side component is subject to a force can be suppressed.

As shown in FIG. 50, in this embodiment of the present disclosure, the cross beam mounting surface 1212, the battery pack mounting member mounting surface 5004, and at least the partial bottom surface of the sill beam 2100 may be formed a battery pack mounting surface. This design can expand an area of the battery pack on the front side and on the left side and the right side, to increase the capacity of the battery pack.

As shown in FIG. 50, the cross beam mounting surface 1212, the battery pack mounting member mounting surface 5004, and at least the partial bottom surface of the sill beam 2100 are located on a same horizontal plane. In this design, the force transfer effect may be smoother. In addition, the battery pack is not damaged when the battery pack is connected.

In this embodiment of the present disclosure, the battery pack mounting member may be hermetically connected to the front wall lower cross beam 1210. This design can implement front sealing, to implement multi-layer sealing of the passenger compartment together with the front wall plate 1200.

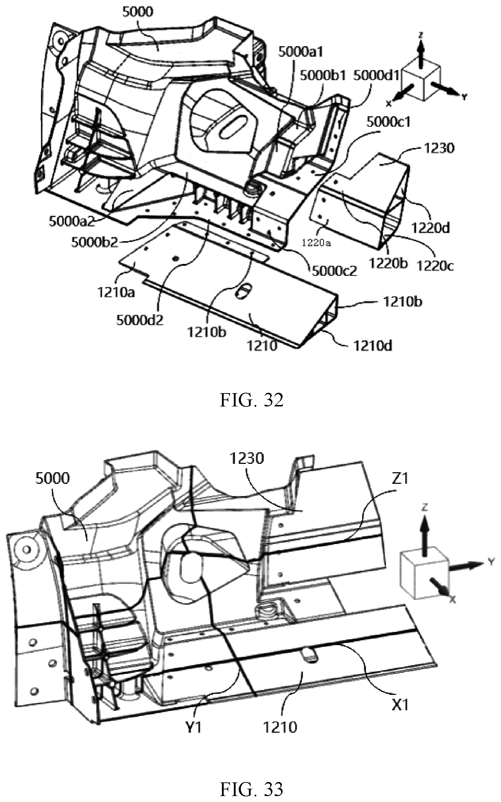

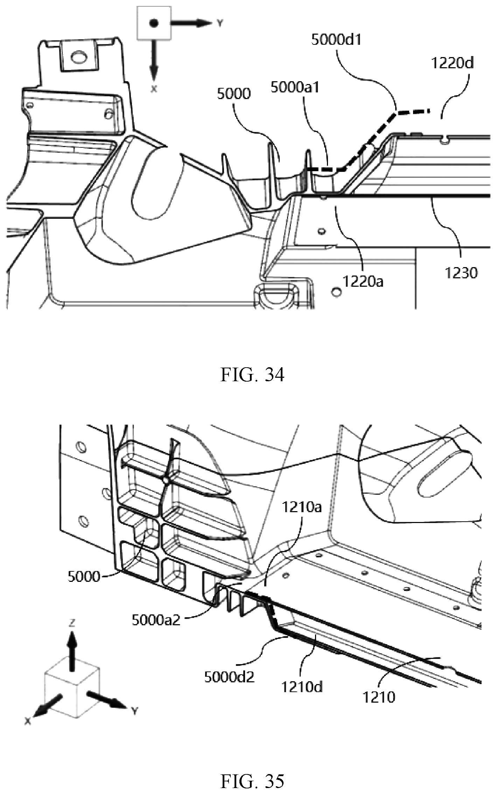

As shown in FIG. 32 and FIG. 35, in some embodiments, the battery pack mounting member may be provided with a front wall lower cross beam connection portion 5000a2/5000b2/5000c2/5000d2, the front wall lower cross beam 1210 may be provided with a second connection member connection portion 1210a/1210b/1210c/1210d, and the front wall lower cross beam connection portion is connected to the second connection member connection portion 1210a/1210b/1210c/1210d. For ease of sealing, the second connection member connection portion 1210a/1210b/1210c/1210d may be located on an upper side of the front wall lower cross beam connection portion in the height direction of the vehicle. Specifically, as shown in the figure, the battery pack mounting member may be provided with a front wall lower cross beam first connection portion 11a2, a front wall lower cross beam second connection portion 11b2, a front wall lower cross beam third connection portion 11c2, and a front wall lower cross beam fourth connection portion 11d2. A front wall lower cross beam first surface 15a is connected to the front wall lower cross beam first connection portion, a front wall lower cross beam second surface 15b is connected to the front wall lower cross beam second connection portion 11b2, a front wall lower cross beam third surface 15c is connected to the front wall lower cross beam third connection portion 11c2, and a front wall lower cross beam fourth surface 15d is connected to the front wall lower cross beam fourth connection portion 11d2, to form two shown Z-shaped lapping relationships, thereby improving connection strength.

As shown in FIG. 50 and FIG. 51, in this embodiment of the present disclosure, the front wall lower cross beam 1210 may be connected to a rear side of the battery pack mounting member 5000. It should be explained that, the rear side herein does not mean that the front wall lower cross beam is completely located on the rear side of the entire battery pack mounting member, provided that a connection point between the front wall lower cross beam and the battery pack mounting member is located on a rear side of a front-end force-bearing surface of the battery pack mounting member. In this design, because the battery pack mounting member is relatively forward, a forward impact force is transferred to the battery pack mounting member that is a relatively large and strong member, and then transferred to the front wall lower cross beam for dispersion toward two sides. In this way, a force transfer effect is better.

As shown in FIG. 13, in this embodiment of the present disclosure, the vehicle may further include a first cross beam 1220 (namely, a front wall upper cross beam) connected between the two battery pack mounting members 5000. The first cross beam may be used to add a force transfer path of the vehicle in the width direction.

In some embodiments, a length of the first cross beam may be shorter than a length of the front wall lower cross beam 1210. In this design, the front wall lower cross beam is located on a lower side of the first cross beam, is configured for mounting the battery pack, and may transfer a force to the battery pack mounting member. Therefore, when the front wall lower cross beam is relatively long, a force-bearing area may be increased, and a connection position between the front wall lower cross beam and the battery pack mounting member is closer to a connection position between the A-pillar and the battery pack mounting member, thereby reducing torque received between the two mounting positions.

In some embodiments, the first cross beam may be hermetically connected to the battery pack mounting member to implement front sealing, to implement multi-layer sealing of the passenger compartment together with the front wall plate 1200.

As shown in FIG. 13, in this embodiment of the present disclosure, in the height direction of the vehicle, the first cross beam 1220 may be located on an upper side of the front wall lower cross beam 1210. In this design, when the front compartment of the vehicle is subject to a front-surface force, the front longitudinal beam 1100 and the front subframe assembly 1300 are located at two different heights. The front longitudinal beam is at a higher height (than a front floor large surface). The first cross beam and the front longitudinal beam are at a same height, and may transfer an upper layer load. The front wall lower cross beam may be at a same height as the front floor large surface, that is, as the front subframe assembly 1300 to transfer a lower layer load.

As shown in FIG. 13 and FIG. 15, in this embodiment of the present disclosure, in the front-rear direction of the vehicle, the first cross beam 1220 may be located on a front side of the front wall lower cross beam 1210. In this design, when the vehicle is subject to a front side collision, the first cross beam is subject to a force, and then, the force is transferred to the A-pillar through battery pack mounting members on two sides. Then, the front wall lower cross beam is subject to a force, and the force is transferred to the battery pack. The first cross beam on the front side may protect the battery pack to some extent. In addition, the first cross beam, the front wall lower cross beam, and the two battery pack mounting members may enclose and form a square-shaped structure, which can improve force transfer performance of such a position, and improve performance such as collision resistance and torsion resistance of the vehicle.

Similar to the front wall lower cross beam 1210, as shown in FIG. 32 and FIG. 34, in this embodiment of the present disclosure, the battery pack mounting member 5000 may be provided with a first cross beam connection portion (5000a1/5000b1/5000c1/5000d1), the first cross beam may be provided with a first connection member connection portion (1220a/1220b/1220c/1220d), and the first cross beam connection portion is connected to the first connection member connection portion (1220a/1220b/1220c/1220d). For ease of a hermetic connection, the first connection member connection portion (1220a/1220b/1220c/1220d) may be located on an upper side of the first cross beam connection portion in the height direction of the vehicle. Specifically, as shown in the figure, the battery pack mounting member may be provided with a first cross beam first connection portion 5000a1, a first cross beam second connection portion 5000b1, a first cross beam third connection portion 5000c1, and a first cross beam fourth connection portion 5000d1. A first cross beam first surface 1220a is connected to the first cross beam first connection portion 5000a1, a first cross beam second surface 1220b is connected to the first cross beam second connection portion 5000b1, a first cross beam third surface 1220c is connected to the first cross beam third connection portion 5000c1, and a first cross beam fourth surface 1220d is connected to the first cross beam fourth connection portion 5000d1, to form a Z-shaped lapping relationship shown in the figure, thereby improving connection strength.

Similar to the front wall lower cross beam 1210, as shown in FIG. 13 and FIG. 15, in this embodiment of the present disclosure, the first cross beam 1220 may be connected to a rear side of the battery pack mounting member. Similar to the foregoing, the rear side herein does not mean that the first cross beam is completely located on the rear side of the entire battery pack mounting member, provided that a connection point between the front wall lower cross beam and the battery pack mounting member is located on a rear side of a front-end force-bearing surface of the battery pack mounting member. In this design, because the battery pack mounting member is relatively forward, a forward impact force is transferred to the battery pack mounting member that is a relatively large and strong member, and then transferred to the first cross beam for dispersion toward two sides. In this way, a force transfer effect is better.

As shown in FIG. 15, in this embodiment of the present disclosure, the vehicle may further include a center tunnel 2700, and the center tunnel 2700 may be connected to the first cross beam 1220, to form a force transfer path from the first cross beam to the center tunnel 2700 in the length direction of the vehicle.

As shown in FIG. 15, in this embodiment of the present disclosure, a projection of the first cross beam 1220 in the front-rear direction of the vehicle at least partially overlaps a projection of the center tunnel 2700 in the front-rear direction of the vehicle, to improve a force transfer effect between the first cross beam and the center tunnel 2700.

As shown in FIG. 37, in this embodiment of the present disclosure, a cross section of the first cross beam 1220 may be constructed to be in a " 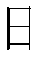 " shape, and a third intermediate rib 1231 of the first cross beam may be flush with an upper surface of the center tunnel 2700. A " 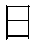 "-shaped structure may improve strength of the first cross beam, and that the third intermediate rib of the first cross beam is flush with the upper surface of the center tunnel 2700 may facilitate a force transfer in the front-rear direction.

As shown in FIG. 9 and FIG. 15, in this embodiment of the present disclosure, a cross section of the front wall lower cross beam 1210 may be constructed as a right triangle, and an inclined surface of the front wall lower cross beam faces a rear upper direction. A triangular structure occupies less space, to form space in the rear upper direction for arranging another component.

As shown in FIG. 9, in this embodiment of the present disclosure, the center tunnel 2700 may be connected to the front wall lower cross beam 1210, to form a force transfer path between the front wall lower cross beam and the center tunnel 2700.

The present disclosure sets no limitation on a way of connecting the center tunnel 2700 to the first cross beam and the front wall lower cross beam. For example, in this embodiment of the present disclosure, the front wall plate 1200 may be fastened to the first cross beam and the front wall lower cross beam, and is located on an upper side of the first cross beam and the front wall lower cross beam, and the center tunnel 2700 is fastened to the front wall plate to be indirectly connected to the first cross beam and the front wall lower cross beam.

As shown in FIG. 16, in this embodiment of the present disclosure, a projection of the front wall lower cross beam 1210 in the front-rear direction of the vehicle may at least partially overlap a projection of the center tunnel 2700 in the front-rear direction of the vehicle, to improve a force transfer effect between the front wall lower cross beam 1210 and the center tunnel 2700 in the front-rear direction.

As shown in FIG. 5 and FIG. 28, in this embodiment of the present disclosure, the vehicle may further include the front wall plate 1200, a floor rear cross beam, a seat front cross beam 2630, and a seat rear cross beam 2620. The front wall plate may be connected above the first cross beam and the front wall lower cross beam, and the center tunnel 2700 may be separately connected to the front wall plate, the floor rear cross beam, the seat front cross beam 2630, and the seat rear cross beam 2620.

As shown in FIG. 22, in this embodiment of the present disclosure, a front subframe mounting point 5003 may be formed on the battery pack mounting member 5000, and the front subframe mounting point 5003 is suitable for being connected to the front subframe assembly 1300 of the vehicle. Connecting the front subframe assembly 1300 to the battery pack mounting member may add a force transfer path of the vehicle body. Specifically, when the front longitudinal beam 1100 of the vehicle is subject to a collision, such an impact force may be at least partially transferred to the front subframe assembly 1300 through the battery pack mounting member for dispersion, thereby protecting the passenger compartment.

In this embodiment of the present disclosure, the front subframe mounting point may be disposed on a side of the battery pack mounting member mounting point that is away from the sill beam, so that a force of the front subframe assembly 1300 can be transferred to the battery pack, to prevent the front subframe assembly 1300 from intruding into the passenger compartment.

In this embodiment of the present disclosure, the front subframe mounting point may be located in front of the front wall lower cross beam 1210, so that the front wall lower cross beam can limit backward displacement of a front subframe, to prevent the front subframe from moving backward and intruding into the passenger compartment. A distance between the front subframe mounting point and the front wall lower cross beam may be 100 mm to 150 mm.

As shown in FIG. 38, in this embodiment of the present disclosure, the battery pack mounting member may include a first mounting portion 5005, the first mounting portion 5005 may be directly connected to the A-pillar 2300 of the vehicle, and at least a part of the first mounting portion is located on a front side of the A-pillar. It should be explained herein that a position of the A-pillar near a lower side overlaps a part of the sill beam. That is, the "part" belongs to the A-pillar and also belongs to the sill beam. Therefore, a connection between the first mounting portion and the A-pillar is also a connection to the sill beam actually. In this design, the sill beam, the A-pillar, and the battery pack mounting member may form a whole to provide a plurality of force transfer paths, to protect a cockpit.

As shown in FIG. 42, in this embodiment of the present disclosure, the battery pack mounting member may further include a second mounting portion 5006, and the second mounting portion is connected to a side of the A-pillar 2300 that faces the passenger compartment of the vehicle. The first mounting portion and the second mounting portion may be used to connect the battery pack mounting member and the A-pillar in two directions, which can improve connection strength of the battery pack mounting member and the A-pillar, and can also add force transfer paths in the front-rear direction and the left-to-right direction.

As shown in FIG. 42, in this embodiment of the present disclosure, the second mounting portion 5006 may be connected to the sill beam, to add a force transfer path between the battery pack mounting member and the sill beam.

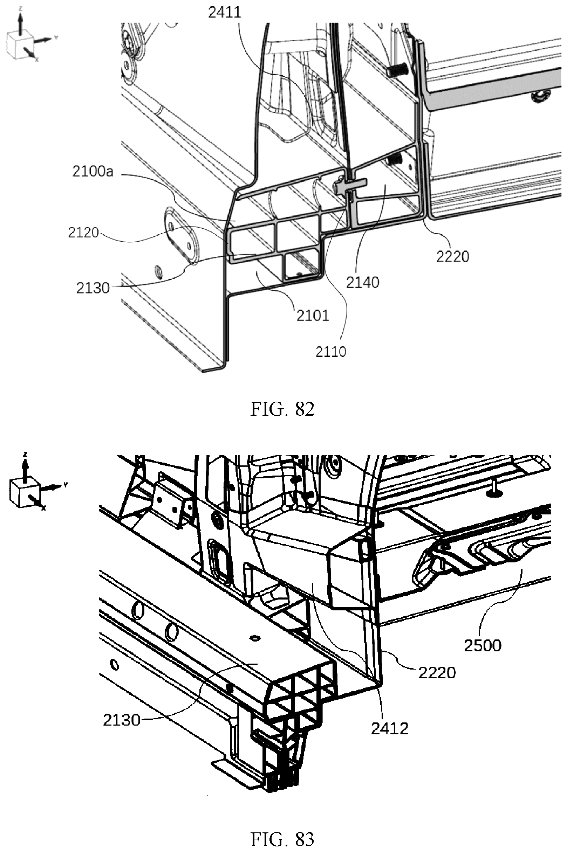

The present disclosure sets no limitation on a specific structure of the sill beam 2100. For example, in the embodiment shown in FIG. 82, the sill beam 2100 may include a body beam 2100a (namely, a sill body) and a sill reinforcement beam 2130 located inside the body beam 2100a. It should be explained that "inside" herein is inside in the width direction of the vehicle. In this case, the second mounting portion may be connected to the sill reinforcement beam 2130, and the second mounting portion 5006 is located on a side of the sill reinforcement beam that faces the passenger compartment. Disposing the sill reinforcement beam can improve strength and a force transfer effect of the sill beam of the vehicle.

As shown in FIG. 43 to FIG. 48 and FIG. 82, in this embodiment of the present disclosure, the sill beam 2100 may further include: a sill inner plate 2110 and a sill outer plate 2120, where the sill inner plate 2110 and the sill outer plate 2120 enclose and form the body beam 2100a; and a first insert block 2201, where the first insert block 2201 is located between the sill outer plate 2120 and the sill inner plate 2110. The second mounting portion is sequentially connected to the sill inner plate 2110, the first insert block 2201, and the sill reinforcement beam, and the battery pack mounting member is fastened to the sill reinforcement beam 2130 through a bolt that extends the first insert block 2201 and a side wall assembly. It should be explained that, the side wall assembly herein includes a side wall outer plate 2210, a side wall inner plate 2220, the sill inner plate 2110, and the sill outer plate 2120. The sill inner plate 2110 and the side wall inner plate are integrally formed, the sill outer plate 2120 and the side wall outer plate are integrally formed, and the side wall outer plate and the side wall inner plate may enclose and form the A-pillar 2300.

The present disclosure sets no limitation on the first insert block. For example, in the embodiment shown in FIG. 43 to FIG. 48, a second insert block 2202 may be a cavity reinforcement foam or plastic, or another cavity filling light material. The first insert block is an aluminum profile embedded in the second insert block 2202, and provides a mounting thread or a through hole for the reinforcement beam, the battery pack mounting member, and the like.

As shown in FIG. 43 to FIG. 48, in this embodiment of the present disclosure, a third insert block 2203 and a fourth insert block 2204 may be embedded in the second insert block 2202, and a portion in which the third insert block and the fourth insert block are located is the A-pillar. The battery pack mounting member is configured to be connected to the third insert block in the width direction and connected to the fourth insert block in the length direction, that is, connected to the A-pillar in the width direction and the length direction through the third insert block and the fourth insert block.

As shown in FIG. 42 and FIG. 43, in this embodiment of the present disclosure, a projection of the sill reinforcement beam 2130 in the width direction of the vehicle at least partially overlaps a projection of the second mounting portion 5006 in the width direction of the vehicle, so that the sill reinforcement beam 2130 and the second mounting portion 5006 can better transfer a force in the width direction of the vehicle.

As shown in FIG. 82, in this embodiment of the present disclosure, the sill inner plate 2110 may be constructed as a bent plate and has a plane that is flush with a bottom surface of the battery pack mounting member, to provide a mounting position for a sealing plate of the battery pack.

A position of the battery pack mounting member that is used to lap the side wall inner plate may be constructed to be in an L shape, to separately lap the sill inner plate 2110 in the width direction and the length direction.

As shown in FIG. 42, in this embodiment of the present disclosure, a bottom surface of the second mounting portion 5006 and a mounting surface of the sill beam 2100 may be located on a same horizontal plane. This design can facilitate sealing and prevent a foreign matter from entering the passenger compartment.

As shown in FIG. 50, in this embodiment of the present disclosure, the battery pack 4000 of the vehicle may be hermetically connected to the cross beam mounting surface 1212, the battery pack mounting member mounting surface 5004, and at least the partial bottom surface of the sill beam 2100. This design can prevent impurities, moisture, and the like from entering the passenger compartment through a connection clearance.

The present disclosure sets no limitation on how the battery pack is hermetically connected to the cross beam mounting surface 1212, the battery pack mounting member mounting surface, and at least the partial bottom surface of the sill beam. For example, in the embodiment shown in FIG. 10, the vehicle may further include a sealing member 4100. The battery pack may be hermetically connected to the cross beam mounting surface 1212, the battery pack mounting member mounting surface, and at least the partial bottom surface of the sill beam through the sealing member. The sealing member may be a sealing plate, a sealing gasket, or the like.

The cross beam mounting surface 1212, the battery pack mounting member mounting surface, and at least the partial bottom surface of the sill beam are flush in the height direction, to provide a mounting position for the sealing member of the battery pack.

The present disclosure sets no limitation on a structure of the side wall inner plate 2220. The following describes the structure of the side wall inner plate 2220 in the embodiment shown in FIG. 26. Specifically, the side wall inner plate 2220 may be constructed to have a first step surface, a second step surface, a third step surface, and a connection surface connected between the second step surface and the third step surface that are sequentially staggered from bottom to top. The vehicle may further include a seat front cross beam 2630 and a seat rear cross beam 2620. The battery pack may be mounted on the first step surface, the sealing plate may be connected to the second step surface, and space for avoiding the seat front cross beam 2630 and the seat rear cross beam 2620 may be formed between the third step surface and the connection surface.

As shown in FIG. 26, in this embodiment of the present disclosure, an inner sill structure 2150 may be disposed on an outer surface of the side wall inner plate, a first reinforcement profile 2151 may be disposed at a position on an outer surface of the inner sill structure that correspond to the seat front cross beam 2630, a second reinforcement profile 2152 may be disposed at a position on the outer surface of the inner sill structure that correspond to the seat rear cross beam 2620, and outer surfaces of the first reinforcement profile and the second reinforcement profile each abut against the sill reinforcement beam 2130. The inner sill structure may be connected to upper surfaces of the seat front cross beam 2630 and the seat rear cross beam 2620 through a lateral fastener. Disposing the inner sill structure, the first reinforcement profile, and the second reinforcement profile can effectively improve strength of the sill beam and strength of a connection to the seat front cross beam 2630 and the seat rear cross beam 2620.

In this embodiment of the present disclosure, a middle portion of the seat front cross beam 2630 may be bonded to the battery pack, and two ends of the seat front cross beam 2630 may be separately bolted to the battery pack. A middle portion of the seat rear cross beam 2620 may be bonded to the battery pack, and two ends of the seat rear cross beam 2620 may be separately connected to the battery pack.

As shown in FIG. 26, in this embodiment of the present disclosure, a distance from a mounting point between the battery pack and the first step surface to the sealing plate in the width direction is 20 mm to 30 mm, and the battery pack may fit the sealing plate through a battery pack sealing foam 4200 in a compressed configuration, to improve sealing performance of a connection point between the battery pack and the vehicle body. The distance in the width direction may be designed to be relatively small, so that when the battery pack is fastened to the first step surface, a position on the battery pack that correspond to the sealing plate may be tightly compressed to a greater extent to implement sealing.

As shown in FIG. 38, in this embodiment of the present disclosure, the battery pack mounting member may be provided with a third reinforcement rib, and the third reinforcement rib extends from the front longitudinal beam 1100 of the vehicle to the A-pillar. This design not only can improve strength of the battery pack mounting member through the third reinforcement rib, but also can make the battery pack mounting member better transfer a force in the front-rear direction of the vehicle.

As shown in FIG. 38, in this embodiment of the present disclosure, a mounting groove may be formed on the battery pack mounting member 5000, and a groove bottom of the mounting groove may be formed with a mounting hole for a steering column to pass. During assembly, another component is pasted with a sealing foam, and the like, and extends into the mounting groove, and the sealing foam is pressed against a groove bottom surface for sealing.

The foregoing describes in detail example implementations of the present disclosure with reference to the accompanying drawings. However, the present disclosure is not limited to specific details in the foregoing implementations. Multiple simple variations can be made to the technical solutions of the present disclosure within the technical concept scope of the present disclosure, and all these simple variations fall within the protection scope of the present disclosure.

Moreover, it will be noted that various specific technical features described in the particular implementations described above can be combined in any suitable manner without contradiction, and to avoid unnecessary repetition, various possible combinations are not separately explained in the present disclosure.

In addition, the various different implementations of the present disclosure may also be combined in any manner, and the combination will also be considered as content disclosed in the present disclosure provided that the combination does not deviate from the idea of the present disclosure.

## Claims

1. A vehicle (1), comprising:
a sill beam (2100); and
a battery pack mounting member (5000), wherein
the battery pack mounting member (5000) is connected to at least one end portion of the sill beam (2100) in a front-rear direction, the battery pack mounting member (5000) is formed with a battery pack mounting surface (4502), and the battery pack mounting member (5000) is an integral member.

2. The vehicle (1) according to claim 1, wherein the battery pack mounting member (5000) is of an integrally formed structure.

3. The vehicle (1) according to claim 1 or 2, wherein the battery pack mounting member (5000) is connected to a front-side end portion of the sill beam (2100) in the front-rear direction.

4. The vehicle (1) according to claim 3, further comprising a front longitudinal beam (1100), wherein in the front-rear direction of the vehicle (1), the battery pack mounting member (5000) is disposed in rear of the front longitudinal beam (1100), and the front longitudinal beam (1100) is connected to the battery pack mounting member (5000); and
the front longitudinal beam (1100), the battery pack mounting member (5000), and the sill beam (2100) form a force transfer path from the front of the vehicle to the rear of the vehicle.

5. The vehicle (1) according to claim 4, wherein at least one of the front longitudinal beam (1100) and the sill beam (2100) is detachably connected to the battery pack mounting member (5000), or the front longitudinal beam (1100) is detachably connected to the battery pack mounting member (5000).

6. The vehicle (1) according to any one of claims 1 to 5, further comprising an A-pillar (2300), wherein the battery pack mounting member (5000) is connected to the A-pillar (2300); and
a projection of the battery pack mounting member (5000) in a width direction of the vehicle at least partially overlaps a projection of the A-pillar (2300) in the width direction of the vehicle.

7. The vehicle (1) according to any one of claims 1 to 6, wherein a first end of the battery pack mounting member (5000) is connected to the front longitudinal beam (1100) of the vehicle (1), and a second end of the battery pack mounting member (5000) is connected to the sill beam (2100).

8. The vehicle (1) according to claim 7, wherein a cross-sectional area of the battery pack mounting member (5000) on one side close to the sill beam (2100) is greater than a cross-sectional area of the battery pack mounting member (5000) on one side close to the front longitudinal beam (1100).

9. The vehicle (1) according to any one of claims 1 to 8, further comprising a battery pack (4000), wherein a projection of a corner (4008) of the battery pack (4000) in a height direction of the vehicle is located in a projection of the battery pack mounting member (5000) in the height direction of the vehicle.

10. The vehicle (1) according to claim 9, wherein the battery pack (4000) is provided with a battery pack mounting member mounting point (4004), the battery pack (4000) is connected to the battery pack mounting member (5000) through the battery pack mounting member mounting point (4004), and a minimum distance between the battery pack mounting member mounting point (4004) and the corner (4008) is less than a preset distance.

11. The vehicle (1) according to claim 9, wherein the preset distance is 1/4 of a distance from the corner (4008) to an adjacent corner (4008) in the width direction of the vehicle, or the preset distance is 1/4 of a maximum distance from a left-side edge to a right-side edge of the battery pack (4000).

12. The vehicle (1) according to any one of claims 1 to 11, wherein two battery pack mounting members (5000) are spaced in the width direction of the vehicle, the vehicle (1) further comprises a front wall lower cross beam (1210), two ends of the front wall lower cross beam (1210) are respectively connected to the two battery pack mounting members (5000), and the front wall lower cross beam (1210) is connected to a rear side of the battery pack mounting member (5000);
the front wall lower cross beam (1210) is connected to the battery pack (4000) of the vehicle (1); and
the front wall lower cross beam (1210) is directly connected to the battery pack (4000).

13. The vehicle (1) according to claim 12, wherein a cross beam mounting surface (1212) is disposed on a bottom surface of the front wall lower cross beam (1210), a battery pack mounting member mounting surface (5004) is disposed on the battery pack mounting member (5000), and the cross beam mounting surface (1212) and the battery pack mounting member mounting surface (5004) form a battery pack mounting surface (4502); and
the cross beam mounting surface (1212) and the battery pack mounting member mounting surface (5004) are located on a same horizontal plane.

14. The vehicle (1) according to claim 12 or 13, wherein a projection of at least one of the front wall lower cross beam (1210) and the battery pack mounting member (5000) in the height direction of the vehicle at least partially overlaps a projection of a battery cell of the battery pack (4000) in the height direction of the vehicle.

15. The vehicle (1) according to any one of claims 1 to 14, wherein at least a partial bottom surface of the sill beam (2100) forms the battery pack mounting surface (4502); and
a projection of the sill beam (2100) in the height direction of the vehicle at least partially overlaps the projection of the battery cell of the battery pack (4000) of the vehicle (1) in the height direction of the vehicle.

16. The vehicle (1) according to claim 13, wherein the cross beam mounting surface (1212), the battery pack mounting member mounting surface (5004), and at least a partial bottom surface of the sill beam (2100) form the battery pack mounting surface (4502); and
the cross beam mounting surface (1212), the battery pack mounting member mounting surface (5004), and at least the partial bottom surface of the sill beam (2100) are located on a same horizontal plane.

17. The vehicle (1) according to any one of claims 12 to 14, wherein the battery pack mounting member (5000) is hermetically connected to the front wall lower cross beam (1210);
the battery pack mounting member (5000) is provided with a front wall lower cross beam connection portion (5000a2/5000b2/5000c2/5000d2), the front wall lower cross beam (1210) is provided with a second connection member connection portion (1210a/1210b/1210c/1210d), and the front wall lower cross beam connection portion (5000a2/5000b2/5000c2/5000d2) is connected to the second connection member connection portion (1210a/1210b/1210c/1210d); and
the second connection member connection portion (1210a/1210b/1210c/1210d) is located on an upper side of the front wall lower cross beam connection portion (5000a2/5000b2/5000c2/5000d2) in the height direction of the vehicle.

18. The vehicle (1) according to any one of claims 12 to 14, further comprising a first cross beam (1220) connected between the two battery pack mounting members (5000), wherein
the first cross beam (1220) is hermetically connected to the battery pack mounting member (5000); and
the first cross beam (1220) is connected to the rear side of the battery pack mounting member (5000).

19. The vehicle (1) according to claim 18, wherein the first cross beam (1220) is located on an upper side of the front wall lower cross beam (1210) in the height direction of the vehicle; or
the first cross beam (1220) is located on a front side of the front wall lower cross beam (1210) in the front-rear direction of the vehicle.

20. The vehicle (1) according to claim 18 or 19, wherein the battery pack mounting member (5000) is provided with a first cross beam connection portion (5000a1/5000b1/5000c1/5000d1), the first cross beam (1220) is provided with a first connection member connection portion (1220a/1220b/1220c/1220d), and the first cross beam connection portion (5000a1/5000b1/5000c1/5000d1) is connected to the first connection member connection portion (1220a/1220b/1220c/1220d); and
the first connection member connection portion (1220a/1220b/1220c/1220d) is located on an upper side of the first cross beam connection portion (5000a1/5000b1/5000c1/5000d1) in the height direction of the vehicle.

21. The vehicle (1) according to any one of claims 18 to 20, further comprising a center tunnel (2700), wherein the center tunnel (2700) is connected to the first cross beam (1220); and
a projection of the first cross beam (1220) in the front-rear direction of the vehicle at least partially overlaps a projection of the center tunnel (2700) in the front-rear direction of the vehicle.

22. The vehicle (1) according to claim 21, wherein a cross section of the first cross beam (1220) is constructed to be in a "" shape, and a third intermediate rib (1231) of the first cross beam (1220) is flush with an upper surface of the center tunnel (2700).

23. The vehicle (1) according to claim 21 or 22, wherein the center tunnel (2700) is connected to the front wall lower cross beam (1210); and
a projection of the front wall lower cross beam (1210) in the front-rear direction of the vehicle at least partially overlaps the projection of the center tunnel (2700) in the front-rear direction of the vehicle.

24. The vehicle (1) according to any one of claims 1 to 23, wherein a front subframe mounting point (5003) is formed on the battery pack mounting member (5000), and the front subframe mounting point (5003) is suitable for being connected to a front subframe assembly (1300) of the vehicle (1).

25. The vehicle (1) according to any one of claims 1 to 24, wherein the battery pack mounting member (5000) comprises a first mounting portion (5005), the first mounting portion (5005) is directly connected to the A-pillar (2300) of the vehicle (1), and at least a part of the first mounting portion (5005) is located on a front side of the A-pillar (2300);
the battery pack mounting member (5000) further comprises a second mounting portion (5006), and the second mounting portion (5006) is connected to a side of the A-pillar (2300) that faces a passenger compartment of the vehicle (1); and
the second mounting portion (5006) is connected to the sill beam (2100).

26. The vehicle (1) according to claim 25, wherein the sill beam (2100) comprises a body beam (2100a) and a sill reinforcement beam (2130) located inside the body beam (2100a), the second mounting portion (5006) is connected to the sill reinforcement beam (2130), and the second mounting portion (5006) is located on a side of the sill reinforcement beam (2130) that faces the passenger compartment;
the sill beam (2100) further comprises:
a sill inner plate (2110) and a sill outer plate (2120), wherein the sill inner plate (2110) and the sill outer plate (2120) enclose and form the body beam (2100a); and
a first insert block (2201);
the second mounting portion (5006) is successively connected to the sill inner plate (2110), the first insert block (2201), and the sill reinforcement beam (2130); and
a projection of the sill reinforcement beam (2130) in the width direction of the vehicle at least partially overlaps a projection of the second mounting portion (5006) in the width direction of the vehicle.

27. The vehicle (1) according to claim 13, wherein the battery pack (4000) of the vehicle (1) is hermetically connected to the cross beam mounting surface (1212), the battery pack mounting member mounting surface (5004), and at least a partial bottom surface of the sill beam (2100); and
the vehicle (1) further comprises a sealing member (4100), and the battery pack is hermetically connected to the cross beam mounting surface (1212), the battery pack mounting member mounting surface (5004), and at least the partial bottom surface of the sill beam (2100) through the sealing member (4100).
